(19) Europäisches Patentamt
European Patent Office
Office européen des brevets

(11) EP 2 695 680 B1

(12) **EUROPEAN PATENT SPECIFICATION**

(45) Date of publication and mention of the grant of the patent:
**30.03.2016 Bulletin 2016/13**

(21) Application number: **12768215.1**

(22) Date of filing: **05.04.2012**

(51) Int Cl.:
***B05D 1/36*** *(2006.01)* ***B05D 7/24*** *(2006.01)*
***C08G 18/80*** *(2006.01)* ***C09D 5/00*** *(2006.01)*
***C09D 175/04*** *(2006.01)* ***B05D 7/00*** *(2006.01)*

(86) International application number:
**PCT/JP2012/059400**

(87) International publication number:
**WO 2012/137884 (11.10.2012 Gazette 2012/41)**

(54) **METHOD FOR FORMING MULTIPLE LAYERED COATING FILM AND COATED OBJECT**

VERFAHREN ZUR BILDUNG MEHRERER GESCHICHTETER LACKFILME UND BESCHICHTETER GEGENSTAND

MÉTHODE DE FORMATION D'UN FILM DE REVÊTEMENT À PLUSIEURS COUCHES ET OBJET RECOUVERT D'UN REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2011 JP 2011086172**

(43) Date of publication of application:
**12.02.2014 Bulletin 2014/07**

(73) Proprietor: **Kansai Paint Co., Ltd**
**Amagasaki-shi, Hyogo 661-8555 (JP)**

(72) Inventors:
- **KITAGAWA, Hiroshi**
  **Hiratsuka-shi, Kanagawa 254-8562 (JP)**
- **KITAZONO, Kazuaki**
  **Hiratsuka-shi, Kanagawa 254-8562 (JP)**
- **KOBATA, Masami**
  **Hiratsuka-shi, Kanagawa 254-8562 (JP)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
**EP-A1- 1 236 751** **WO-A1-2010/018872**
**WO-A1-2010/018872** **JP-A- 2002 322 238**
**JP-A- 2010 150 459**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 695 680 B1

**Description**

Technical Field

The invention relates to a multilayer coating film-forming method and a coated article.

Background Art

As methods for forming coating films on automobile bodies there have been widely employed a three-coat, two-bake system in which, after an article to be coated is coated by electrodeposition and cured by heating, the following steps are carried out in order: (i) applying an intercoat material and curing the intercoating film by heating, (ii) applying a base coat material and preheating the base coat, and (iii) applying a clear coating material and heating it to cure the clear coating film, and a two-coat, two-bake system in which the following steps are carried out in order: (i) applying an intercoat material and heating it to cure the intercoating film and (ii) applying a top coat and heating it to cure the top coating film.

Generally speaking, the three-coat, two-bake system is employed when a "metallic color" coating film is to be formed using a base coat material containing a brightness pigment, while the two-coat, two-bake system is employed when a "solid color", such as white or black coating film is to be formed using a top coat containing a color pigment.

In recent years, however, for the purpose of energy efficiency, research has been conducted on 3-coat, 1-bake systems in which the following steps are carried out in order: applying an intercoat material and then preheating the intercoating film (a preheating step), applying a base coat material and preheating the base coat, and a subsequent step of applying a clear coating material and then heating to cure the layered coating films, and on 2-coat, 1-bake systems in which the following steps are carried out in order: applying an intercoat material and preheating the intercoating film, and applying a top coat and then heating to cure the layered coating film, and both of these systems eliminate the step of curing the intercoating film by heating after application of the intercoat material. From the viewpoint of minimizing environmental pollution by volatilization of organic solvents, particular demand exists for 3-coat, 1-bake systems or 2-coat, 1-bake systems employing aqueous coating materials as the intercoat material, base coat material and top coat material.

However, in 3-coat, 1-bake systems employing such aqueous intercoat materials and aqueous base coat materials and 2-coat, 1-bake systems employing aqueous intercoat materials and aqueous top coat materials, problems are encountered as the water resistance of the formed coating films is reduced due to the use of water-soluble or water-dispersible resins in the coating materials, and the smoothness and sharpness of the formed coating films are often reduced because of mixed layers between the aqueous intercoat material and aqueous base coat material layers or between the aqueous intercoat material and aqueous top coat material layers.

In addition, with heat curable coating materials in general, drastic increase in the temperature of the coating film during the heating process is known to produce a phenomenon known as "pinhole popping" in the cured coating film that is formed. Such pinhole popping consists of foam-like coating defects on the coating film surface, because the solvent remaining inside the coating film evaporates rapidly during the heating process forming air bubbles in the coating film while the resin components in the coating film simultaneously solidify, such that the sections in which air bubbles form appear as foam-like defects. This pinhole popping is also known simply as "pinholes".

Since pinhole popping occurs because the solvent in the coating film rapidly evaporates during the heating process, pinhole popping is ameliorated by using an organic solvent with a relatively high boiling point as the solvent for the coating material to lower the evaporation rate. However, because aqueous coating materials contain water as the main component of the solvent and thus cannot easily include organic solvents with relatively high boiling points, pinhole popping tends to occur more readily than with solvent-type coating materials.

Particularly with a 3-coat, 1-bake system using the aforementioned aqueous intercoat material and aqueous base coat material or a 2-coat, 1-bake system using an aqueous intercoat material and aqueous top coat material, the heating step after application of the intercoat material is eliminated and one-time curing of a relatively thickly applied coating film is employed, and therefore the issue of pinhole popping becomes more prevalent.

In PTL 1, for example, there is described a method of forming a coating film in which an intercoating film, base coating film and clear coating film are formed in order on a base material in a wet-on-wet manner, wherein the intercoat material forming the intercoating film and the base coating material forming the base coating film comprise an amide group-containing acrylic resin and a curing agent, and the curing agent in the intercoat material comprises an aliphatic isocyanate-based active methylene blocked isocyanate, the aliphatic isocyanate-based active methylene blocked isocyanate having an average number of functional groups of greater than 3.

In the method of forming a coating film of PTL 1, since a viscosity-controlling effect is exhibited by the amide group-containing acrylic resin, and inversion at the interfaces between each of the coating film layers is limited when coating is by a 3-coat, 1-bake method, and furthermore since an aliphatic isocyanate-based active methylene blocked

isocyanate based compound with an excellent low-temperature curing property is used as the curing agent, curing of the intercoating film begins before that of the base coating film and clear coating film, while a sufficient flow property is also ensured and a product results that has an excellent ground layer masking property against roughening of the electrodeposition coating, and therefore a multilayer coating film is obtained that has an excellent finished appearance and excellent coating properties, and especially chipping resistance. Document WO 2010/018872 is directed to a "method of forming a multilayer coating film comprising the steps of: (1) applying an aqueous intermediate coating composition (X) to a substrate to form an intermediate coating layer thereon; (2) applying an aqueous base coating composition (Y) to the uncured intermediate coating layer formed in step (1) to form a base coating layer thereon; (3) applying a clear coating composition (Z) to the uncured base coating layer formed in step (2) to form a clear coating layer thereon; and (4) simultaneously heat-curing the uncured intermediate coating, uncured base coating, and uncured clear coating layers formed in steps (1) to (3), the aqueous intermediate coating composition (X) comprising: a base resin (A) ; a curing agent (B) ; and a diester compound (C), 0 the curing agent (B) being a polyisocyanate compound (B1) and/or a polycarbodiimide compound (B2) ; and the diester compound (C)" (see claim 1 of WO 2010/018872). According to p.51, 1.16 - p.52, 1.4 of WO 2010/018872, the polyisocyanate may be blocked with dimethyl malonate, diethyl malonate, ethyl acetoacetate or methyl acetoacetate.

Citation List

Patent Literature

PTL 1 Japanese Unexamined Patent Publication No. 2002-153806

Summary of Invention

Technical Problem

With the method of forming a coating film described in PTL 1, however, problems have been encountered when using aqueous coating materials as intercoat materials and base coat materials, as the smoothness and sharpness of the coating film is reduced due to layer mixing between the aqueous intercoat material and aqueous base coat material layers, the water resistance of the formed multilayer coating film is reduced, and pinhole popping occurs in the formed multilayer coating film.

It is therefore an object of the present invention to provide a multilayer coating film-forming method that allows formation of a multilayer coating film with excellent smoothness, sharpness and water resistance, and which avoids or minimizes pinhole popping.

Solution to Problem

The present inventors have conducted diligent research directed toward solving these problems, and have discovered a multilayer coating film-forming method comprising the following steps (1) to (4): step (1): coating an article to be coated with an aqueous first pigmented coating composition (X) to form an uncured first pigmented coating film on the article to be coated, step (2): coating the article to be coated having the uncured first pigmented coating film, with an aqueous second pigmented coating composition (Y) to form an uncured second pigmented coating film thereover, step (3): coating the article to be coated having the uncured first pigmented coating film and uncured second pigmented coating film, with a clear coating composition (Z) to form an uncured clear coating film thereover, and step (4): heating the uncured first pigmented coating film, the uncured second pigmented coating film and the uncured clear coating film to cure them, wherein the aqueous first pigmented coating composition (X) contains a blocked polyisocyanate compound with a specific blocked isocyanate group.

The first multilayer coating film-forming method of the invention is a multilayer coating film-forming method comprising the following steps (1) to (4):

step (1): coating an article to be coated with an aqueous first pigmented coating composition (X) to form an uncured first pigmented coating film on the article to be coated,
step (2): coating the article to be coated having the uncured first pigmented coating film, with an aqueous second pigmented coating composition (Y) to form an uncured second pigmented coating film thereover,
step (3): coating the article to be coated having the uncured first pigmented coating film and uncured second pigmented coating film, with a clear coating composition (Z) to form an uncured clear coating film thereover, and
step (4): heating the uncured first pigmented coating film, the uncured second pigmented coating film and the uncured clear coating film to cure them,

wherein the aqueous first pigmented coating composition (X) contains (A) a hydroxyl-containing resin and (B) a blocked polyisocyanate compound with at least one blocked isocyanate group selected from the group consisting of a blocked isocyanate group represented by the following formula (I)::

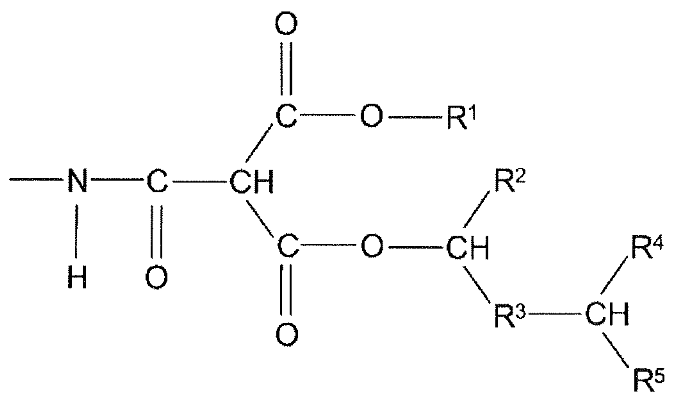

(I)

wherein $R^1$, $R^2$, $R^4$ and $R^5$ each independently represent a C1-12 hydrocarbon group and $R^3$ represents a C1-12 straight or branched alkylene group,
a blocked isocyanate group represented by the following formula (II):

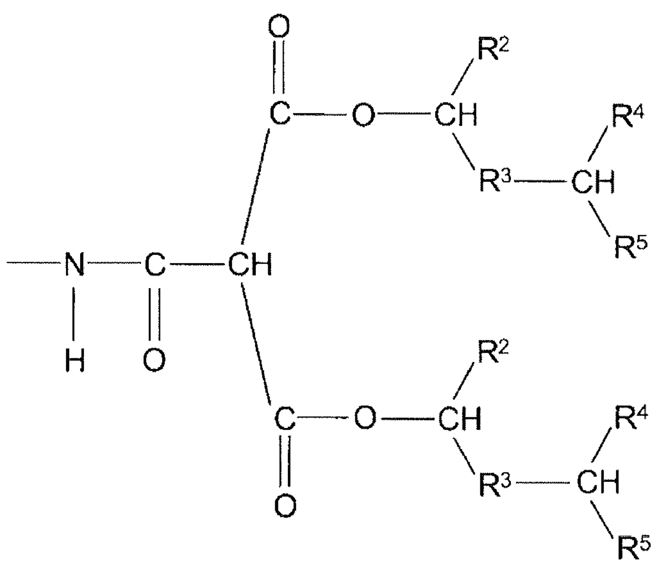

(II)

wherein $R^2$, $R^3$, $R^4$ and $R^5$ are as defined above, and
a blocked isocyanate group represented by the following formula (III):

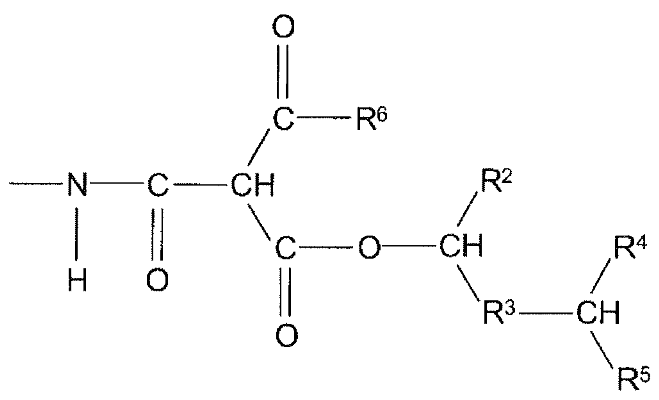

(III)

wherein $R^2$, $R^3$, $R^4$ and $R^5$ are as defined above, and $R^6$ represents a C1-12 hydrocarbon group.

The second multilayer coating film-forming method of the invention is a multilayer coating film-forming method comprising the following steps (1), (2) and (5):

step (1): coating an article to be coated with an aqueous first pigmented coating composition (X) to form an uncured first pigmented coating film on the article to be coated,
step (2): coating the article to be coated having the uncured first pigmented coating film, with an aqueous second pigmented coating composition (Y) to form an uncured second pigmented coating film thereover, and
step (5) heating the uncured first pigmented coating film and the uncured second pigmented coating film to cure them, wherein the aqueous first pigmented coating composition (X) contains (A) a hydroxyl-containing resin and (B) a blocked polyisocyanate compound with at least one blocked isocyanate group selected from the group consisting of blocked isocyanate groups represented by formula (I), blocked isocyanate groups represented by formula (II) and blocked isocyanate groups represented by formula (III).

In other words, the invention provides a multilayer coating film-forming method and coated article according to the following J1 to J10.

[J1]

A multilayer coating film-forming method comprising the following steps (1) to (4):

step (1): coating an article to be coated with an aqueous first pigmented coating composition (X) to form an uncured first pigmented coating film on the article to be coated,
step (2): coating the article to be coated having the uncured first pigmented coating film, with an aqueous second pigmented coating composition (Y) to form an uncured second pigmented coating film thereover,
step (3): coating the article to be coated having the uncured first pigmented coating film and uncured second pigmented coating film, with a clear coating composition (Z) to form an uncured clear coating film thereover, and
step (4): heating the uncured first pigmented coating film, the uncured second pigmented coating film and the uncured clear coating film to cure them, wherein the aqueous first pigmented coating composition (X) comprises (A) a hydroxyl-containing resin and (B) a blocked polyisocyanate compound with at least one blocked isocyanate group selected from the group consisting of a blocked isocyanate group represented by the following formula (I):

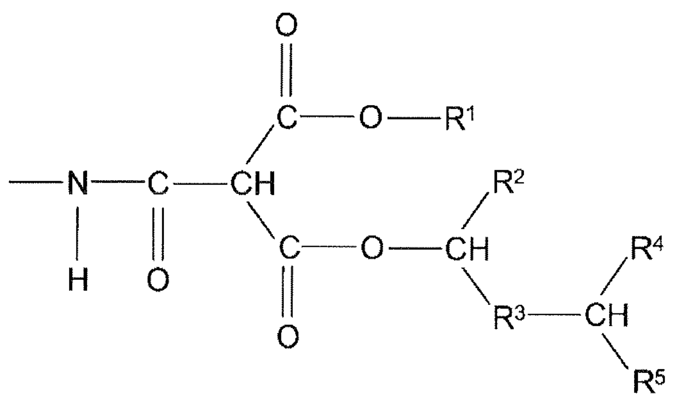
(I)

wherein $R^1$, $R^2$, $R^9$ and $R^5$ each independently represent a C1-12 hydrocarbon group and $R^3$ represents a C1-12 straight or branched alkylene group,
a blocked isocyanate group represented by the following formula (II):

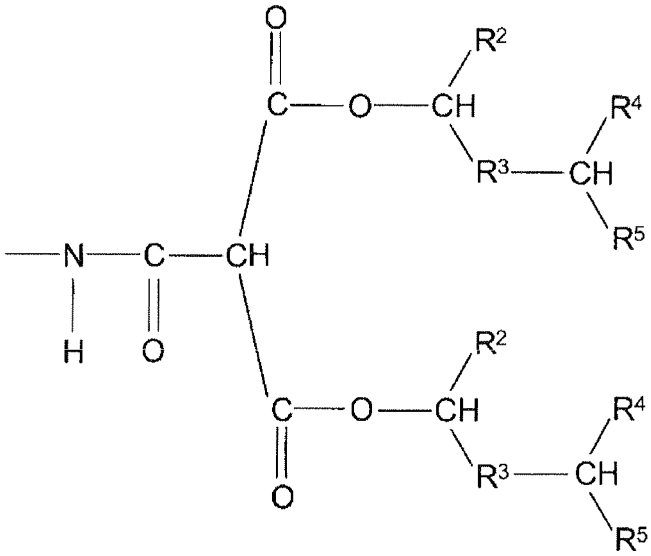

(II)

wherein $R^2$, $R^3$, $R^4$ and $R^5$ are as defined above, and a blocked isocyanate group represented by the following formula (III):

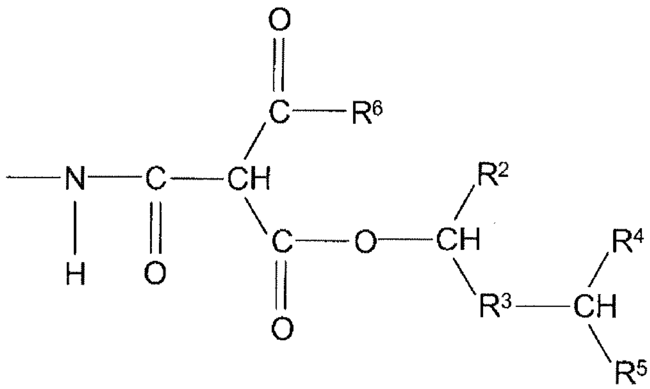

(III)

wherein $R^2$, $R^3$, $R^4$ and $R^5$ are as defined above, and $R^6$ represents a C1-12 hydrocarbon group.

[J2]

The first multilayer coating film-forming method of the invention is a multilayer coating film-forming method comprising the following steps (1), (2) and (5):

step (1): coating an article to be coated with an aqueous first pigmented coating composition (X) to form an uncured first pigmented coating film on the article to be coated,
step (2): coating the article to be coated having the uncured first pigmented coating film, with an aqueous second pigmented coating composition (Y) to form an uncured second pigmented coating film thereover, and
step (5): heating the uncured first pigmented coating film and the uncured second pigmented coating film to cure them,

wherein the aqueous first pigmented coating composition (X) comprises (A) a hydroxyl-containing resin and (B) a blocked polyisocyanate compound with at least one blocked isocyanate group selected from the group consisting of a blocked isocyanate group represented by the following formula (I):

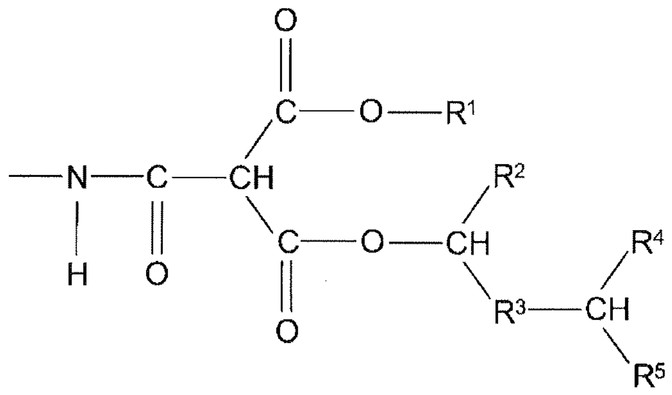

(I)

wherein $R^1$, $R^2$, $R^4$ and $R^5$ each independently represent a C1-12 hydrocarbon group and $R^3$ represents a C1-12 straight or branched alkylene group,
a blocked isocyanate group represented by the following formula (II):

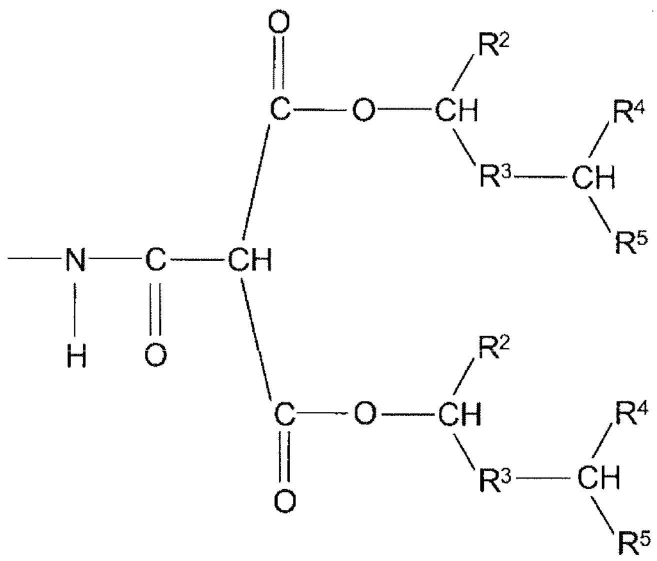

(II)

wherein $R^2$, $R^3$, $R^4$ and $R^5$ are as defined above, and
a blocked isocyanate group represented by the following formula (III):

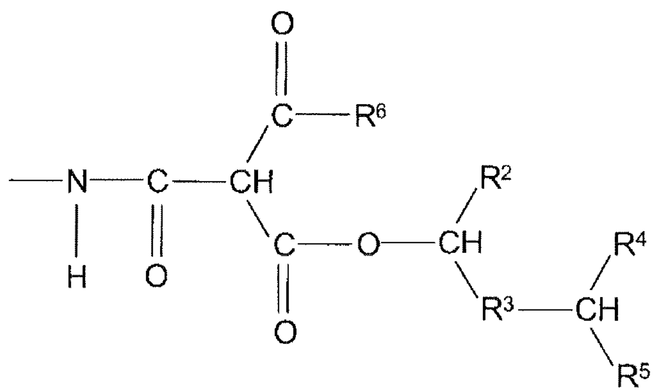

(III)

wherein $R^2$, $R^3$, $R^4$ and $R^5$ are as defined above, and $R^6$ represents a C1-12 hydrocarbon group.

[J3]

The method according to J1 or J2, wherein the hydroxyl-containing resin (A) comprises a water-dispersible hydroxyl-containing acrylic resin ($A_{11}$) with a hydroxyl value of 1-200 mgKOH/g and an acid value of 50 mgKOH/g or less.

[J4]

The method according to any one of J1 to J3, wherein $R^1$ in formula (I) is an isopropyl group.

[J5]

The method according to any one of J1 to J3, wherein $R^6$ in formula (III) is an isopropyl group.

[J6]

The method according to any one of J1 to J4, wherein the blocked polyisocyanate compound (B) is produced by reacting a blocked polyisocyanate compound precursor ($b_{31}$) having a blocked isocyanate group represented by the following formula (IV):

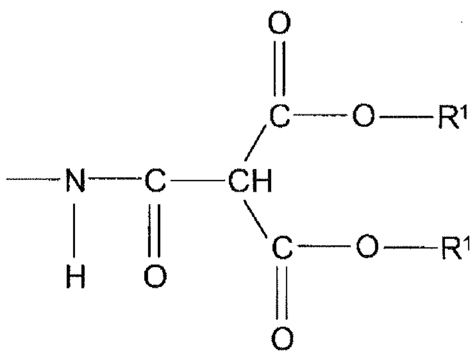

(IV)

wherein $R^1$ groups are as defined above, and may be the same or different,
with a secondary alcohol ($b_4$) represented by the following formula (VI):

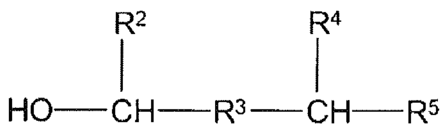

(VI)

wherein $R^2$, $R^3$, $R^4$ and $R^5$ are as defined above.

[J7]

The method according to any one of J1, J2, J3 and J5, wherein the blocked polyisocyanate compound (B) is produced by reacting a blocked polyisocyanate compound precursor ($b_{32}$) having a blocked isocyanate group represented by the following formula (V):

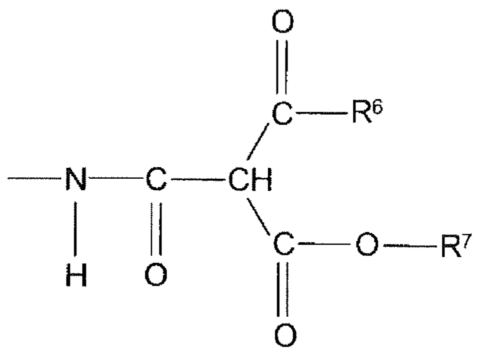

(V)

wherein $R^6$ is as defined above and $R^7$ represents a C1-12 hydrocarbon group, with a secondary alcohol ($b_4$) represented by the following formula (VI):

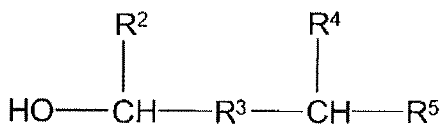

(VI)

wherein $R^2$, $R^3$, $R^4$ and $R^5$ are as defined above.

[J8]

The method according to any one of J1 to J7, wherein the blocked polyisocyanate compound (B) is a blocked polyisocyanate compound (B') having a hydrophilic group.

[J9]

The method according to any one of J1 to J8, wherein the aqueous first pigmented coating composition (X) comprises the hydroxyl-containing resin (A) and the blocked polyisocyanate compound (B) at 10 to 95 parts by mass and 5 to 90 parts by mass, respectively, based on 100 parts by mass as the total solid content of the hydroxyl-containing resin (A) and the blocked polyisocyanate compound (B).

[J10]

A coated article having a multilayer coating film, formed by the method according to any one of J1 to J9.

Advantageous Effects of Invention

The multilayer coating film-forming method of the invention can form a multilayer coating film with excellent smoothness, sharpness and water resistance, and which avoids or minimizes pinhole popping.

Description of Embodiments

The multilayer coating film-forming method of the invention will now be explained in greater detail.

[Step (1)]

In step (1), an article to be coated is coated with (A) a hydroxyl-containing resin and (B) an aqueous first pigmented coating composition (X) containing a blocked polyisocyanate compound with at least one blocked isocyanate group selected from the group consisting of a blocked isocyanate group represented by the following formula (I):

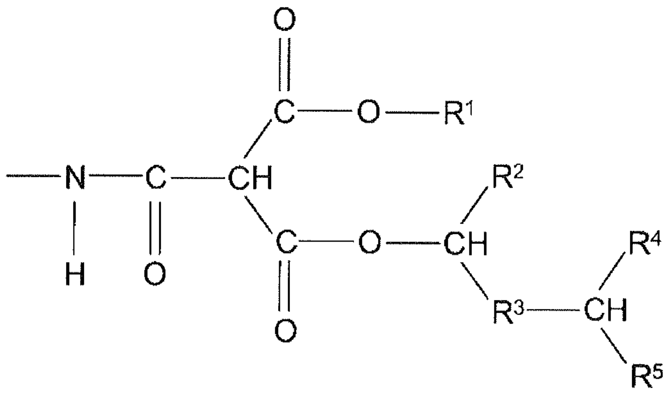

(I)

wherein $R^1$, $R^2$, $R^4$ and $R^5$ each independently represent an approximately C1-C12 hydrocarbon group and $R^3$ represents an approximately C1-C12 straight or branched alkylene group,
a blocked isocyanate group represented by the following formula (II):

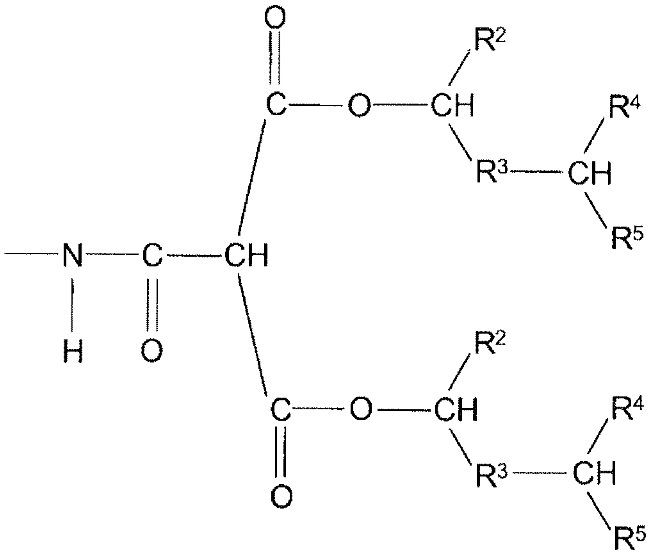

(II)

wherein $R^2$, $R^3$, $R^4$ and $R^5$ are as defined above, and
a blocked isocyanate group represented by the following formula (III):

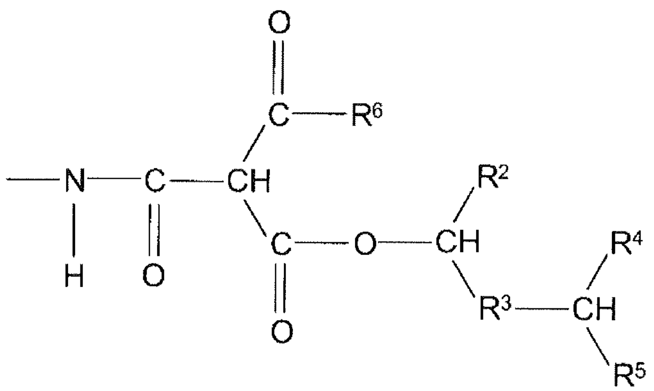

(III)

wherein $R^2$, $R^3$, $R^4$ and $R^5$ are as defined above, and $R^6$ represents an approximately C1-C12 hydrocarbon group, to form an uncured first pigmented coating film on the article to be coated.

[Article to be coated]

There are no particular restrictions on the article to be coated, to which the aqueous first pigmented coating composition (X) may be applied, and examples include external platings of automobile bodies of passenger vehicles, trucks, motorcycles and buses; automobile parts such as bumpers; and external platings of consumer electric products such as cellular phones or audio devices. Preferred among these are external platings of automobile bodies, and automobile parts.

The material of the article to be coated is not particularly restricted, and examples include metal materials such as iron, aluminum, brass, copper, tin, stainless steel, galvanized steel and alloyed zinc (such as Zn-Al, Zn-Ni and Zn-Fe)-plated steel and the like; resins such as polyethylene resins, polypropylene resins, acrylonitrile-butadiene-styrene (ABS) resins, polyamide resins, acrylic resins, vinylidene chloride resins, polycarbonate resins, polyurethane resins and epoxy resins, plastic materials such as various FRP materials; inorganic materials such as glass, cement and concrete; wood materials; fiber materials such as paper and fabrics, and the like, among which metal materials and plastic materials are preferred.

The article to be coated may be an article that is a metal material or has a metal surface such as a car body formed thereof, and that has been surface-treated by phosphate treatment, chromate treatment or complex oxide treatment, or that has a coating film.

Articles to be coated having coating films include base materials that have been optionally surface treated, and having undercoat coating films formed thereover. Car bodies having undercoat coating films formed by electrodeposition coating are particularly preferred, and car bodies having undercoat coating films formed by cationic electrodeposition coating are more preferred.

The article to be coated may also be one that has been optionally surface treated or primer-coated on the surface of the aforementioned plastic material or an automobile part formed from the plastic material. It may also be a combination of a plastic material and a metal material.

[Hydroxyl-containing resin (A)]

Examples for the hydroxyl-containing resin (A) include a hydroxyl-containing acrylic resin ($A_1$), a hydroxyl-containing polyester resin ($A_2$), a hydroxyl-containing polyurethane resin ($A_3$), a hydroxyl-containing epoxy resin and a hydroxyl-containing alkyd resin, as well as any desired combinations of the foregoing.

The hydroxyl-containing resin (A) has a hydroxyl value in the range of preferably about 1 to about 200 mgKOH/g, more preferably about 2 to about 180 mgKOH/g and even more preferably about 5 to about 170 mgKOH/g.

In an embodiment in which the hydroxyl-containing resin (A) has acidic groups such as carboxyl groups, the hydroxyl-containing resin (A) has an acid value in the range of preferably about 0.1 to about 100 mgKOH/g, more preferably about 0.5 to about 60 mgKOH/g and even more preferably about 1 to about 40 mgKOH/g.

From the viewpoint of smoothness, sharpness and water resistance of the multilayer coating film that is to be formed, the hydroxyl-containing resin (A) is preferably either or both from among the group consisting of hydroxyl-containing acrylic resins ($A_1$) and/or hydroxyl-containing polyester resins ($A_2$), and more preferably it includes both a hydroxyl-containing acrylic resin ($A_1$) and a hydroxyl-containing polyester resin ($A_2$).

In an embodiment in which the aqueous first pigmented coating composition (X) includes both a hydroxyl-containing acrylic resin ($A_1$) and a hydroxyl-containing polyester resin ($A_2$) as the hydroxyl-containing resin (A), the hydroxyl-containing acrylic resin ($A_1$) and the hydroxyl-containing polyester resin ($A_2$) are present in ranges of preferably about 10 to about 90 mass% and about 10 to about 90 mass%, and more preferably in ranges of about 20 to about 80 mass% and about 20 to about 80 mass%, based on the total solid mass.

[Hydroxyl-containing acrylic resin ($A_1$)]

The hydroxyl-containing acrylic resin ($A_1$) can be produced, for example, by copolymerizing a hydroxyl-containing polymerizable unsaturated monomer ($a_1$) and another polymerizable unsaturated monomer ($a_2$) that is copolymerizable with the hydroxyl-containing polymerizable unsaturated monomer ($a_1$), by a known method, for example, a solution polymerization method in an organic solvent, an emulsion polymerization method in water or a miniemulsion polymerization method in water.

The hydroxyl-containing polymerizable unsaturated monomer ($a_1$) is a compound having one or more hydroxyl and polymerizable unsaturated bonds in the molecule. Examples for the hydroxyl-containing polymerizable unsaturated monomer ($a_1$) include monoesterified products of (meth)acrylic acid and approximately C2-C8 dihydric alcohols, such as 2-hydroxyethyl (meth)acrylate, 2-hydroxypropyl (meth)acrylate, 3-hydroxypropyl (meth)acrylate and 4-hydroxybutyl (meth)acrylate; ε-caprolactone-modified forms of monoesterified products of the (meth)acrylic acid and approximately C2-C8 dihydric alcohols; N-hydroxymethyl (meth)acrylamide; allyl alcohols, and (meth)acrylates having polyoxyethylene

chains with hydroxyl group molecular ends, as well as any desired combinations of the foregoing.

Examples for the other polymerizable unsaturated monomer ($a_2$) that is copolymerizable with the hydroxyl-containing polymerizable unsaturated monomer ($a_1$) include the following monomers (i) to (xix), as well as any desired combinations of the foregoing.

(i) Alkyl or cycloalkyl (meth)acrylates:

For example, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, tert-butylcyclohexyl (meth)acrylate, cyclododecyl (meth)acrylate, tricyclodecanyl (meth)acrylate and the like.

(ii) Polymerizable unsaturated monomers with isobornyl groups:

Isobornyl (meth)acrylate and the like.

(iii) Polymerizable unsaturated monomers with adamantyl groups:

Adamantyl (meth)acrylate and the like.

(iv) Polymerizable unsaturated monomers with tricyclodecenyl groups:

Tricyclodecenyl (meth)acrylate and the like.

(v) Aromatic ring-containing polymerizable unsaturated monomers:

Benzyl (meth)acrylate, styrene, α-methylstyrene, vinyltoluene and the like.

(vi) Polymerizable unsaturated monomers with alkoxysilyl groups:

Vinyltrimethoxysilane, vinyltriethoxysilane, vinyltris(2-methoxyethoxy)silane, γ-(meth)acryloyloxypropyltrimethoxysilane, γ-(meth)acryloyloxypropyltriethoxysilane and the like.

(vii) Polymerizable unsaturated monomers with fluorinated alkyl groups:

Perfluoroalkyl (meth)acrylates such as perfluorobutylethyl (meth)acrylate and perfluorooctylethyl (meth)acrylate, and fluoroolefins and the like.

(viii) Polymerizable unsaturated monomers with photopolymerizable functional groups such as maleimide.

(ix) Vinyl compounds:

N-vinylpyrrolidone, ethylene, butadiene, chloroprene, vinyl propionate, vinyl acetate and the like.

(x) Carboxyl group-containing polymerizable unsaturated monomers:

(Meth)acrylic acid, maleic acid, crotonic acid, β-carboxyethyl acrylate and the like.

(xi) Nitrogen-containing polymerizable unsaturated monomers:

(Meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylenebis(meth)acrylamide, ethylenebis(meth)acrylamide, glycidyl (meth)acrylate, amine compound addition products, and the like.

(xii) Polymerizable unsaturated monomers with two or more polymerizable unsaturated groups in the molecule:

Allyl (meth)acrylates, 1,6-hexanediol di(meth)acrylate and the like.

(xiii) Epoxy group-containing polymerizable unsaturated monomers:

Glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, allyl glycidyl ether and the like.

(xiv) (Meth)acrylates with polyoxyethylenes chains with alkoxy groups at the molecular ends
(xv) Polymerizable unsaturated monomers with sulfonic acid groups:

2-Acrylamide-2-methylpropanesulfonic acid, 2-sulfoethyl (meth)acrylate, allylsulfonic acid, 4-styrenesulfonic acid and the like; and sodium salts and ammonium salts of these sulfonic acids.

(xvi) Polymerizable unsaturated monomers with phosphate groups:

Acid phosphooxyethyl (meth)acrylate, acid phosphooxypropyl (meth)acrylate, acid phosphooxypoly(oxyethylene)glycol (meth)acrylate, acid phosphooxypoly(oxypropylene)glycol (meth)acrylates and the like.

(xvii) Polymerizable unsaturated monomers with ultraviolet absorbing functional groups:

2-Hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, 2-(2'-hydroxy-5'-methacryloyloxyethylphenyl)-2H-benzotriazole and the like.

(xviii) Ultraviolet-stable polymerizable unsaturated monomers:

4-(Meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-crotonoyl-4-crotonoyloxy-2,2,6,6-tetramethylpiperidine and the like.

(xix) Polymerizable unsaturated monomers with carbonyl groups:

Acrolein, diacetoneacrylamide, diacetonemethacrylamide, acetoacetoxyethyl methacrylate, formylstyrol, approximately C4-C7 vinyl alkyl ketones (for example, vinyl methyl ketone, vinyl ethyl ketone and vinyl butyl ketone), and the like.

As used herein, "polymerizable unsaturated group" means an unsaturated group that can participate in radical polymerization. Examples of such polymerizable unsaturated groups include vinyl and (meth)acryloyl.

Also, as used herein, "(meth)acrylate" refers to acrylate and/or methacrylate. The term "(meth)acrylic acid" refers to acrylic acid and/or methacrylic acid. The term "(meth)acryloyl" refers to acryloyl and/or methacryloyl. The term "(meth)acrylamide" refers to acrylamide and/or methacrylamide.

The proportion of the hydroxyl-containing polymerizable unsaturated monomer ($a_1$) during production of the hydroxyl-containing acrylic resin ($A_1$) is preferably about 0.5 to about 50 mass%, more preferably about 1.0 to about 40 mass% and even more preferably about 1.5 to about 30 mass%, based on the total amount of the monomer components.

From the viewpoint of the water resistance of the multilayer coating film that is to be formed, the hydroxyl-containing acrylic resin ($A_1$) has a hydroxyl value of preferably about 1 to about 200 mgKOH/g, more preferably about 2 to about 180 mgKOH/g and even more preferably about 5 to about 170 mgKOH/g.

For an embodiment in which the hydroxyl-containing acrylic resin ($A_1$) has an acid value, the hydroxyl-containing acrylic resin ($A_1$) has an acid value of preferably about 100 mgKOH/g or less, more preferably about 0.5 to about 60 mgKOH/g and even more preferably about 1 to about 40 mgKOH/g, from the viewpoint of storage stability of the coating material and the sharpness and water resistance of the multilayer coating film that is to be formed.

For an embodiment in which the aqueous first pigmented coating composition (X) contains a hydroxyl-containing acrylic resin ($A_1$) as the hydroxyl-containing resin (A), the aqueous first pigmented coating composition (X) contains the hydroxyl-containing acrylic resin ($A_1$) in the range of preferably about 2 to about 95 mass%, more preferably about 10 to about 75 mass% and even more preferably about 15 to about 60 mass%, based on the total solid content of the hydroxyl-containing resin (A) and the blocked polyisocyanate compound (B).

Also, the hydroxyl-containing acrylic resin ($A_1$) preferably contains a water-dispersible hydroxyl-containing

acrylic resin ($A_{11}$), from the viewpoint of increasing the smoothness, sharpness and water resistance of the multilayer coating film that is to be formed, and reducing pinhole popping.

The water-dispersible hydroxyl-containing acrylic resin ($A_{11}$) can be produced, for example, by copolymerizing a hydroxyl-containing polymerizable unsaturated monomer ($a_1$) and another polymerizable unsaturated monomer ($a_2$) by a known method, for example, an emulsion polymerization method in water or a miniemulsion polymerization method in water.

From the viewpoint of the chipping resistance and water resistance of the multilayer coating film that is to be formed, the water-dispersible hydroxyl-containing acrylic resin ($A_{11}$) has a hydroxyl value of preferably about 1 to about 200 mgKOH/g, more preferably about 3 to about 150 mgKOH/g and even more preferably about 5 to about 100 mgKOH/g.

For an embodiment in which the water-dispersible hydroxyl-containing acrylic resin ($A_{11}$) has an acid value, the water-dispersible hydroxyl-containing acrylic resin ($A_{11}$) has an acid value of preferably about 50 mgKOH/g or less, more preferably about 0.1 to about 30 mgKOH/g and even more preferably about 1 to about 20 mgKOH/g, from the viewpoint of improving the storage stability of the coating material and the smoothness, sharpness and water resistance of the multilayer coating film that is to be formed, and reducing pinhole popping.

For an embodiment in which the aqueous first pigmented coating composition (X) contains a water-dispersible hydroxyl-containing acrylic resin ($A_{11}$) as the hydroxyl-containing resin (A), the aqueous first pigmented coating composition (X) contains the water-dispersible hydroxyl-containing acrylic resin ($A_{11}$) in the range of preferably about 2 to about 95 mass%, more preferably about 10 to about 75 mass% and even more preferably about 15 to about 60 mass%, based on the total solid content of the hydroxyl-containing resin (A) and the blocked polyisocyanate compound (B).

Also, from the viewpoint of smoothness and sharpness of the multilayer coating film that is to be formed, the water-dispersible hydroxyl-containing acrylic resin ($A_{11}$) is preferably a core-shell type.

As such a core-shell type water-dispersible hydroxyl-containing acrylic resin there is preferred a core-shell type water-dispersible hydroxyl-containing acrylic resin ($A_{111}$) comprising a copolymer (I) as the core section (hereunder also referred to as "core section copolymer (I)") whose copolymerizing components are a polymerizable unsaturated monomer ($I_1$) having two or more polymerizable unsaturated groups in the molecule (hereunder also referred to as "monomer ($I_1$)") and a polymerizable unsaturated monomer ($I_2$) having one polymerizable unsaturated group in the molecule (hereunder also referred to as "monomer ($I_2$)"), and a copolymer (II) as the shell section (hereunder also referred to as shell section copolymer (II)") whose copolymerizing components are a hydroxyl-containing polymerizable unsaturated monomer ($II_1$), a carboxyl group-containing polymerizable unsaturated monomer ($II_2$) and another polymerizable unsaturated monomer ($II_3$).

Examples for the polymerizable unsaturated monomer ($I_1$) with two or more polymerizable unsaturated groups in the molecule, which is to form the core section copolymer (I), include allyl (meth)acrylate, ethylene glycol di(meth)acrylate, triethylene glycol di(meth)acrylate, tetraethylene glycol di(meth)acrylate, 1,3-butylene glycol di(meth)acrylate, trimethylolpropane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tetra(meth)acrylate, glycerol di(meth)acrylate, 1,1,1-trishydroxymethylethane di(meth)acrylate, 1,1,1-trishydroxymethylethane tri(meth)acrylate, 1,1,1-trishydroxymethylpropane tri(meth)acrylate, triallyl isocyanurate, diallyl terephthalate, divinylbenzene, methylenebis(meth)acrylamide, ethylenebis(meth)acrylamide, and any desired combinations of the foregoing.

The polymerizable unsaturated monomer ($I_1$) with two or more polymerizable unsaturated groups in the molecule has the function of imparting a crosslinked structure to the core section copolymer (I). The core section copolymer (I) contains the polymerizable unsaturated monomer ($I_1$) with two or more polymerizable unsaturated groups in the molecule in the range of preferably about 0.1 to about 30 mass%, more preferably about 0.5 to about 10 mass% and even more preferably about 1 to about 7 mass%, as a copolymerizing component, based on the total mass of the copolymerizing components composing the core section copolymer (I).

The polymerizable unsaturated monomer ($I_2$) with one polymerizable unsaturated group in the molecule, that is to form the core section copolymer (I), is a polymerizable unsaturated monomer that is copolymerizable with the polymerizable unsaturated monomer ($I_1$) with two or more polymerizable unsaturated groups in the molecule.

Specific examples for the polymerizable unsaturated monomer ($I_2$) with one polymerizable unsaturated group in the molecule, among the polymerizable unsaturated monomers mentioned as examples of hydroxyl-containing polymerizable unsaturated monomers ($a_1$) and other polymerizable unsaturated monomers ($a_2$) listed in explaining the hydroxyl-containing acrylic resin ($A_1$), include monomers such as (i) to (xi), (xiii) to (xix) which are polymerizable unsaturated monomers other than the polymerizable unsaturated monomer ($I_1$) with two or more polymerizable unsaturated groups in the molecule, as well as any desired combinations of the foregoing.

From the viewpoint of the smoothness and sharpness of the coating film that is to be formed, there is preferably included a hydrophobic polymerizable unsaturated monomer as at least one polymerizable unsaturated monomer ($I_2$) with one polymerizable unsaturated group in the molecule.

Throughout the present specification, the hydrophobic polymerizable unsaturated monomer referred to is a polymerizable unsaturated monomer having a C4 or greater, preferably C6-C18 straight, branched or cyclic saturated

or unsaturated hydrocarbon group, excluding monomers having hydrophilic groups such as hydroxyl-containing polymerizable unsaturated monomers.

Examples for the hydrophobic polymerizable unsaturated monomer include alkyl or cycloalkyl (meth)acrylates such as n-butyl (meth)acrylate, isobutyl (meth)acrylate, tert-butyl (meth)acrylate, pentyl (meth)acrylate, hexyl (meth)acrylate, octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, tert-butylcyclohexyl (meth)acrylate, cyclododecyl (meth)acrylate and tricyclodecanyl (meth)acrylate; polymerizable unsaturated compounds with isobornyl groups such as isobornyl (meth)acrylate; polymerizable unsaturated compounds with adamantyl groups such as adamantyl (meth)acrylate; aromatic ring-containing polymerizable unsaturated monomers such as benzyl (meth)acrylate, styrene, $\alpha$-methylstyrene and vinyltoluene, and any desired combinations of the foregoing.

From the viewpoint of sharpness of the multilayer coating film that is to be formed, the hydrophobic polymerizable unsaturated monomer is preferably at least one polymerizable unsaturated monomer selected from the group consisting of n-butyl (meth)acrylate, 2-ethylhexyl (meth)acrylate and styrene.

For an embodiment in which the core section copolymer (I) includes the hydrophobic polymerizable unsaturated monomer as a copolymerizing component, it contains the hydrophobic polymerizable unsaturated monomer as a copolymerizing component preferably at about 5 to about 90 mass%, based on the total mass of the copolymerizing components that are to compose the core section copolymer (I). This is from the viewpoint of stability in the aqueous medium of the core-shell type water-dispersible hydroxyl-containing acrylic resin ($A_{111}$) and improving the smoothness and sharpness of the coating film that is to be obtained.

The shell section copolymer (II) contains a hydroxyl-containing polymerizable unsaturated monomer ($II_1$), a carboxyl group-containing polymerizable unsaturated monomer ($II_2$) and another polymerizable unsaturated monomer ($II_3$), as copolymerizing components.

The hydroxyl-containing polymerizable unsaturated monomer ($II_1$) which is to form the shell section copolymer (II) has the function of increasing the water resistance of the coating film by introducing hydroxyl groups, that undergo crosslinking reaction with the blocked polyisocyanate compound (B), into the core-shell type water-dispersible hydroxyl-containing acrylic resin ($A_{111}$) that is to be obtained, as well as improving the stability of the core-shell type water-dispersible hydroxyl-containing acrylic resin ($A_{111}$) in the aqueous medium.

Examples for the hydroxyl-containing polymerizable unsaturated monomer ($II_1$) include monoesterified products of (meth)acrylic acid and approximately C2-C8 dihydric alcohols, such as 2-hydroxyethyl (meth)acrylate, 2-hydroxypropyl (meth)acrylate, 3-hydroxypropyl (meth)acrylate and 4-hydroxybutyl (meth)acrylate; $\varepsilon$-caprolactone-modified forms of monoesterified products of the (meth)acrylic acid and approximately C2-C8 dihydric alcohols; N-hydroxymethyl (meth)acrylamide; allyl alcohols, and (meth)acrylates having polyoxyethylene chains with hydroxyl group molecular ends, as well as any desired combinations of the foregoing.

The hydroxyl-containing polymerizable unsaturated monomer ($II_1$) is preferably selected from the group consisting of 2-hydroxyethyl (meth)acrylate, 2-hydroxypropyl (meth)acrylate, 3-hydroxypropyl (meth)acrylate and 4-hydroxybutyl (meth)acrylate, as well as any desired combinations of the foregoing, and more preferably it is 2-hydroxyethyl (meth)acrylate.

The shell section copolymer (II) contains the hydroxyl-containing polymerizable unsaturated monomer ($II_1$) as a copolymerizing component in the range of preferably about 1 to about 40 mass%, more preferably about 4 to about 25 mass% and even more preferably about 7 to about 19 mass%, based on the total mass of the copolymerizing components that are to compose the shell section copolymer (II). This is from the viewpoint of stability in the aqueous medium of the core-shell type water-dispersible hydroxyl-containing acrylic resin ($A_{111}$) and improving the water resistance of the coating film that is to be obtained.

Examples for the carboxyl group-containing polymerizable unsaturated monomer ($II_2$) that is to compose the shell section copolymer (II) include the carboxyl group-containing polymerizable unsaturated monomers (x) listed as other polymerizable unsaturated monomers ($a_2$) in explaining the hydroxyl-containing acrylic resin ($A_1$). The carboxyl group-containing polymerizable unsaturated monomer ($II_2$) is preferably selected from the group consisting of acrylic acid and methacrylic acid, and combinations thereof. If the shell section contains a carboxyl group-containing polymerizable unsaturated monomer ($II_2$) as a copolymerizing component, stability of the core-shell type water-dispersible hydroxyl-containing acrylic resin ($A_{111}$) in the aqueous medium will be ensured.

The shell section copolymer (II) contains the carboxyl group-containing polymerizable unsaturated monomer ($II_2$) as a copolymerizing component, at preferably about 0.1 to about 30 mass%, more preferably about 2 to about 25 mass% and even more preferably about 3 to about 19 mass%, based on the total mass of the copolymerizing components that are to compose the shell section copolymer (II). This is from the viewpoint of stability in the aqueous medium of the core-shell type water-dispersible hydroxyl-containing acrylic resin ($A_{111}$) and improving the water resistance of the coating film that is to be obtained.

The other polymerizable unsaturated monomer ($II_3$) that is to form the shell section copolymer (II) is a polymerizable unsaturated monomer other than the hydroxyl-containing polymerizable unsaturated monomer ($II_1$) and carboxyl

group-containing polymerizable unsaturated monomer ($II_2$). Examples for the other polymerizable unsaturated monomer ($II_3$) include alkyl or cycloalkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, pentyl (meth)acrylate, hexyl (meth)acrylate, octyl (meth)acrylate, 2-ethylhexyl (meth)acrylate, nonyl (meth)acrylate, dodecyl (meth)acrylate, tridecyl (meth)acrylate, stearyl (meth)acrylate, isostearyl (meth)acrylate, cyclohexyl (meth)acrylate, methylcyclohexyl (meth)acrylate, tert-butylcyclohexyl (meth)acrylate, cyclododecyl (meth)acrylate and tricyclodecanyl (meth)acrylate; polymerizable unsaturated compounds with isobornyl groups such as isobornyl (meth)acrylate; polymerizable unsaturated compounds with adamantyl groups such as adamantyl (meth)acrylate; aromatic ring-containing polymerizable unsaturated monomers such as benzyl (meth)acrylate, styrene, $\alpha$-methylstyrene and vinyltoluene, and any desired combinations of the foregoing.

Preferred as the other polymerizable unsaturated monomer ($II_3$) that is to form the shell section copolymer (II) is one that includes no polymerizable unsaturated monomer with two or more polymerizable unsaturated groups in the molecule as a copolymerizing component, but one wherein the shell section copolymer (II) is non-crosslinked, from the viewpoint of improving the brightness of the coating film that is to be obtained.

The core section copolymer (I)/shell section copolymer (II) proportion in the core-shell type water-dispersible hydroxyl-containing acrylic resin ($A_{111}$) is preferably about 5/95 to about 95/5, more preferably about 50/50 to about 85/15 and even more preferably about 60/40 to about 80/20, as the solid mass ratio, from the viewpoint of improving the sharpness and brightness of the coating film that is to be formed.

The core-shell type water-dispersible hydroxyl-containing acrylic resin ($A_{111}$) has a hydroxyl value of preferably about 1 to about 200 mgKOH/g, more preferably about 3 to about 150 mgKOH/g and even more preferably about 5 to about 100 mgKOH/g, from the viewpoint of improving the chipping resistance and water resistance of the coating film that is to be obtained.

Also, the core-shell type water-dispersible hydroxyl-containing acrylic resin ($A_{111}$) has an acid value of preferably about 40 mgKOH/g or less, more preferably about 0.1 to about 30 mgKOH/g and even more preferably about 1 to about 20 mgKOH/g, from the viewpoint of improving the storage stability of the coating material and the smoothness, sharpness and water resistance of the multilayer coating film that is to be formed, and reducing pinhole popping.

The aqueous first pigmented coating composition (X) contains the core-shell type water-dispersible hydroxyl-containing acrylic resin ($A_{111}$) at preferably about 2 to about 95 mass%, more preferably about 10 to about 75 mass% and even more preferably about 15 to about 60 mass%, based on the total solid content of the hydroxyl-containing resin (A) and the blocked polyisocyanate compound (B).

The core-shell type water-dispersible hydroxyl-containing acrylic resin ($A_{111}$) can be obtained, for example, by emulsion polymerization of a monomer mixture comprising about 0.1 to about 30 mass% of a polymerizable unsaturated monomer ($I_1$) with two or more polymerizable unsaturated groups in the molecule and about 70 to about 99.9 mass% of a polymerizable unsaturated monomer ($I_2$) with one polymerizable unsaturated group in the molecule, to obtain an emulsion of a core section copolymer (I), and then adding to the emulsion a monomer mixture comprising about 1 to about 40 mass% of a hydroxyl-containing polymerizable unsaturated monomer ($II_1$), about 0.1 to about 30 mass% of a carboxyl group-containing polymerizable unsaturated monomer ($II_2$) and about 30 to about 98.9 mass% of another polymerizable unsaturated monomer ($II_3$), and further conducting emulsion polymerization to form a shell section copolymer (II).

The emulsion polymerization used to prepare an emulsion of the core section copolymer (I) may be carried out by a known method. For example, the emulsion polymerization can be carried out by adding a polymerization initiator to a mixture of the aforementioned monomers in the presence of a surfactant.

Surfactants include anionic surfactants and nonionic surfactants. Examples of anionic surfactants include sodium salts and ammonium salts of alkylsulfonic acids, alkylbenzenesulfonic acids and alkylphosphoric acids. Examples for the nonionic surfactant include polyoxyethylene oleyl ether, polyoxyethylene stearyl ether, polyoxyethylene lauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan trioleate and polyoxyethylenesorbitan monolaurate.

Also, the anionic surfactant may be a polyoxyalkylene group-containing anionic surfactant having an anionic group and a polyoxyalkylene group such as polyoxyethylene or polyoxypropylene in the molecule; or a reactive anionic surfactant having an anionic group and a radical polymerizable unsaturated group in the molecule, with reactive anionic surfactants being preferred.

The reactive anionic surfactant may be a sodium salt or ammonium salt of a sulfonic acid compound having a radical polymerizable unsaturated group such as allyl, methallyl, (meth)acryloyl, propenyl or butenyl, with ammonium salts of sulfonic acid compounds having radical polymerizable unsaturated groups being preferred for excellent water resistance of the coating film that is to be obtained. An example of a commercial ammonium salt of a sulfonic acid compound is "LATEMUL S-180A" (trade name of Kao Corp.).

Among ammonium salts of sulfonic acid compounds with radical polymerizable unsaturated groups, there are

preferred ammonium salts of sulfonic acid compounds having radical polymerizable unsaturated groups and polyoxyalkylene groups. Examples of commercial products of ammonium salts of sulfonic acid compounds with radical polymerizable unsaturated groups and polyoxyalkylene groups include "AQUALON KH-10" (trade name of Dai-ichi Kogyo Seiyaku Co., Ltd.), "LATEMUL PD-104" (trade name of Kao Corp.) and "ADEKA REASOAP SR-1025" (trade name of Adeka Corp.).

The emulsion polymerization is carried out by adding the surfactant to the reaction system, preferably at about 0.1 to about 15 mass%, more preferably at about 0.5 to about 10 mass% and even more preferably at about 1 to about 5 mass%, based on the total mass of all of the monomers.

Examples for the polymerization initiator include organic peroxides such as benzoyl peroxide, octanoyl peroxide, lauroyl peroxide, stearoyl peroxide, cumene hydroperoxide, tert-butyl peroxide, di-tert-amyl peroxide, tert-butylperoxy-2-ethyl hexanoate, tert-butyl peroxylaurate, tert-butylperoxyisopropyl carbonate, tert-butyl peroxyacetate and diisopropylbenzene hydroperoxide; azo compounds such as azobisisobutyronitrile, azobis(2,4-dimethylvaleronitrile), azobis(2-methylpropionitrile), azobis(2-methylbutyronitrile), 4,4'-azobis(4-cyanobutanoic acid), dimethylazobis(2-methyl propionate), azobis[2-methyl-N-(2-hydroxyethyl)-propionamide] and azobis{2-methyl-N-[2-(1-hydroxybutyl)]-propionamide}; persulfuric acid salts such as potassium persulfate, ammonium persulfate and sodium persulfate, and any desired combinations of the foregoing. If desired, a reducing agent such as a sugar, sodium formaldehyde sulfoxylate or an iron complex may be used with the polymerization initiator, for use as a redox initiator.

The emulsion polymerization is carried out by adding the polymerization initiator to the reaction system, preferably at about 0.1 to about 5 mass% and more preferably at about 0.2 to about 3 mass%, based on the total mass of all of the monomers. The polymerization initiator may be added according to its type and amount, without any particular restrictions. For example, the polymerization initiator may be added beforehand to the monomer mixture or aqueous medium, or the polymerization initiator may be added directly to the reaction system all at once during polymerization, or in a dropwise manner.

The core-shell type water-dispersible hydroxyl-containing acrylic resin ($A_{111}$) is obtained, for example, by adding a monomer mixture comprising a hydroxyl-containing polymerizable unsaturated monomer ($II_1$), a carboxyl group-containing polymerizable unsaturated monomer ($II_2$) and another polymerizable unsaturated monomer ($II_3$) to an emulsion of the core section copolymer (I), and conducting further polymerization to form the shell section copolymer (II).

The monomer mixture that is to form the shell section copolymer (II) may appropriately include components such as polymerization initiators, chain transfer agents, reducing agents, surfactants and the like as desired. Also, although the monomer mixture may be added as is to the reaction system, preferably it is added dropwise to the reaction system as a monomer emulsion obtained by dispersing the monomer mixture in an aqueous medium. The particle size of the monomer emulsion is not particularly restricted.

The monomer mixture that is to form the shell section copolymer (II) is formed, for example, by adding the monomer mixture or its emulsion to the reaction system either all at once or in a slow dropwise fashion, and heating to a suitable temperature while stirring, as a method for forming the shell section copolymer (II) around the core section copolymer (I). The core-shell type water-dispersible hydroxyl-containing acrylic resin ($A_{111}$) obtained in this manner has a multilayer structure with a core section of a copolymer (I) of a polymerizable unsaturated monomer ($I_1$) with two or more polymerizable unsaturated groups in the molecule and a polymerizable unsaturated monomer ($I_2$) with one polymerizable unsaturated group in the molecule, and a shell section of a copolymer (II) of a hydroxyl-containing polymerizable unsaturated monomer ($II_1$), a carboxyl group-containing polymerizable unsaturated monomer ($II_2$) and another polymerizable unsaturated monomer ($II_3$).

Also, the core-shell type water-dispersible hydroxyl-containing acrylic resin ($A_{111}$) may be, for example, a water-dispersible hydroxyl-containing acrylic resin composed of 3 or more layers, by adding a step of supplying a polymerizable unsaturated monomer that is to form another resin layer (a mixture of one or more compounds) for emulsion polymerization, between the step of obtaining the core section copolymer (I) and the step of obtaining the shell section copolymer (II).

According to the invention, "shell section" of the core-shell type water-dispersible hydroxyl-containing acrylic resin means the polymer layer present on the outermost layer of the resin particles, "core section" means the polymer layer on the inner layer of the resin particles excluding the shell section, and "core-shell type structure" means the structure comprising the core section and the shell section.

The core-shell type structure will usually be a layered structure with the core section totally covered by the shell section, but depending on the mass ratio of the core section and shell section, the amount of monomer of the shell section may be insufficient to form a layered structure. In such cases, it is not necessary for it to be a completely layered structure as described above, but instead it may be a structure wherein a portion of the core section is covered by the shell section. The concept of a multilayer structure in the core-shell type structure likewise applies when a multilayer structure is to be formed on the core section in the core-shell type water-dispersible hydroxyl-containing acrylic resin ($A_{111}$).

The core-shell type water-dispersible hydroxyl-containing acrylic resin ($A_{111}$) may generally have a mean particle

size in the range of about 10 to about 1,000 nm, and especially about 20 to about 500 nm.

The mean particle size of the core-shell type water-dispersible hydroxyl-containing acrylic resin ($A_{111}$) referred to throughout the present specification is the value measured using a submicron particle size distribution analyzer at 20°C, after dilution with deionized water by a common method. As an example of a submicron particle size distribution analyzer, there may be used a "COULTER N4" (trade name of Beckman Coulter, Inc.).

In order to improve the mechanical stability of the particles of the core-shell type water-dispersible hydroxyl-containing acrylic resin ($A_{111}$), the acidic groups such as carboxyl groups of the core-shell type water-dispersible hydroxyl-containing acrylic resin ($A_{111}$) are preferably neutralized with a neutralizing agent. There are no particular restrictions on the neutralizing agent so long as it can neutralize the acidic groups, and examples include sodium hydroxide, potassium hydroxide, trimethylamine, 2-(dimethylamino)ethanol, 2-amino-2-methyl-1-propanol, triethylamine and ammonia water. The neutralizing agent is preferably used in an amount such that the pH of an aqueous dispersion of the core-shell type water-dispersible hydroxyl-containing acrylic resin ($A_{111}$) after neutralization is between about 6.5 and about 9.0.

[Hydroxyl-containing polyester resin ($A_2$)]

The hydroxyl-containing polyester resin ($A_2$) can usually be produced by esterification reaction or transesterification reaction between an acid component and an alcohol component.

The acid component may be a compound that is commonly used as an acid component for production of polyester resins. Examples for the acid component include aliphatic polybasic acids, alicyclic polybasic acids and aromatic polybasic acids, as well as their anhydrides and ester compounds.

Aliphatic polybasic acids and their anhydrides and ester compounds generally include aliphatic compounds with two or more carboxyl groups in the molecule, acid anhydrides of such aliphatic compounds and esterified forms of such aliphatic compounds, examples of which include aliphatic polybasic carboxylic acids such as succinic acid, glutaric acid, adipic acid, pimelic acid, suberic acid, azelaic acid, sebacic acid, undecanedioic acid, dodecanedioic acid, brassylic acid, octadecanedioic acid, citric acid and butanetetracarboxylic acid; anhydrides of these aliphatic polybasic carboxylic acids; approximately C1-C4 lower alkyl esters of these aliphatic polybasic carboxylic acids, and any desired combinations of the foregoing.

The aliphatic polybasic acids and their anhydrides and ester compounds are most preferably adipic acid and/or adipic anhydride, from the viewpoint of smoothness of the coating film that is to be obtained.

These alicyclic polybasic acids and their anhydrides and ester compounds generally include compounds having one or more alicyclic structures and two or more carboxyl groups in the molecule, acid anhydrides of such compounds, and esters of such compounds. An alicyclic structure is mainly a 4- to 6-membered cyclic structure. Examples of alicyclic polybasic acids and their anhydrides and esters include alicyclic polybasic carboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid and 1,3,5-cyclohexanetricarboxylic acid; anhydrides of these alicyclic polybasic carboxylic acids; approximately C1-C4 lower alkyl esters of these alicyclic polybasic carboxylic acids, and any desired combinations of the foregoing.

From the viewpoint of smoothness of the coating film that is to be obtained, the alicyclic polybasic acids and their anhydrides and esters are preferably 1,2-cyclohexanedicarboxylic acid, 1,2-cyclohexanedicarboxylic anhydride, 1,3-cyclohexanedicarboxylic acid, 1,4-cyclohexanedicarboxylic acid, 4-cyclohexene-1,2-dicarboxylic acid and 4-cyclohexene-1,2-dicarboxylic anhydride, and more preferably 1,2-cyclohexanedicarboxylic acid and/or 1,2-cyclohexanedicarboxylic anhydride.

The aromatic polybasic acids and their anhydrides and esters are generally aromatic compounds with two or more carboxyl groups in the molecule, acid anhydrides of such aromatic compounds and esters of such aromatic compounds, examples of which include aromatic polybasic carboxylic acids such as phthalic acid, isophthalic acid, terephthalic acid, naphthalenedicarboxylic acid, 4,4'-biphenyldicarboxylic acid, trimellitic acid and pyromellitic acid; anhydrides of these aromatic polybasic carboxylic acids; approximately C1-C4 lower alkyl esters of these aromatic polybasic carboxylic acids, and any desired combinations of the foregoing.

Preferred as the aromatic polybasic acids and their anhydrides and esters are phthalic acid, phthalic anhydride, isophthalic acid, trimellitic acid and trimellitic anhydride.

Also, the acid component may be an acid component other than the aforementioned aliphatic polybasic acids, alicyclic polybasic acids and aromatic polybasic acids, examples including fatty acids such as coconut fatty acid, cottonseed oil fatty acid, hempseed oil fatty acid, rice bran oil fatty acid, fish oil fatty acid, tall oil fatty acid, soybean oil fatty acid, linseed oil fatty acid, China wood oil fatty acid, rapeseed oil fatty acid, castor oil fatty acid, dehydrated castor oil fatty acid and safflower oil fatty acid; monocarboxylic acids such as lauric acid, myristic acid, palmitic acid, stearic acid, oleic acid, linolic acid, linolenic acid, benzoic acid, p-tert-butylbenzoic acid, cyclohexanoic acid and 10-phenyloctadecanoic acid; and hydroxycarboxylic acids such as lactic acid, 3-hydroxybutanoic acid and 3-hydroxy-4-ethoxybenzoic acid, as well as any desired combinations of the foregoing.

The alcohol component may be a polyhydric alcohol with two or more hydroxyl groups in the molecule, examples of which include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F and dimethylolpropionic acid; polylactonediols with lactone compounds such as ε-caprolactone added to the aforementioned dihydric alcohols; ester diol compounds such as bis(hydroxyethyl)terephthalate; polyether diol compounds such as bisphenol A alkylene oxide addition products, polyethylene glycol, polypropylene glycol and polybutylene glycol; trihydric and greater alcohols such as glycerin, trimethylolethane, trimethylolpropane, diglycerin, triglycerin, 1,2,6-hexanetriol, pentaerythritol, dipentaerythritol, tris(2-hydroxyethyl)isocyanuric acid, sorbitol and mannitol; polylactone polyol compounds with lactone compounds such as ε-caprolactone added to the aforementioned trihydric and greater alcohols; and fatty acid esterified glycerin.

The alcohol component may also be an alcohol component other than the aforementioned polyhydric alcohols, examples of which include monoalcohols such as methanol, ethanol, propyl alcohol, butyl alcohol, stearyl alcohol and 2-phenoxyethanol; and alcohol compounds obtained by reacting acids with monoepoxy compounds such as propylene oxide, butylene oxide, "CARDURA E10" (trade name of HEXION Specialty Chemicals, glycidyl ester of synthetic highly-branched saturated fatty acid), and the like.

The hydroxyl-containing polyester resin ($A_2$) may be produced by a common method without any particular restrictions. For example, the acid component and the alcohol component may be heated in a nitrogen stream at about 150°C to about 250°C for about 5 to about 10 hours for esterification reaction or transesterification reaction between the acid component and the alcohol component, to produce the hydroxyl-containing polyester resin ($A_2$).

When the acid component and alcohol component are subjected to esterification reaction or transesterification reaction, they may be added all at once to the reactor, or one or both may be added in separate portions. After the hydroxyl-containing polyester resin has been synthesized, an acid anhydride may be reacted with the obtained hydroxyl-containing polyester resin for half-esterification, to produce a carboxyl- and hydroxyl-containing polyester resin. Also, after the carboxyl group-containing polyester resin has been synthesized, the alcohol component may be added to the carboxyl group-containing polyester resin to produce the hydroxyl-containing polyester resin ($A_2$).

During the esterification or transesterification reaction, a known catalyst such as dibutyltin oxide, antimony trioxide, zinc acetate, manganese acetate, cobalt acetate, calcium acetate, lead acetate, tetrabutyl titanate or tetraisopropyl titanate may be added to the reaction system as a catalyst to accelerate the reaction.

Also, the hydroxyl-containing polyester resin ($A_2$) may be one that has been modified with a fatty acid, monoepoxy compound, polyisocyanate compound or the like either during or after preparation of the resin.

Examples for the fatty acid include coconut fatty acid, cottonseed oil fatty acid, hempseed oil fatty acid, rice bran oil fatty acid, fish oil fatty acid, tall oil fatty acid, soybean oil fatty acid, linseed oil fatty acid, China wood oil fatty acid, rapeseed oil fatty acid, castor oil fatty acid, dehydrated castor oil fatty acid and safflower oil fatty acid, and a preferred example for the monoepoxy compound is "CARDURA E10" (trade name of HEXION Specialty Chemicals, glycidyl ester of synthetic highly-branched saturated fatty acid).

Examples for the polyisocyanate compound include aliphatic diisocyanate compounds such as lysine diisocyanate, hexamethylene diisocyanate and trimethylhexane diisocyanate; alicyclic diisocyanate compounds such as hydrogenated xylylene diisocyanate, isophorone diisocyanate, methylcyclohexane-2,4-diisocyanate, methylcyclohexane-2,6-diisocyanate, 4,4'-methylenebis(cyclohexyl isocyanate) and 1,3-(isocyanatomethyl)cyclohexane; aromatic diisocyanate compounds such as tolylene diisocyanate, xylylene diisocyanate and diphenylmethane diisocyanate; organic polyisocyanates including trivalent and greater polyisocyanates such as lysine triisocyanate; addition products of the aforementioned organic polyisocyanates with polyhydric alcohols, low molecular weight polyester resins, water or the like; cyclized polymers formed between the aforementioned organic polyisocyanates (for example, isocyanurates), biuret-type addition products, and any desired combinations of the foregoing.

Also, from the viewpoint of improving the smoothness and water resistance of the coating film that is to be obtained, the content of the alicyclic polybasic acid among the acid components of the starting material for the hydroxyl-containing polyester resin ($A_2$) is preferably about 20 to about 100 mol%, more preferably about 25 to about 95 mol% and even more preferably about 30 to about 90 mol%, based on the total amount of the acid components. Most preferably, the alicyclic polybasic acid is 1,2-cyclohexanedicarboxylic acid and/or 1,2-cyclohexanedicarboxylic anhydride, from the viewpoint of improving the smoothness of the coating film that is to be obtained.

The hydroxyl-containing polyester resin ($A_2$) has a hydroxyl value of preferably about 1 to about 200 mgKOH/g, more preferably about 2 to about 180 mgKOH/g and even more preferably about 5 to about 170 mgKOH/g.

In cases where the hydroxyl-containing polyester resin ($A_2$) has a carboxyl group, the hydroxyl-containing polyester resin ($A_2$) has an acid value of preferably about 0.1 to about 100 mgKOH/g, more preferably about 0.5 to about

60 mgKOH/g and even more preferably about 1 to about 50 mgKOH/g.

Also, the hydroxyl-containing polyester resin ($A_2$) has a number-average molecular weight of preferably about 500 to about 50,000, more preferably about 1,000 to about 30,000 and even more preferably about 1,200 to about 10,000.

As used herein, "number-average molecular weight" and "weight-average molecular weight" are the values determined by converting the retention time (retention volume) using gel permeation chromatography (GPC) to polystyrene molecular weight based on the retention time (retention volume) for standard polystyrene of known molecular weight, measured under the same conditions. Specifically, it may be measured using "HLC-8120GPC" (trade name of Tosoh Corp.) as the gel permeation chromatograph, using 4 columns, a "TSKgel G4000HXL", "TSKgel G3000HXL", "TSKgel G2500HXL" and "TSKgel G2000HXL" (all trade names of Tosoh Corp.) as the columns, and using a differential refractometer as the detector, under the conditions of mobile phase: tetrahydrofuran, measuring temperature: 40°C, flow rate: 1 mL/min.

For an embodiment in which the aqueous first pigmented coating composition (X) contains a hydroxyl-containing polyester resin ($A_2$) as the hydroxyl-containing resin (A), the aqueous first pigmented coating composition (X) contains the hydroxyl-containing polyester resin ($A_2$) in the range of preferably about 2 to about 95 mass%, more preferably about 10 to about 70 mass% and even more preferably about 15 to about 50 mass%, based on the total solid content of the hydroxyl-containing resin (A) and the blocked polyisocyanate compound (B).

[Hydroxyl-containing polyurethane resin $A_3$)]

Examples for the hydroxyl-containing polyurethane resin ($A_3$) include resins produced by reacting at least one diisocyanate compound selected from the group consisting of aliphatic diisocyanate compounds, alicyclic diisocyanate compounds and aromatic diisocyanate compounds with at least one polyol compound selected from the group consisting of polyether polyols, polyester polyols and polycarbonate polyols.

Specifically, the hydroxyl-containing polyurethane resin ($A_3$) can be produced in the following manner.

For example, a urethane prepolymer is produced by reacting at least one diisocyanate selected from the group consisting of aliphatic diisocyanates and alicyclic diisocyanates, at least one diol selected from the group consisting of polyether diols, polyester diols and polycarbonate diols, a low-molecular-weight polyhydroxy compound and a dimethylolalkanoic acid. A self-emulsifiable hydroxyl-containing polyurethane resin ($A_3$) having a mean particle size of about 0.001 to about 3 μm can be obtained by neutralizing the urethane prepolymer with a tertiary amine and forming an emulsified dispersion of the neutralized product in water, and then optionally mixing it with an aqueous medium containing a chain extension agent, such as a polyamine, a crosslinking agent, a terminator or the like, and reacting until the isocyanate groups substantially disappear.

For an embodiment in which the aqueous first pigmented coating composition (X) contains a hydroxyl-containing polyurethane resin ($A_3$) as the hydroxyl-containing resin (A), the aqueous first pigmented coating composition (X) contains the hydroxyl-containing polyurethane resin ($A_3$) in the range of preferably 2 to 90 mass%, more preferably about 5 to about 70 mass% and even more preferably 8 to 50 mass%, based on the total solid content of the hydroxyl-containing resin (A) and the blocked polyisocyanate compound (B).

[Blocked polyisocyanate compound (B)]

The blocked polyisocyanate compound (B) has at least one blocked isocyanate group selected from the group consisting of a blocked isocyanate group represented by the following formula (I):

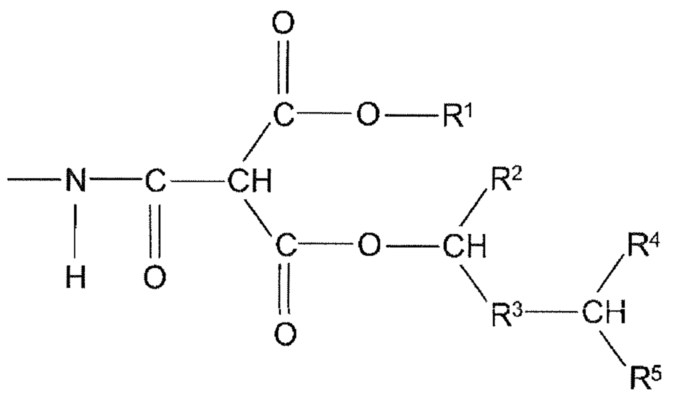

(I)

wherein $R^1$, $R^2$, $R^4$ and $R^5$ each independently represent an approximately C1-C12 hydrocarbon group and $R^3$ represents

an approximately C1-C12 straight or branched alkylene group,
a blocked isocyanate group represented by the following formula (II):

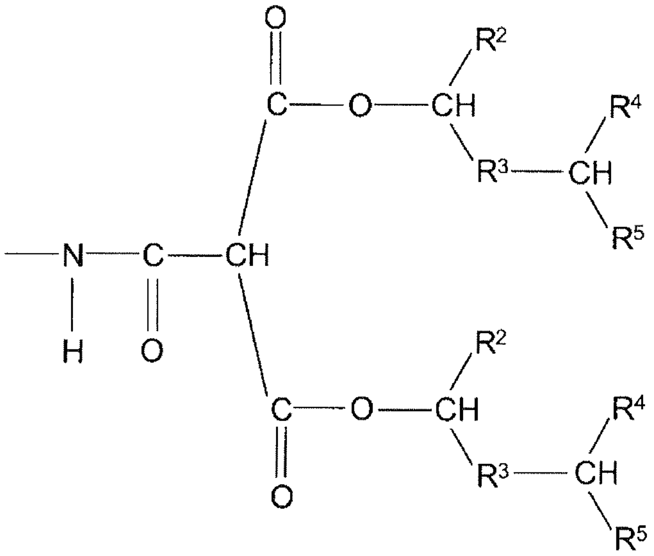

(II)

wherein $R^2$, $R^3$, $R^4$ and $R^5$ are as defined above, and
a blocked isocyanate group represented by the following formula (III):

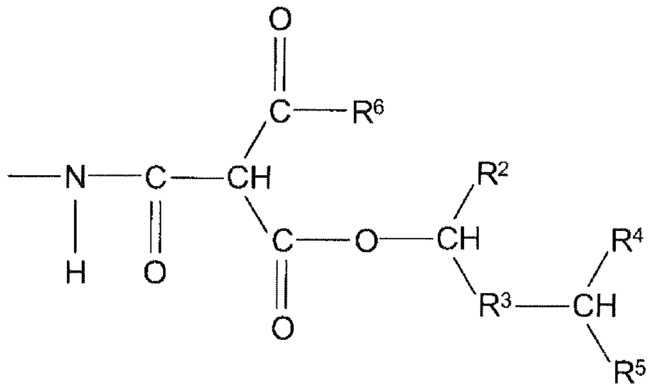

(III)

wherein $R^2$, $R^3$, $R^4$ and $R^5$ are as defined above, and $R^6$ represents an approximately C1-C12 hydrocarbon group.

The blocked polyisocyanate compound (B) can be obtained, for example, by reacting an active methylene compound ($b_2$) with the isocyanate groups of a polyisocyanate compound ($b_1$) having two or more isocyanate groups in the molecule, to obtain a blocked polyisocyanate compound precursor ($b_3$), and then reacting the blocked polyisocyanate compound precursor ($b_3$) with a secondary alcohol ($b_4$).

[Polyisocyanate compound ($b_1$)]

The polyisocyanate compound ($b_1$) is a compound with at least two isocyanate groups in the molecule, and examples include aliphatic polyisocyanates, alicyclic polyisocyanates, aromatic/aliphatic polyisocyanates, aromatic polyisocyanates, and their derivatives, as well as combinations of the foregoing.

Examples of aliphatic polyisocyanates include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate and methyl 2,6-diisocyanatohexanoate (common name: lysine diisocyanate); and aliphatic triisocyanates such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane and 2,5,7-trimethyl-1,8-diisocyanato-5-isocyanatomethyloctane.

Examples of alicyclic polyisocyanates include alicyclic diisocyanates such as 1,3-cyclopentene diisocyanate,

1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or mixtures thereof, methylenebis(4,1-cyclohexanediyl)diisocyanate (common name: hydrogenated MDI) and norbornane diisocyanate; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane and 6-(2-isocyanatoethyl)-2-isocyanatomethyl-2-(3-isocyanatopropyl)-bicyclo(2.2.1)heptane.

Examples of aromatic/aliphatic polyisocyanates include aromatic/aliphatic diisocyanates such as methylenebis(4,1-phenylene)diisocyanate (common name: MDI), 1,3- or 1,4-xylylene diisocyanate or mixtures thereof, ω,ω'-diisocyanato-1,4-diethylbenzene and 1,3- or 1,4-bis(1-isocyanato-1-methylethyl)benzene (common name: tetramethylxylylene diisocyanate) or mixtures thereof; and aromatic/aliphatic triisocyanates such as 1,3,5-triisocyanatomethylbenzene.

Examples of aromatic polyisocyanates include aromatic diisocyanates such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) or 2,6-tolylene diisocyanate (common name: 2,6-TDI), or mixtures thereof, 4,4'-toluidine diisocyanate and 4,4'-diphenyl ether diisocyanate; aromatic triisocyanates such as triphenylmethane-4,4',4"-triisocyanate, 1,3,5-triisocyanatobenzene and 2,4,6-triisocyanatotoluene; and aromatic tetraisocyanates such as 4,4'-diphenylmethane-2,2',5,5'-tetraisocyanate.

Examples of the aforementioned derivatives include the aforementioned polyisocyanate dimers, trimers, biurets, allophanates, urethodiones, urethoimines, isocyanurates, oxadiazinetriones and the like, as well as polymethylenepolyphenyl polyisocyanate (crude MDI, polymeric MDI) and crude TDI.

As the polyisocyanate compound ($b_1$) there are preferred aliphatic diisocyanates, alicyclic diisocyanates and their derivatives, to render the obtained blocked polyisocyanate compound (B) resistant to yellowing during heating. As the polyisocyanate compound ($b_1$) there are more preferred aliphatic diisocyanates and their derivatives, from the viewpoint of increasing the flexibility of the coating film that is formed.

The polyisocyanate compound ($b_1$) includes prepolymers produced by reacting aliphatic polyisocyanates, alicyclic polyisocyanates, aromatic/aliphatic polyisocyanates, aromatic polyisocyanates, and their derivatives, as well as any combinations of the foregoing, with compounds that can react with such polyisocyanates, under conditions with an excess of isocyanate groups. Examples of compounds that can react with the aforementioned polyisocyanates include compounds with active hydrogen groups such as hydroxyl and amino, and specific examples include polyhydric alcohols, low molecular weight polyester resins, amines, water and the like.

Also, the polyisocyanate compound ($b_1$) includes polymers of isocyanate group-containing polymerizable unsaturated monomers, or copolymers of such isocyanate group-containing polymerizable unsaturated monomers and polymerizable unsaturated monomers other than the isocyanate group-containing polymerizable unsaturated monomers.

The polyisocyanate compound ($b_1$) has a number-average molecular weight in the range of preferably about 300 to about 20,000, more preferably about 400 to about 8,000 and even more preferably about 500 to about 2,000, from the viewpoint of reactivity of the blocked polyisocyanate compound (B) that is to be obtained and compatibility between the blocked polyisocyanate compound (B) and the other coating material components.

The polyisocyanate compound ($b_1$) also preferably has a mean number of isocyanate functional groups in the molecule in the range of about 2 to about 100, from the viewpoint of reactivity of the blocked polyisocyanate compound (B) that is to be obtained and compatibility between the blocked polyisocyanate compound (B) and the other coating material components. The mean number of isocyanate functional groups is more preferably at least 3 or greater from the viewpoint of increasing the reactivity of the blocked polyisocyanate compound (B) that is to be obtained. The mean number of isocyanate functional groups is also more preferably 20 or less from the viewpoint of preventing gelling during production of the blocked polyisocyanate compound (B).

[Active methylene compound ($b_2$)]

Examples for the active methylene compound ($b_2$) that blocks the isocyanate groups in the polyisocyanate compound ($b_1$) include malonic acid diesters such as dimethyl malonate, diethyl malonate, di-n-propyl malonate, diisopropyl malonate, di-n-butyl malonate, diisobutyl malonate, di-sec-butyl malonate, di-tert-butyl malonate, di-n-pentyl malonate, di-n-hexyl malonate, di(2-ethylhexyl) malonate, methyl-isopropyl malonate, ethyl-isopropyl malonate, methyl-n-butyl malonate, ethyl-n-butyl malonate, methyl-isobutyl malonate, ethyl-isobutyl malonate, methyl-sec-butyl malonate, ethyl-sec-butyl malonate, diphenyl malonate and dibenzyl malonate, acetoacetic acid esters such as methyl acetoacetate, ethyl acetoacetate, n-propyl acetoacetate, isopropyl acetoacetate, n-butyl acetoacetate, isobutyl acetoacetate, sec-butyl

acetoacetate, tert-butyl acetoacetate, n-pentyl acetoacetate, n-hexyl acetoacetate, 2-ethylhexyl acetoacetate, phenyl acetoacetate and benzyl acetoacetate, isobutyrylacetic acid esters such as methyl isobutyrylacetate, ethyl isobutyrylacetate, n-propyl isobutyrylacetate, isopropyl isobutyrylacetate, n-butyl isobutyrylacetate, isobutyl isobutyrylacetate, sec-butyl isobutyrylacetate, tert-butyl isobutyrylacetate, n-pentyl isobutyrylacetate, n-hexyl isobutyrylacetate, 2-ethylhexyl isobutyrylacetate, phenyl isobutyrylacetate and benzyl isobutyrylacetate, and any desired combinations of the foregoing.

The active methylene compound ($b_2$) is preferably at least one compound selected from the group consisting of dimethyl malonate, diethyl malonate, diisopropyl malonate, methyl acetoacetate, ethyl acetoacetate, isobutyrylmethyl acetate and isobutyrylethyl acetate, and more preferably at least one compound selected from the group consisting of diisopropyl malonate, methyl isobutyrylacetate and ethyl isobutyrylacetate, from the viewpoint of smoothness and sharpness of the multilayer coating film that is to be formed.

The active methylene compound ($b_2$) is even more preferably diisopropyl malonate, from the viewpoint of the smoothness and sharpness of the multilayer coating film that is to be formed, the reactivity of the blocked polyisocyanate compound (B) that is to be obtained and the storage stability of the aqueous first pigmented coating composition (X).

The blocking reaction of isocyanate groups by the active methylene compound ($b_2$) may include a reaction catalyst if desired. Examples for the reaction catalyst include basic compounds such as metal hydroxides, metal alkoxides, metal carboxylates, metal acetylacetonates, onium salt hydroxides, onium carboxylates, metal salts of active methylene compounds, onium salts of active methylene compounds, aminosilanes, amines, phosphines, and the like. Preferred as onium salts are ammonium salts, phosphonium salts and sulfonium salts.

The amount of reaction catalyst is usually preferred to be in the range of about 10 to about 10,000 ppm and more preferably in the range of about 20 to about 5,000 ppm, based on the total solid mass of the polyisocyanate compound ($b_1$) and the active methylene compound ($b_2$).

The blocking reaction of isocyanate groups by the active methylene compound ($b_2$) may be conducted at between about 0 and about 150°C, and a solvent may be included. The solvent is preferably an aprotic solvent, with solvents such as esters, ethers, N-alkylamides and ketones being especially preferred. As the reaction progresses, an acid component may be added to the reaction system to neutralize the basic compound catalyst, thereby suspending the blocking reaction.

There are no particular restrictions on the amount of the active methylene compound ($b_2$) in the blocking reaction of the isocyanate groups by the active methylene compound ($b_2$), but preferably it is about 0.1 to about 3 mol and more preferably about 0.2 to about 2 mol, with respect to 1 mol of isocyanate groups in the polyisocyanate compound ($b_1$). Also, the active methylene compounds that have not reacted with isocyanate groups in the polyisocyanate compound ($b_1$) may be removed after completion of the blocking reaction.

Also, in the blocking reaction of the isocyanate groups by the active methylene compound ($b_2$), there may be added an alcohol-based, phenol-based, oxime-based, amine-based, acid amide-based, imidazole-based, pyridine-based or mercaptane-based blocking agent in addition to the active methylene compound ($b_2$).

Thus, the blocked polyisocyanate compound (B) includes those wherein some of the isocyanate groups are blocked by a blocking agent other than the active methylene compound ($b_2$) .

Some of the isocyanate groups in the polyisocyanate compound ($b_1$) may also be reacted with an active hydrogen-containing compound. By reacting some of the isocyanate groups in the polyisocyanate compound ($b_1$) with an active hydrogen-containing compound, it is possible to improve the storage stability of the blocked polyisocyanate compound (B) that is obtained, to modify the compatibility between the blocked polyisocyanate compound (B) and the other coating material components, and increase flexibility of the coating film that is to be formed.

When some of the isocyanate groups in the polyisocyanate compound ($b_1$) are to be reacted with the active hydrogen-containing compound, the order of reacting the polyisocyanate compound ($b_1$), active methylene compound ($b_2$) and active hydrogen-containing compound is not particularly restricted.

Specifically, there may be mentioned (i) a method of blocking some of the isocyanate groups in a polyisocyanate compound ($b_1$) with an active methylene compound ($b_2$), and then reacting an active hydrogen-containing compound with the remaining isocyanate groups, (ii) a method of reacting an active hydrogen-containing compound with some of the isocyanate groups in a polyisocyanate compound ($b_1$) and then blocking the remaining isocyanate groups with an active methylene compound ($b_2$), and (iii) a method of simultaneously reacting an active hydrogen-containing compound and an active methylene compound ($b_2$) with the isocyanate groups in a polyisocyanate compound ($b_1$).

Examples for the active hydrogen-containing compound include hydroxyl-containing compounds and amino group-containing compounds.

Examples of hydroxyl-containing compounds include propanol, butanol, pentanol, hexanol, heptanol, 2-ethyl-1-hexanol, octanol, nonanol, decanol, tridecanol, stearyl alcohol, ethylene glycol, propylene glycol, polyethylene glycol, polypropylene glycol, polyethylene glycol, (propylene glycol), polyethyleneglycol monoalkyl ether, polypropyleneglycol monoalkyl ether, polyethylene glycol (propylene glycol)monoalkyl ethers and trimethylolpropane, as well as any desired combinations of the foregoing.

As used herein, "polyethylene glycol(propylene glycol)" means a copolymer of ethylene glycol and propylene

glycol, and it includes block copolymers and random copolymers.

The hydroxyl-containing compound is preferably a monovalent alcohol from the viewpoint of minimizing viscosity increase of the blocked polyisocyanate compound (B) that is to be obtained. Examples for the monovalent alcohol include propanol, butanol, pentanol, hexanol, heptanol, 2-ethyl-1-hexanol, octanol, nonanol, decanol, tridecanol, stearyl alcohol, polyethyleneglycol monoalkyl ethers, polypropyleneglycol monoalkyl ethers and polyethyleneglycol(propylene glycol) monoalkyl ethers, as well as any desired combinations of the foregoing.

Examples for the amino group-containing compound include butylamine, octylamine, stearylamine, dibutylamine, dioctylamine, dicyclohexylamine, dilaurylamine, α-(aminoalkyl)-ω-alkoxypolyoxyethylene (oxypropylene)s, hexamethylenediamine, diethylenetriamine and polyoxypropylene-α,ω-diamine (examples of commercial products including "JEFFAMINE D-400" by Huntsman Corp.), as well as any desired combinations of the foregoing.

The amino group-containing compound is preferably a monovalent amine from the viewpoint of minimizing viscosity increase of the blocked polyisocyanate compound (B) that is to be obtained. Examples for the monovalent amine include butylamine, octylamine, stearylamine, dibutylamine, dioctylamine, dicyclohexylamine, dilaurylamine and α-(aminoalkyl)-ω-alkoxypolyoxyethylene(oxypropylene)s, as well as any desired combinations of the foregoing.

When the active hydrogen-containing compound is to be reacted with some of the isocyanate groups in the polyisocyanate compound ($b_1$), the proportion of the polyisocyanate compound ($b_1$) and the active hydrogen-containing compound is preferably such that the number of moles of active hydrogen in the active hydrogen-containing compound is in the range of about 0.03 to about 0.6 mol based on 1 mol of isocyanate groups in the polyisocyanate compound ($b_1$), from the viewpoint of storage stability and curability of the aqueous first pigmented coating composition (X), and smoothness, sharpness, water resistance and reduction in pinhole popping for the multilayer coating film that is to be formed.

This proportion is more preferably about 0.4 or less and even more preferably about 0.3 or less from the viewpoint of curability of the aqueous first pigmented coating composition (X) and water resistance of the multilayer coating film that is to be formed. The proportion is also more preferably about 0.04 or greater and more preferably about 0.05 or greater from the viewpoint of storage stability of the aqueous first pigmented coating composition (X) and smoothness, sharpness and reduction in pinhole popping for the multilayer coating film that is to be formed.

Also, the blocked polyisocyanate compound (B) is preferably a blocked polyisocyanate compound (B') with hydrophilic groups, from the viewpoint of storage stability and curability of the aqueous first pigmented coating composition (X) and smoothness, sharpness and reduction in pinhole popping for the multilayer coating film that is to be formed.

The blocked polyisocyanate compound (B') with hydrophilic groups may be obtained, for example, using an active hydrogen-containing compound with hydrophilic groups as the active hydrogen-containing compound.

The active hydrogen-containing compound having a hydrophilic group may be an active hydrogen-containing compound with a nonionic hydrophilic group, an active hydrogen-containing compound with an anionic hydrophilic group, an active hydrogen-containing compound with a cationic hydrophilic group, or the like, as well as any desired combination of these. The active hydrogen-containing compound having a hydrophilic group is preferably an active hydrogen-containing compound having a nonionic hydrophilic group, in order to minimize inhibition of the reaction of blocking the isocyanate groups in the polyisocyanate compound ($b_1$) with the active methylene compound ($b_2$).

Examples of active hydrogen-containing compounds having nonionic hydrophilic groups include active hydrogen-containing compounds having polyoxyalkylene groups. Examples for the polyoxyalkylene group include polyoxyethylene, polyoxypropylene, polyoxyethyleneoxypropylene, and any desired combinations of the foregoing. The active hydrogen-containing compound having a nonionic hydrophilic group preferably has a polyoxyethylene group, from the viewpoint of storage stability of the aqueous first pigmented coating composition (X).

The active hydrogen-containing compound having a polyoxyethylene group has about 3 or more, preferably about 5 to about 100 and even more preferably about 8 to about 45 contiguous oxyethylenes, or in other words it has polyoxyethylene blocks, from the viewpoint of storage stability of the aqueous first pigmented coating composition (X) and water resistance of the multilayer coating film that is to be formed.

The active hydrogen-containing compound having a polyoxyethylene group may also contain oxyalkylene groups other than oxyethylene groups, in addition to the polyoxyethylene blocks. Examples of oxyalkylene groups other than the oxyethylene groups include oxypropylene, oxybutylene and oxystyrene.

The molar ratio of oxyethylene groups among the oxyalkylene groups in the active hydrogen-containing compound having polyoxyethylene groups is preferably in the range of about 20 to about 100 mol% and more preferably in the range of about 50 to about 100 mol%, from the viewpoint of storage stability of the aqueous first pigmented coating composition (X). If the molar ratio of oxyethylene groups among the oxyalkylene groups is less than about 20 mol%, the hydrophilicity imparted may be inadequate, and the storage stability of the aqueous first pigmented coating composition (X) may be reduced.

Also, the active hydrogen-containing compound having a nonionic hydrophilic group preferably has a number-average molecular weight in the range of about 200 to about 2,000, from the viewpoint of the storage stability of the aqueous first pigmented coating composition (X) and the water resistance of the multilayer coating film that is to be

formed. The number-average molecular weight is preferably about 300 or greater and even more preferably about 400 or greater from the viewpoint of the storage stability of the aqueous first pigmented coating composition (X). The number-average molecular weight is also more preferably about 1,500 or less and even more preferably about 1,200 or less from the viewpoint of the water resistance of the multilayer coating film that is to be formed.

Examples of active hydrogen-containing compounds having nonionic hydrophilic groups include polyethylene glycol monoalkyl ethers (alternate name: ω-alkoxypolyoxyethylenes) such as polyethylene glycol monomethyl ether and polyethylene glycol monoethyl ether, polypropylene glycol monoalkyl ethers (alternate name: ω-alkoxypolyoxypropylenes) such as polypropyleneglycol monomethyl ether and polypropyleneglycol monoethyl ether, ω-alkoxypolyoxyethylene(oxypropylene)s such as ω-methoxypolyoxyethylene(oxypropylene) and ω-ethoxypolyoxyethylene(oxypropylene), polyethyleneglycol (propylene glycol) monoalkyl ethers such as polyethyleneglycol(propylene glycol) monomethyl ether and polyethyleneglycol(propylene glycol) monoethyl ether, and polyethylene glycol, polypropylene glycol, polyethylene glycol(propylene glycol), α-(aminoalkyl)-ω-alkoxypolyoxyethylene, α-(aminoalkyl)-ω-alkoxypolyoxypropylene, α-(aminoalkyl)-ω-alkoxypolyoxyethylene and the like, as well as any desired combinations of the foregoing.

Preferred for the active hydrogen-containing compound having a nonionic hydrophilic group are polyethyleneglycol monomethyl ether, polyethyleneglycol monoethyl ether and polyethylene glycol, with polyethyleneglycol monomethyl ether being more preferred.

Examples of commercial products of polyethyleneglycol monomethyl ether include "UNIOX M-400", "UNIOX M-550", "UNIOX M-1000" and "UNIOX M-2000" by NOF Corp. Also, examples of commercial products of polyethylene glycol include "PEG#200", "PEG#300", "PEG#400", "PEG#600", "PEG#1000", "PEG#1500", "PEG#1540" and "PEG#2000" by NOF Corp.

Examples of active hydrogen-containing compounds having anionic hydrophilic groups include active hydrogen-containing compounds having acidic groups, for example, active hydrogen-containing compounds having carboxyl groups, active hydrogen-containing compounds having sulfonic acid groups and active hydrogen-containing compounds having phosphate groups, as well as their neutralized salts, and any desired combinations of the foregoing. The active hydrogen-containing compound having an anionic hydrophilic group is preferably an active hydrogen-containing compound having a carboxyl group, from the viewpoint of compatibility between the blocked polyisocyanate compound (B) that is to be obtained and the other coating material components.

Some or all of the acidic groups in the active hydrogen-containing compound having an anionic hydrophilic group are preferably neutralized with a basic compound, in order to minimize inhibition of the reaction of blocking the isocyanate groups in the polyisocyanate compound ($b_1$) with the active methylene compound ($b_2$).

Neutralization of the acidic groups in the active hydrogen-containing compound having an anionic hydrophilic group may be accomplished before reaction between the active hydrogen-containing compound having an anionic hydrophilic group and the polyisocyanate compound ($b_1$), or it may be accomplished after the reaction.

Examples of basic compounds include hydroxides of alkali metals or alkaline earth metals such as sodium hydroxide, potassium hydroxide, lithium hydroxide, calcium hydroxide and barium hydroxide; metal alkoxides; ammonia; primary monoamines such as ethylamine, propylamine, butylamine, benzylamine, monoethanolamine, 2,2-dimethyl-3-amino-1-propanol, 2-aminopropanol, 2-amino-2-methyl-1-propanol and 3-aminopropanol; secondary monoamines such as diethylamine, diethanolamine, di-n-propanolamine, di-isopropanolamine, N-methylethanolamine and N-ethylethanolamine; tertiary monoamines such as dimethylethanolamine, trimethylamine, triethylamine, triisopropylamine, methyldiethanolamine and 2-(dimethylamino)ethanol; and polyamines such as diethylenetriamine, hydroxyethylaminoethylamine, ethylaminoethylamine and methylaminopropylamine, as well as any desired combinations of the foregoing. The amount of the basic compound will usually be in the range of about 0.1 to about 1.5 equivalents and preferably about 0.2 to about 1.2 equivalents with respect to the anionic groups in the active hydrogen-containing compound having the anionic hydrophilic group.

Examples of active hydrogen-containing compounds having carboxyl groups include monohydroxycarboxylic acids such as glycolic acid, lactic acid, hydroxypivalic acid, malic acid and citric acid, dihydroxycarboxylic acids such as 2,2-dimethylolacetic acid, 2,2-dimethylollactic acid, 2,2-dimethylolpropionic acid, 2,2-dimethylolbutanoic acid, dimethylolheptanoic acid, dimethylolnonanoic acid, 2,2-dimethylolbutyric acid and 2,2-dimethylolvaleric acid, lactone ring-opening addition products of these dihydroxycarboxylic acids, glycine, 1-carboxy-1,5-pentylenediamine, dihydroxybenzoic acid, 3,5-diaminobenzoic acid, lysine, arginine, and the like.

Examples of active hydrogen-containing compounds having sulfonic acid groups include 2-amino-1-ethanesulfonic acid, N,N-bis(2-hydroxyethyl)-2-aminoethanesulfonic acid, 1,3-phenylenediamine-4,6-disulfonic acid, diaminobutanesulfonic acid, 3,6-diamino-2-toluenesulfonic acid, 2,4-diamino-5-toluenesulfonic acid, 2-(cyclohexylamino)-ethanesulfonic acid and 3-(cyclohexylamino)-propanesulfonic acid.

Examples of active hydrogen-containing compounds having phosphate groups include 2,3-dihydroxypropylphenyl phosphate, hydroxyalkylphosphonic acids and aminoalkylphosphonic acids.

When the active hydrogen-containing compound having a hydrophilic group is to be reacted with some of the isocyanate groups in the polyisocyanate compound ($b_1$), the proportion of the polyisocyanate compound ($b_1$) and the

active hydrogen-containing compound having a hydrophilic group is preferably such that the number of moles of active hydrogen in the active hydrogen-containing compound is in the range of about 0.03 to about 0.6 mol based on 1 mol of isocyanate groups in the polyisocyanate compound ($b_1$), from the viewpoint of storage stability and curability of the aqueous first pigmented coating composition (X), and smoothness, sharpness, water resistance and reduction in pinhole popping for the multilayer coating film that is to be formed.

This proportion is more preferably about 0.4 or less and even more preferably about 0.3 or less from the viewpoint of curability of the aqueous first pigmented coating composition (X) and water resistance of the multilayer coating film that is to be formed. The proportion is also more preferably about 0.04 or greater and more preferably about 0.05 or greater from the viewpoint of storage stability of the aqueous first pigmented coating composition (X) and smoothness, sharpness and reduction in pinhole popping for the multilayer coating film that is to be formed.

The blocked polyisocyanate compound (B) may also be added as a mixture with a surfactant, for production of the aqueous first pigmented coating composition (X). The surfactant is preferably a nonionic surfactant and/or anionic surfactant, from the viewpoint of stability of the aqueous first pigmented coating composition (X).

[Blocked polyisocyanate compound precursor ($b_3$)]

The blocked polyisocyanate compound precursor ($b_3$) is a compound in which some or all of the isocyanate groups in a polyisocyanate compound ($b_1$) are blocked with an active methylene compound ($b_2$) by reacting the polyisocyanate compound ($b_1$) having two or more isocyanate groups in the molecule with the active methylene compound ($b_2$) .

As used herein, a blocked polyisocyanate compound precursor (b3) means a "precursor" which is a substance at a stage prior to production of the blocked polyisocyanate compound of the invention, and the blocked polyisocyanate compound precursor (b3) is also a blocked polyisocyanate compound in which the isocyanate groups are blocked.

The blocked polyisocyanate compound precursor ($b_3$) is preferably either or both a compound selected from the group consisting of blocked polyisocyanate compound precursors ($b_{31}$) having a blocked isocyanate group represented by the following formula (IV):

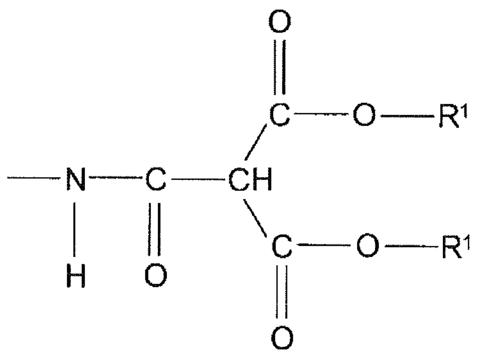

(IV)

wherein each $R^1$ independently represents an approximately C1-C12 hydrocarbon group, and may be the same or different, and

blocked polyisocyanate compound precursors ($b_{32}$) having a blocked isocyanate group represented by the following formula (V):

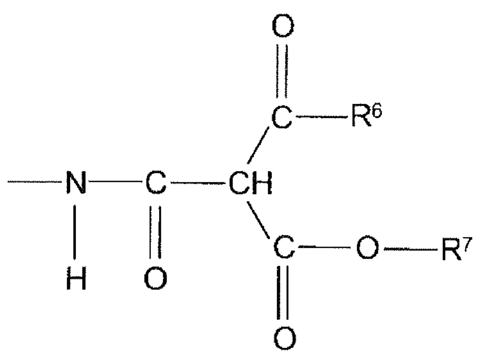

(V)

wherein $R^6$ and $R^7$ each independently represent an approximately C1-C12 hydrocarbon group.

[Blocked polyisocyanate compound precursor ($b_{31}$)]

The blocked polyisocyanate compound precursor ($b_{31}$) is preferably one wherein $R^1$ is an approximately C1-C3 alkyl group, from the viewpoint of allowing use of an active methylene compound that can be produced or obtained relatively easily as the active methylene compound ($b_2$), which is one of the starting materials for the blocked polyisocyanate compound (B).

From the viewpoint of improving compatibility between the blocked polyisocyanate compound (B) that is to be obtained and the other coating material components, $R^1$ is more preferably a C2 or C3 alkyl group, and from the viewpoint of storage stability of the aqueous first pigmented coating composition (X), and the smoothness and sharpness of the multilayer coating film that is to be formed, $R^1$ is more preferably an isopropyl group.

The blocked polyisocyanate compound precursor ($b_{31}$) may be obtained, for example, by reacting a polyisocyanate compound ($b_1$) with a dialkyl malonate having an approximately C1-C12 hydrocarbon group.

Examples of dialkyl malonates include dimethyl malonate, diethyl malonate, di-n-propyl malonate, diisopropyl malonate, di-n-butyl malonate, di-isobutyl malonate, di-sec-butyl malonate, di-tert-butyl malonate, di-n-pentyl malonate, di-n-hexyl malonate and di(2-ethylhexyl) malonate, as well as any desired combinations of the foregoing. The dialkyl malonate is preferably dimethyl malonate, diethyl malonate, di-n-propyl malonate, di-isopropyl malonate, di-n-butyl malonate, di-isobutyl malonate, di-sec-butyl malonate or di-tert-butyl malonate, more preferably diethyl malonate, di-n-propyl malonate or di-isopropyl malonate, and even more preferably di-isopropyl malonate.

[Blocked polyisocyanate compound precursor ($b_{32}$)]

The blocked polyisocyanate compound precursor ($b_{32}$) is preferably one wherein $R^6$ and $R^7$ are approximately C1-C3 alkyl groups, from the viewpoint of allowing use of an active methylene compound that can be produced or obtained relatively easily as the active methylene compound ($b_2$), which is one of the starting materials for the blocked polyisocyanate compound (B).

From the viewpoint of improving compatibility between the blocked polyisocyanate compound (B) that is to be obtained and the other coating material components, $R^6$ and $R^7$ are each more preferably a C2 or C3 alkyl group, and from the viewpoint of storage stability of the aqueous first pigmented coating composition (X), and the smoothness and sharpness of the multilayer coating film, $R^6$ and $R^7$ are more preferably isopropyl groups.

The blocked polyisocyanate compound precursor ($b_{32}$) can be obtained, for example, by (i) reacting a polyisocyanate compound ($b_1$) with an acetoacetic acid ester having an approximately C1-C12 hydrocarbon group, or (ii) reacting a polyisocyanate compound ($b_1$) with an isobutyrylacetic acid ester having an approximately C1-C12 hydrocarbon group. The blocked polyisocyanate compound precursor ($b_{32}$) is preferably one obtained by reacting a polyisocyanate compound ($b_1$) with an isobutyrylacetic acid ester having an approximately C1-C12 hydrocarbon group.

Examples for the isobutyrylacetic acid ester having an approximately C1-C12 hydrocarbon group include approximately C1-C12 alkyl esters of isobutyrylacetic acid, such as methyl isobutyrylacetate, ethyl isobutyrylacetate, n-propyl isobutyrylacetate, isopropyl isobutyrylacetate, n-butyl isobutyrylacetate, isobutyl isobutyrylacetate, sec-butyl isobutyrylacetate, tert-butyl isobutyrylacetate, n-pentyl isobutyrylacetate, n-hexyl isobutyrylacetate, 2-ethylhexyl isobutyrylacetate, phenyl isobutyrylacetate and benzyl isobutyrylacetate, as well as any desired combinations of the foregoing, with methyl isobutyrylacetate, ethyl isobutyrylacetate and isopropyl isobutyrylacetate being preferred.

Also, examples of acetoacetic acid esters having approximately C1-C12 hydrocarbon groups include approximately C1-C12 alkyl esters of acetoacetic acid such as methyl acetoacetate, ethyl acetoacetate, n-propyl acetoacetate, isopropyl acetoacetate, n-butyl acetoacetate, isobutyl acetoacetate, sec-butyl acetoacetate, tert-butyl acetoacetate, n-pentyl acetoacetate, n-hexyl acetoacetate, 2-ethylhexyl acetoacetate, phenyl acetoacetate and benzyl acetoacetate, as well as any desired combinations of the foregoing, with methyl acetoacetate, ethyl acetoacetate and isopropyl acetoacetate being preferred.

Also, the blocked polyisocyanate compound precursor ($b_3$) may be a compound obtained by reacting a polyisocyanate compound ($b_1$) having two or more isocyanate groups in the molecule, an active methylene compound ($b_2$) and the aforementioned active hydrogen-containing compound. Specifically, the aforementioned active hydrogen-containing compound with a polyoxyalkylene group, for example, may be used as the active hydrogen-containing compound, to produce a blocked polyisocyanate compound wherein some of the isocyanate groups in the polyisocyanate compound ($b_1$) are blocked with an active methylene compound ($b_2$), and some or all of the other isocyanate groups have reacted with the active hydrogen-containing compound having a polyoxyalkylene group.

[Secondary alcohol ($b_4$)]

The blocked polyisocyanate compound (B) can be produced, for example, by reacting a blocked polyisocyanate compound precursor ($b_3$) with a secondary alcohol, where the secondary alcohol is not particularly restricted but is

preferably a secondary alcohol ($b_4$) represented by the following formula (VI):

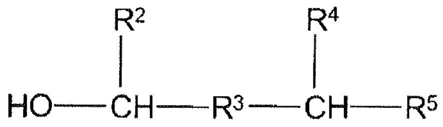

(VI)

wherein $R^2$, $R^4$ and $R^5$ each independently represent an approximately C1-C12 hydrocarbon group, and $R^3$ represents an approximately C1-C12 straightn or branched alkylene group.

In the secondary alcohol ($b_4$), $R^2$ is preferably a methyl group from the viewpoint of increasing reactivity with the blocked polyisocyanate compound precursor ($b_3$). Also, if $R^3$, $R^4$ and $R^5$ each have high carbon numbers the polarity of the obtained blocked polyisocyanate compound (B) may be reduced and compatibility with the other coating material components may be lowered, and therefore $R^3$ is preferably an approximately C1-C3 alkylene group, and $R^4$ and $R^5$ are preferably methyl groups.

Examples for the secondary alcohol ($b_4$) include 4-methyl-2-pentanol, 5-methyl-2-hexanol, 6-ethyl-2-heptanol and 7-methyl-2-octanol, as well as any desired combinations of the foregoing. The secondary alcohol ($b_4$) is preferably 4-methyl-2-pentanol which has a relatively low boiling point, since this will help facilitate its removal when some or all of the unreacted secondary alcohol ($b_4$) is distilled off following reaction between the blocked polyisocyanate compound precursor ($b_3$) and the secondary alcohol ($b_4$).

The blocked polyisocyanate compound (B) can be produced, for example, by reacting a blocked polyisocyanate compound precursor ($b_{31}$) having a blocked isocyanate group represented by the following formula (IV):

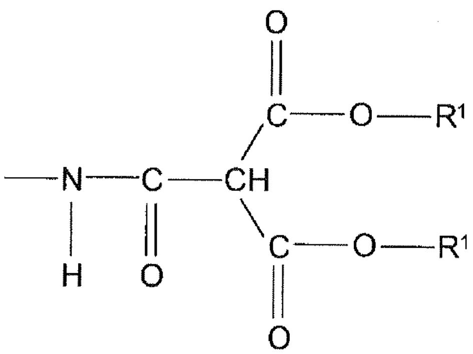

(IV)

wherein each $R^1$ independently represents an approximately C1-C12 hydrocarbon group, and may be the same or different,
with a secondary alcohol ($b_4$).

In this reaction, at least one of $R^1$ groups in the blocked isocyanate group in the blocked polyisocyanate compound precursor ($b_{31}$) is replaced with a group represented by the following formula (VII):

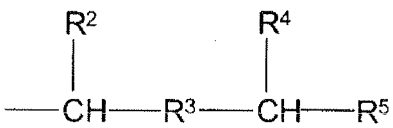

(VII)

wherein $R^2$, $R^4$ and $R^5$ each independently represent an approximately C1-C12 hydrocarbon group, and $R^3$ represents an approximately C1-C12 straight or branched alkylene group.

In the reaction, the obtained blocked polyisocyanate compound (B) has a blocked isocyanate group represented by the following formula (I):

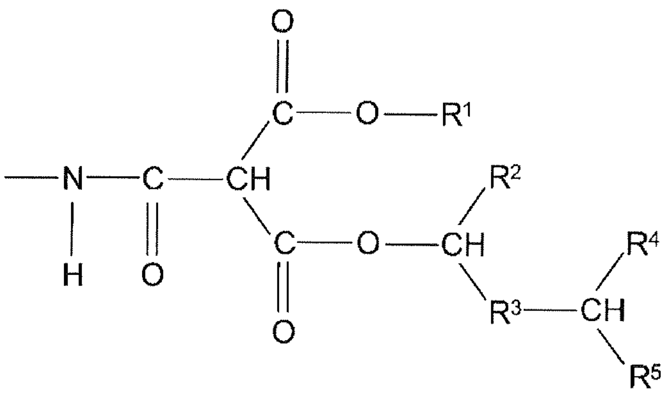

(I)

wherein $R^1$, $R^2$, $R^4$ and $R^5$ each independently represent an approximately C1-C12 hydrocarbon group and $R^3$ represents an approximately C1-C12 straight or branched alkylene group,
or a blocked isocyanate group represented by the following formula (II):

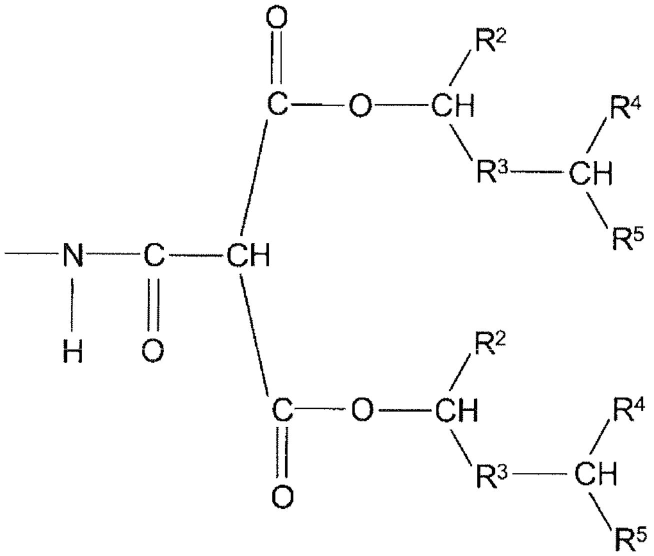

(II)

wherein $R^2$, $R^3$, $R^4$ and $R^5$ are as defined above.

The reaction between the blocked polyisocyanate compound precursor ($b_{31}$) and the secondary alcohol ($b_4$) is not particularly restricted so long as it is a production method that, for example, allows at least one of $R^1$ groups of the blocked isocyanate group in the blocked polyisocyanate compound precursor ($b_{31}$) to be replaced by a group represented by formula (VII). For the production method, preferably some or all of the alcohols derived from at least one $R^1$ group in the blocked polyisocyanate compound precursor ($b_{31}$) are distilled out of the system by heating and pressure reduction or the like, and reaction is promoted to obtain a blocked polyisocyanate compound (B) having a blocked isocyanate group represented by formula (I) or (II).

The production method, specifically, is conducted at a temperature of preferably about 20 to 150°C and more preferably about 75 to 95°C, optionally with pressure reduction, preferably for between about 5 minutes and about 20 hours, and more preferably between about 10 minutes and about 10 hours, to remove some or all of the alcohols. If the temperature is too low, the substitution reaction of alkoxy groups in the blocked polyisocyanate compound precursor ($b_{31}$) will be delayed and the production efficiency may be reduced, while if the temperature is too high, decomposing degradation of the obtained blocked polyisocyanate compound (B) will become more severe and the curability may be lowered.

In addition, the blocked polyisocyanate compound (B) can be produced by reacting a blocked polyisocyanate compound precursor ($b_{32}$) having a blocked isocyanate group represented by the following formula (V):

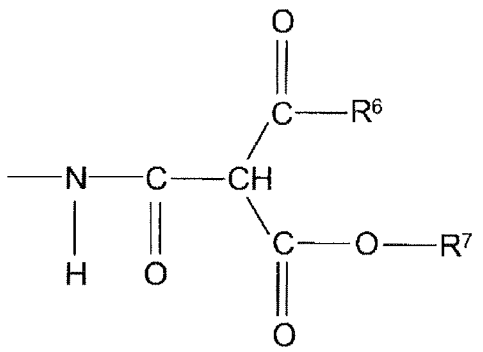

(V)

wherein $R^6$ and $R^7$ each independently represent an approximately C1-C12 hydrocarbon group, with a secondary alcohol ($b_4$).

In this reaction, $R^7$ group of the blocked isocyanate group in the blocked polyisocyanate compound precursor ($b_{32}$) is replaced with a group represented by the following formula (VII):

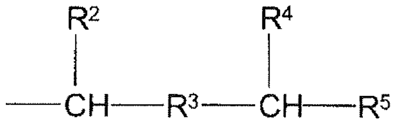

(VII)

wherein $R^2$, $R^4$ and $R^5$ each independently represent an approximately C1-C12 hydrocarbon group, and $R^3$ represents an approximately C1-C12 straight or branched alkylene group.

In the reaction, the obtained blocked polyisocyanate compound (B) has a blocked isocyanate group represented by the following formula (III):

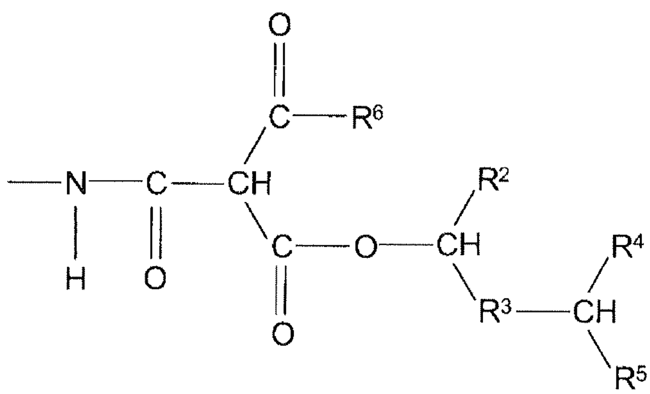

(III)

wherein $R^2$, $R^3$, $R^4$ and $R^5$ are as defined above, and $R^6$ represents an approximately C1-C12 hydrocarbon group.

The reaction between the blocked polyisocyanate compound precursor ($b_{32}$) and the secondary alcohol ($b_4$) is not particularly restricted so long as it is a production method that, for example, allows $R^7$ group of the blocked isocyanate group in the blocked polyisocyanate compound precursor ($b_{32}$) to be replaced by a group represented by formula (VII). For the production method, preferably some or all of the alcohols derived from $R^7$ group in the blocked polyisocyanate compound precursor ($b_{32}$) are distilled out of the system by heating and pressure reduction or the like, and reaction is promoted to obtain a blocked polyisocyanate compound (B) having a blocked isocyanate group represented by formula (III).

The production method, specifically, is conducted at a temperature of preferably about 20 to 150°C and more preferably about 75 to 95°C, optionally with pressure reduction, preferably for between about 5 minutes and about 20 hours and more preferably between about 10 minutes and about 10 hours, to remove some or all of the alcohols. If the temperature is too low, the substitution reaction of alkoxy groups in the blocked polyisocyanate compound precursor ($b_{32}$) will be delayed and the production efficiency may be reduced, while if the temperature is too high, decomposing degradation of the obtained blocked polyisocyanate compound (B) will become more severe and the curability may be lowered.

Also, the amounts of the blocked polyisocyanate compound precursor ($b_3$) and the secondary alcohol ($b_4$) for

production of the blocked polyisocyanate compound (B), from the viewpoint of reactivity of the blocked polyisocyanate compound (B) that is to be obtained and production efficiency, are such that the secondary alcohol ($b_4$) is preferably in the range of about 5 to about 500 parts by mass and more preferably in the range of about 10 to about 200 parts by mass with respect to 100 parts by solid mass of the blocked polyisocyanate compound precursor ($b_3$). If the amount of the secondary alcohol ($b_4$) is less than about 5 parts by mass, the reaction rate between the blocked polyisocyanate compound precursor ($b_3$) and the secondary alcohol ($b_4$) may be too slow. Also, if the amount of the secondary alcohol ($b_4$) is greater than about 500 parts by mass, the concentration of the produced blocked polyisocyanate compound (B) may be too low, lowering the production efficiency.

Also, during reaction between the blocked polyisocyanate compound precursor ($b_3$) and the secondary alcohol ($b_4$), the aforementioned removal procedure may be carried out after adding the polyfunctional hydroxyl-containing compound to the blocked polyisocyanate compound precursor ($b_3$) and the secondary alcohol ($b_4$), in order to modify the molecular weight of the blocked polyisocyanate compound (B).

The number-average molecular weight of the blocked polyisocyanate compound (B) is preferably in the range of about 600 to about 30,000, from the viewpoint of compatibility with the other coating material components, and the smoothness, sharpness, water resistance and chipping resistance of the multilayer coating film that is to be formed. The number-average molecular weight is also more preferably about 10,000 or less and even more preferably about 5,000 or less from the viewpoint of compatibility with the other coating material components and smoothness and sharpness of the multilayer coating film that is to be formed. The number-average molecular weight is also more preferably about 900 or greater and even more preferably about 1,000 or greater from the viewpoint of the water resistance and chipping resistance of the multilayer coating film that is to be formed.

[Aqueous first pigmented coating composition (X)]

The aqueous first pigmented coating composition (X) to be used in the multilayer coating film-forming method of the invention is an aqueous coating composition containing a hydroxyl-containing resin (A) and a blocked polyisocyanate compound (B).

The proportion of the hydroxyl-containing resin (A) and the blocked polyisocyanate compound (B) in the aqueous first pigmented coating composition (X) is in the range of preferably about 95/5 to about 10/90, more preferably about 90/10 to about 30/70 and even more preferably about 85/15 to about 50/50, as the solid mass ratio of the hydroxyl-containing resin (A) and the blocked polyisocyanate compound (B) (hydroxyl-containing resin (A)/blocked polyisocyanate compound (B)). This is from the viewpoint of the smoothness, sharpness, water resistance and chipping resistance of the multilayer coating film that is to be formed.

Also, the aqueous first pigmented coating composition (X) may further contain a curing agent other than the blocked polyisocyanate compound (B). The curing agent may be a known curing agent, and especially an amino resin.

The amino resin may be a partial methylolated amino resin or total methylolated amino resin, obtained by reacting an amino component and an aldehyde component. Examples of such amino components include melamine, urea, benzoguanamine, acetoguanamine, steroguanamine, spiroguanamine and dicyandiamide. Examples of aldehyde components include formaldehyde, paraformaldehyde, acetaldehyde and benzaldehyde.

Also, the amino resin may be one wherein the methylol groups of a methylolated amino resin are partially or totally etherified with an alcohol. Examples of alcohols to be used for the etherification include methyl alcohol, ethyl alcohol, n-propyl alcohol, isopropyl alcohol, n-butyl alcohol, isobutyl alcohol, 2-ethylbutanol and 2-ethylhexanol.

The amino resin is preferably a melamine resin, and most preferably it is a methyl etherified melamine resin wherein the methylol groups of a partially or totally methylolated melamine resin are partially or totally etherified with methyl alcohol, a butyl etherified melamine resin wherein the methylol groups of a partially or totally methylolated melamine resin are partially or totally etherified with butyl alcohol, or a methyl-butyl mixed etherified melamine resin wherein the methylol groups of a partially or totally methylolated melamine resin are partially or totally etherified with methyl alcohol and butyl alcohol.

Also, from the viewpoint of improving the water resistance of the coating film that is to be obtained, the melamine resin has a weight-average molecular weight of preferably about 400 to about 6,000, more preferably about 500 to about 4,000 and even more preferably about 600 to about 3,000.

Melamine resins are commercially available, and examples include "SAIMEL 202", "SAIMEL 203", "SAIMEL 238", "SAIMEL 251", "SAIMEL 303", "SAIMEL 323", "SAIMEL 324", "SAIMEL 325", "SAIMEL 327", "SAIMEL 350", "SAIMEL 385", "SAIMEL 1156", "SAIMEL 1158", "SAIMEL 1116" and "SAIMEL 1130" (all products of Nihon Cytec Industries Inc.), and "U-VAN 120", "U-VAN 20HS", "U-VAN 20SE60", "U-VAN 2021", "U-VAN 2028" and "U-VAN 28-60" (all products of Mitsui Chemicals, Inc.).

When the aqueous first pigmented coating composition (X) contains a melamine resin as the curing agent, the aqueous first pigmented coating composition (X) contains the melamine resin in a range of preferably about 1 to about 50 parts by mass and more preferably about 5 to about 30 parts by mass, based on 100 parts by mass as the total solid

content of the hydroxyl-containing resin (A) and the blocked polyisocyanate compound (B).

The aqueous first pigmented coating composition (X) preferably further contains a pigment. Examples for the pigment include color pigments, extender pigments and brightness pigments, as well as any desired combinations of the foregoing.

The pigment is preferably a color pigment and/or extender pigment, and the aqueous first pigmented coating composition (X) contains the color pigment and extender pigment in a range of preferably about 1 to about 500 parts by mass, more preferably about 3 to about 400 parts by mass and even more preferably about 5 to about 300 parts by mass, based on 100 parts by mass as the total solid content of the hydroxyl-containing resin (A) and the blocked polyisocyanate compound (B).

Examples for the color pigment include titanium oxide, zinc oxide, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, diketopyrrolopyrrole-based pigments and the like, as well as any desired combinations of the foregoing, with titanium oxide and carbon black being preferred.

When the aqueous first pigmented coating composition (X) contains the aforementioned color pigment, the aqueous first pigmented coating composition (X) contains the color pigment in a range of preferably about 1 to about 300 parts by mass, more preferably about 3 to about 250 parts by mass and even more preferably about 5 to about 200 parts by mass, based on 100 parts by mass as the total solid content of the hydroxyl-containing resin (A) and the blocked polyisocyanate compound (B).

Also, examples for the extender pigment include clay, kaolin, barium sulfate, barium carbonate, calcium carbonate, talc, silica, alumina white and the like, with barium sulfate and/or talc being preferred and barium sulfate being more preferred. In order to obtain a multilayer coating film having an outer appearance with excellent smoothness, the extender pigment is preferably barium sulfate having a mean primary particle size of 1 μm or less, and especially barium sulfate having a mean primary particle size in the range of about 0.01 to about 0.8 μm.

According to the invention, the mean primary particle size of barium sulfate is the value determined by observing the barium sulfate with a scanning electron microscope and averaging the maximum diameters of 20 barium sulfate particles on a straight line drawn randomly on the electron micrograph.

When the aqueous first pigmented coating composition (X) contains the aforementioned extender pigment, the aqueous first pigmented coating composition (X) contains the extender pigment in a range of preferably about 1 to about 300 parts by mass, more preferably about 5 to about 250 parts by mass and even more preferably about 10 to about 200 parts by mass, based on 100 parts by mass as the total solid content of the hydroxyl-containing resin (A) and the blocked polyisocyanate compound (B).

Also, examples for the brightness pigment include aluminum (including vapor deposited aluminum), copper, zinc, brass, nickel, aluminum oxide, mica, aluminum oxide covered by titanium oxide or iron oxide, mica covered by titanium oxide or iron oxide, glass flakes, hologram pigments and the like, as well as any desired combinations of the foregoing. The aforementioned aluminum pigments include non-leafing-type aluminum and leafing-type aluminum.

When the aqueous first pigmented coating composition (X) contains the aforementioned brightness pigment, the aqueous first pigmented coating composition (X) contains the brightness pigment in a range of preferably about 1 to about 50 parts by mass, more preferably about 2 to about 30 parts by mass and even more preferably about 3 to about 20 parts by mass, based on 100 parts by mass as the total solid content of the hydroxyl-containing resin (A) and the blocked polyisocyanate compound (B).

The aqueous first pigmented coating composition (X) preferably further contains a hydrophobic solvent from the viewpoint of the smoothness and sharpness of the coating film that is to be formed.

The hydrophobic solvent is an organic solvent with a soluble mass in 100 g of water at 20°C of about 10 g or less, preferably about 5 g or less and more preferably about 1 g or less.

Examples for the organic solvent include hydrocarbon-based solvents such as rubber volatile oils, mineral spirits, toluene, xylene and solvent naphtha; alcohol-based solvents such as 1-hexanol, 1-octanol, 2-octanol, 2-ethyl-l-hexanol, 1-decanol, benzyl alcohol, ethyleneglycol mono-2-ethylhexyl ether, propyleneglycol mono-n-butyl ether, dipropyleneglycol mono-n-butyl ether, tripropyleneglycol mono-n-butyl ether, propyleneglycol mono-2-ethylhexyl ether and propyleneglycol monophenyl ether; ester-based solvents such as n-butyl acetate, isobutyl acetate, isoamyl acetate, methylamyl acetate and ethylene glycol monobutyl acetate ether; ketone-based solvents such as methyl isobutyl ketone, cyclohexanone, ethyl n-amyl ketone and diisobutyl ketone; and any desired combinations of the foregoing.

Preferred as the hydrophobic solvent are alcohol-based hydrophobic solvents, more preferred are approximately C7-C14 alcohol-based hydrophobic solvents, and even more preferred are one or more types of alcohol-based hydrophobic solvents selected from the group consisting of 1-octanol, 2-octanol, 2-ethyl-1-hexanol, ethylene glycol mono-2-ethylhexyl ether, propyleneglycol mono-n-butyl ether and dipropyleneglycol mono-n-butyl ether.

When the aqueous first pigmented coating composition (X) contains a hydrophobic solvent, the aqueous first pigmented coating composition (X) contains the hydrophobic solvent in a range of preferably about 2 to about 100 parts

by mass, more preferably about 5 to about 80 parts by mass and even more preferably about 8 to about 60 parts by mass, based on 100 parts by mass as the total solid content of the hydroxyl-containing resin (A) and the blocked polyisocyanate compound (B).

Also, the aqueous first pigmented coating composition (X) may further contain, optionally, paint additives such as thickening agents, curing catalysts, ultraviolet absorbers, light stabilizers, antifoaming agents, plasticizers, organic solvents other than the aforementioned hydrophobic solvents, surface control agents, anti-settling agents and the like.

Examples for the thickening agent include inorganic thickening agents such as silicates, metal silicates, montmorillonite and colloidal alumina; polyacrylic acid-based thickening agents such as copolymers of (meth)acrylic acids and (meth)acrylic acid esters and sodium polyacrylate; associative thickening agents having a hydrophilic portion and a hydrophobic portion in the molecule and exhibiting a thickening effect when the hydrophobic portion is adsorbed onto the surface of the pigment or emulsion particle in the coating material in an aqueous medium, such that the hydrophobic portions become associated together; cellulosic derivative-based thickening agents such as carboxymethyl cellulose, methyl cellulose and hydroxyethyl cellulose; protein-based thickening agents such as casein, sodium caseinate and ammonium caseinate; alginic acid-based thickening agents such as sodium alginate; polyvinyl-based thickening agents such as polyvinyl alcohol, polyvinylpyrrolidone and polyvinylbenzyl ether copolymer; polyether-based thickening agents such as Pluronic polyethers, polyether dialkyl esters, polyether dialkyl ethers and polyether epoxy-modified compounds; maleic anhydride copolymer-based thickening agents such as partial esters of vinyl methyl ether-maleic anhydride copolymers; and polyamide-based thickening agents such as polyamide amine salts, as well as any desired combinations of the foregoing.

The aforementioned polyacrylic acid-based thickening agents are commercially available, and examples include "ACRYSOL ASE-60", "ACRYSOL TT-615" and "ACRYSOL RM-5" (all trade names) by Rohm & Haas, and "SN THICKENER 613", "SN THICKENER 618", "SN THICKENER 630", "SN THICKENER 634" and "SN THICKENER 636" (all trade names) by San Nopco, Ltd.

The aforementioned associative thickening agents are also commercially available, and examples include "UH-420", "UH-450", "UH-462", "UH-472", "UH-540", "UH-752", "UH-756 VF" and "UH-814N" (all trade names) by Adeka Corp., "ACRYSOL RM-8W", "ACRYSOL RM-825", "ACRYSOL RM-2020NPR", "ACRYSOL RM-12W" and "ACRYSOL SCT-275" (all trade names) by Rohm & Haas, and "SN THICKENER 612", "SN THICKENER 621N", "SN THICKENER 625N", "SN THICKENER 627N" and "SN THICKENER 660T" (all trade names) by San Nopco, Ltd.

The thickening agent is preferably a polyacrylic acid-based thickening agent and/or associative thickening agent, with associative thickening agents being more preferred, and urethane associative thickening agents having hydrophobic groups on the ends and containing urethane bonds in the molecular chain being even more preferred. The aforementioned urethane associative thickening agents are commercially available, and examples include "UH-420", "UH-462", "UH-472", "UH-540", "UH-752", "UH-756 VF" and "UH-814N" (all trade names) by Adeka Corp. and "SN THICKENER 612", "SN THICKENER 621N", "SN THICKENER 625N", "SN THICKENER 627N" and "SN THICKENER 660T" (all trade names) by San Nopco, Ltd.

When the aqueous first pigmented coating composition (X) contains a thickening agent, the aqueous first pigmented coating composition (X) contains the thickening agent in a range of preferably about 0.01 to about 15 parts by mass, more preferably about 0.05 to about 10 parts by mass and even more preferably about 0.1 to about 5 parts by mass, based on 100 parts by mass as the total solid content of the hydroxyl-containing resin (A) and the blocked polyisocyanate compound (B).

The aqueous first pigmented coating composition (X) may be prepared by mixing and dispersing the hydroxyl-containing resin (A) and the blocked polyisocyanate compound (B), and optionally a pigment, hydrophobic solvent and other paint additives, in an aqueous medium, by a common method. Also, the aqueous medium may be deionized water or a mixture of deionized water and a hydrophilic organic solvent. Examples of hydrophilic organic solvents include ethyleneglycol monobutyl ether and propyleneglycol monomethyl ether.

The aqueous first pigmented coating composition (X) has a solid concentration in the range of preferably about 30 to about 80 mass%, more preferably about 40 to about 70 mass% and even more preferably about 45 to about 60 mass%.

As used herein, the "solid content" of the coating material, resin and other components refers to the non-volatile components remaining after drying at 110°C for 1 hour. For example, the solid content of the coating material is the non-volatile components of the base resin, curing agent, pigment, etc. remaining in the coating material after drying at 110°C for 1 hour. Thus, the solid concentration of the coating material can be calculated by measuring the uncured coating material in a heat-proof container such as an aluminum foil cup, spreading the coating material on the bottom of the container and then drying at 110°C for 1 hour, and measuring the mass of the coating material components remaining after drying to determine the ratio of the mass of the coating material components remaining after drying with respect to the total mass of the coating material before drying.

There are no particular restrictions on the method of coating the aqueous first pigmented coating composition (X), and examples include air spray coating, airless spray coating, rotary atomizing coating, curtain coating and the like,

with air spray coating and rotary atomizing coating being preferred. If desired, an electrostatic charge may be applied during the coating.

The aqueous first pigmented coating composition (X) is coated to a cured film thickness in the range of preferably about 5 to about 70 μm, more preferably about 10 to about 50 μm and even more preferably about 15 to about 40 μm.

The reason for which a coating film with excellent smoothness and sharpness and with prevented or minimized pinhole popping can be formed by using the aqueous first pigmented coating composition (X) in the multilayer coating film-forming method of the invention is conjectured to be as follows.

Firstly, since the blocked polyisocyanate compound (B) in the aqueous first pigmented coating composition (X) has a hydrocarbon group with a branched structure, mixing between the first pigmented coating film formed from the aqueous first pigmented coating composition (X) and the second pigmented coating film formed from the aqueous second pigmented coating composition (Y) is inhibited, and the smoothness and sharpness are improved.

Secondly, affinity between the blocked polyisocyanate compound (B) and the solvent water of the aqueous first pigmented coating composition (X) is low and the water in the aqueous first pigmented coating composition (X) evaporates readily during heating of the coating film, thereby helping to prevent pinhole popping.

[Step (2)]

In step (2), the aqueous second pigmented coating composition (Y) is coated on the uncured first pigmented coating film that has been formed from the aqueous first pigmented coating composition (X).

Before applying the aqueous second pigmented coating composition (Y), the first pigmented coating film may be subjected to preheating, air blowing and the like under heating conditions that substantially do not cure the coating film. As used herein, a "cured coating film" is a coating film in a cured dry state as specified by JIS K 5600-1-1, i.e. a state in which, when the center of the coating surface is firmly held between the thumb and the forefinger, no fingerprint indentation is formed on the coating surface, no movement of the coating film is felt, and no rubbing trace remains on the coating surface when the center of the coating surface is rapidly rubbed with the fingertips. On the other hand, an "uncured coating film" is a state in which the coating film has not reached the cured dry state, and this also includes a tack-free state and semi-cured dry state as specified by JIS K 5600-1-1.

The preheating is carried out by heating at a temperature of preferably about 40 to about 100°C, more preferably about 50 to about 90°C and even more preferably about 60 to about 80°C, preferably for about 30 seconds to about 15 minutes, more preferably about 1 minute to about 10 minutes and even more preferably about 2 minutes to about 5 minutes. Air blowing may be carried out by blasting the coated surface of the article to be coated with heated air at a temperature of usually ordinary temperature or about 25 to about 80°C, for a period of about 30 seconds to about 15 minutes.

From the viewpoint of improving the smoothness and sharpness of the multilayer coating film that is to be formed and of minimizing pinhole popping, the first pigmented coating film may optionally be subjected to preheating, air blowing or the like before application of the aqueous second pigmented coating composition (Y), to adjust the solid content of the coating film to within a range of preferably about 60 to about 100 mass%, more preferably about 80 to about 100 mass% and even more preferably about 90 to about 100 mass%.

The solid content of the coating film can be measured in the following manner.

The aqueous first pigmented coating composition (X) is applied onto aluminum foil whose mass ($W_1$) has been measured beforehand, simultaneously with application of the aqueous first pigmented coating composition (X) on the article to be coated. Next, following the application, the aluminum foil that has been preheated, etc. is recovered immediately before the aqueous second pigmented coating composition (Y) is coated, and its mass ($W_2$) is measured. The recovered aluminum foil is then dried at 110°C for 60 minutes and allowed to cool to room temperature in a desiccator, after which the mass ($W_3$) of the aluminum foil is measured and the solid content is calculated by the following formula.

$$\text{Solid content (mass\%)} = \{(W_3-W_1)/(W_2-W_1)\} \times 100$$

The aqueous second pigmented coating composition (Y) to be coated on the first pigmented coating film is generally for the purpose of imparting an excellent outer appearance to the article to be coated, and for example, it may be a coating material having a base resin such as an acrylic resin, polyester resin, alkyd resin, urethane resin or epoxy resin having crosslinkable functional groups such as carboxyl and hydroxyl, and a resin component composed of a curing agent such as an optionally blocked polyisocyanate compound, melamine resin or urea resin, dissolved or dispersed in water together with a pigment and other additives. The aqueous second pigmented coating composition (Y) is preferably a thermosetting aqueous coating material containing a hydroxyl-containing resin (A) as the base resin and a melamine resin as the curing agent.

Also, the pigment may be any of the aforementioned color pigments, extender pigments or brightness pigments, and the aqueous second pigmented coating composition (Y) preferably contains at least one of the aforementioned color pigments and brightness pigments.

Examples for the color pigment include titanium oxide, zinc oxide, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, diketopyrrolopyrrole-based pigments and the like, which were listed above in explaining the aqueous first pigmented coating composition (X).

When the aqueous second pigmented coating composition (Y) contains such a color pigment, the aqueous second pigmented coating composition (Y) contains the color pigment in a range of preferably about 1 to about 150 parts by mass, more preferably about 3 to about 130 parts by mass and even more preferably about 5 to about 110 parts by mass, based on 100 parts by mass as the resin solid content.

Examples for the brightness pigment include aluminum (including vapor deposited aluminum), copper, zinc, brass, nickel, aluminum oxide, mica, aluminum oxide covered by titanium oxide or iron oxide, mica covered by titanium oxide or iron oxide, glass flakes, hologram pigments and the like, which were listed above in explaining the aqueous first pigmented coating composition (X). Preferred among these are aluminum, aluminum oxide, mica, aluminum oxide covered by titanium oxide or iron oxide, mica covered by titanium oxide or iron oxide, and any desired combinations of the foregoing, with aluminum being especially preferred.

Also, the brightness pigment is preferably scaly. Preferred as brightness pigments are those having lengthwise dimensions in the range of about 1 to about 100 $\mu$m and more preferably about 5 to about 40 $\mu$m, and thicknesses in the range of about 0.001 to about 5 $\mu$m and more preferably about 0.01 to about 2 $\mu$m.

When the aqueous second pigmented coating composition (Y) contains such a brightness pigment, the aqueous second pigmented coating composition (Y) contains the brightness pigment in a range of preferably about 1 to about 50 parts by mass, more preferably about 2 to about 30 parts by mass and even more preferably about 3 to about 20 parts by mass, based on 100 parts by mass as the resin solid content.

Also, the aqueous second pigmented coating composition (Y) preferably contains a hydrophobic solvent mentioned in explaining the aqueous first pigmented coating composition (X). From the viewpoint of improving the sheen quality of the coating film that is to be formed, the hydrophobic solvent is preferably an alcohol-based hydrophobic solvent, and more preferably an approximately C7-C14 alcohol-based hydrophobic solvent, such as at least one alcohol-based hydrophobic solvent selected from the group consisting of 1-octanol, 2-octanol, 2-ethyl-1-hexanol, ethyleneglycol mono-2-ethylhexyl ether, propyleneglycol mono-n-butyl ether and dipropyleneglycol mono-n-butyl ether.

When the aqueous second pigmented coating composition (Y) contains such a hydrophobic solvent, the aqueous second pigmented coating composition (Y) contains the hydrophobic solvent in a range of preferably about 2 to about 70 parts by mass, more preferably about 11 to about 60 parts by mass and even more preferably about 16 to about 50 parts by mass, based on 100 parts by mass as the resin solid content. This is from the viewpoint of improving the sheen quality of the coating film that is to be obtained.

Also, the aqueous second pigmented coating composition (Y) may further contain, optionally, common paint additives such as curing catalysts, thickening agents, ultraviolet absorbers, light stabilizers, antifoaming agents, plasticizers, organic solvents, surface control agents, anti-settling agents and the like, as well as any desired combinations of the foregoing.

The method of coating the aqueous second pigmented coating composition (Y) may be a known method such as air spraying, airless spraying, rotary atomizing coating or the like, and an electrostatic charge may also be applied during the coating. The aqueous second pigmented coating composition (Y) is coated to a cured film thickness in a range of preferably about 5 to about 80 $\mu$m, more preferably about 8 to about 60 $\mu$m and even more preferably about 10 to about 50 $\mu$m.

[Step (3)]

In step (3), a clear coating composition (Z) is coated on the uncured second pigmented coating film that has been formed from the aqueous second pigmented coating composition (Y).

From the viewpoint of preventing coating defects such as pinhole popping, the uncured second pigmented coating film is preferably subjected to preheating, air blowing or the like under heating conditions in which the coating film substantially does not cure, before application of the clear coating composition (Z). The preheating is carried out by heating at a temperature of preferably about 40 to about 100°C, more preferably about 50 to about 90°C and even more preferably about 60 to about 80°C, preferably for about 30 seconds to about 15 minutes, more preferably about 1 minute to about 10 minutes and even more preferably about 2 minutes to about 5 minutes. Air blowing may generally be carried out by blasting the coated surface of the article to be coated with heated air at a temperature of ordinary temperature or about 25°C to about 80°C, for a period of about 30 seconds to about 15 minutes.

The uncured second pigmented coating film may optionally be subjected to preheating, air blowing or the like

before application of the clear coating composition (Z), to adjust the solid content of the coating film to within a range of preferably about 70 to about 100 mass%, more preferably about 80 to about 100 mass% and even more preferably about 90 to about 100 mass%.

The clear coating composition (Z) may be a thermosetting clear coating material composition that is known for coating onto automobile bodies and the like. The clear coating composition (Z) may be, for example, an organic solvent-type thermosetting coating composition, an aqueous thermosetting coating composition, a powder thermosetting coating composition, or the like, containing a base resin with a crosslinkable functional group, and a crosslinking agent.

Examples of crosslinkable functional groups in the base resin include carboxyl, hydroxyl, epoxy and silanol groups. Examples of types for the base resin include acrylic resins, polyester resins, alkyd resins, urethane resins, epoxy resins and fluorine resins. Examples for the crosslinking agent include polyisocyanate compounds, blocked polyisocyanate compounds, melamine resins, urea resins, carboxyl group-containing compounds, carboxyl group-containing resins, epoxy group-containing resins and epoxy group-containing compounds.

Preferred examples of base resin/crosslinking agent combinations for the clear coating composition (Z) include carboxyl group-containing resin/epoxy group-containing resins, hydroxyl-containing resin/polyisocyanate compounds, hydroxyl-containing resin/blocked polyisocyanate compounds and hydroxyl-containing resin/melamine resin combinations.

The clear coating composition (Z) may be a one-pack type coating material, or a multi-pack type coating material such as a two-pack urethane resin coating material.

Also, the clear coating composition (Z) may contain, optionally, color pigments, brightness pigments, dyes and the like in ranges that do not impair the transparency, and may further contain extender pigments, ultraviolet absorbers, light stabilizers, antifoaming agents, thickening agents, rust-preventive agents, surface control agents and the like.

The clear coating composition (Z) can be applied onto the uncured second pigmented coating film formed from the aqueous second pigmented coating composition (Y), by a known method such as method of air spray coating, airless spray coating or rotary atomizing coating, and an electrostatic charge may also be applied during the coating. The clear coating composition (Z) is coated to a cured film thickness in the range of preferably about 10 to about 80 μm, more preferably about 15 to about 60 μm and even more preferably about 20 to about 50 μm.

After the clear coating composition (Z) has been applied and before heating in step (4), it may be optionally left for an interval of about 1 to about 60 minutes at room temperature, or preheated at a temperature of about 40°C to about 80°C for about 1 to about 60 minutes.

[Step (4)]

In step (4), the uncured first pigmented coating film, uncured second pigmented coating film and uncured clear coating film are heated for curing.

The uncured first pigmented coating film, uncured second pigmented coating film and uncured clear coating film can be cured by common coating film heating (baking) means, such as hot air heating, infrared ray heating or high-frequency heating.

The heating is carried out at a temperature of preferably 80°C to about 180°C, more preferably about 100°C to about 170°C and even more preferably about 120°C to about 160°C, preferably for about 10 to about 60 minutes and more preferably about 15 to about 40 minutes. The heating can accomplish curing of a multilayer coating film comprising three layers, the uncured first pigmented coating film, the uncured second pigmented coating film and the uncured clear coating film.

Specifically, the first multilayer coating film-forming method comprising steps (1) to (4) is preferably one wherein a multilayer coating film comprising the intercoating film, base coat coating film and clear coating film is formed on an article to be coated such as an automobile body by a 3-coat, 1-bake system. The first multilayer coating film-forming method may be carried out according to the following Method I, for example.

[Method I]

A multilayer coating film-forming method comprising the following steps (1) to (4):

step (1): coating an article to be coated with the aqueous first pigmented coating composition (X) to form an uncured intercoating film on the article to be coated,
step (2): coating the article to be coated, that has the uncured intercoating film, with an aqueous second pigmented coating composition (Y) to form an uncured base coating film thereover,
step (3): coating the article to be coated, that has the uncured intercoating film, and the uncured base coating film with a clear coating composition (Z), to form an uncured clear coating film thereover, and
step (4): heating the uncured intercoating film, the uncured base coating film and the uncured clear coating film to

cure them.

The article to be coated in Method I is preferably an automobile body having an undercoat coating film formed by cationic electrodeposition coating.

In Method I, the aqueous first pigmented coating composition (X) is coated to a cured film thickness in the range of preferably about 2 to about 40 μm, more preferably about 3 to about 30 μm and even more preferably about 5 to about 25 μm. Also, the aqueous second pigmented coating composition (Y) is coated to a cured film thickness in a range of preferably about 2 to about 20 μm, more preferably about 3 to about 18 μm and even more preferably about 5 to about 16 μm. Also, the clear coating composition (Z) is coated to a cured film thickness in the range of preferably about 10 to about 80 μm, more preferably about 5 to about 60 μm and even more preferably about 20 to about 50 μm.

The multilayer coating film-forming method according to Method I may be carried out, for example, by a 3-coat, 1-bake system in which the first pigmented coating film is applied in an intercoat application booth, the second pigmented coating film is applied in a base coat application booth and the clear coat is applied in a clear coat application booth. The multilayer coating film-forming method may be carried out according to the following Method I', for example.

[Method I']

A multilayer coating film-forming method comprising the following steps 1) to 4):

step 1): coating an article to be coated with the aqueous first pigmented coating composition (X) in an intercoat application booth to form an uncured intercoating film on the article to be coated,
step 2): coating the article to be coated, that has the uncured intercoating film, with an aqueous second pigmented coating composition (Y) in a base coat application booth, to form an uncured base coating film thereover,
step 3): coating the article to be coated, that has the uncured intercoating film and the uncured base coating film, with a clear coating composition (Z) in a clear coat application booth, to form an uncured clear coating film thereover, and
step 4): heating the uncured intercoating film, the uncured base coating film and the uncured clear coating film to cure them.

In order to ensure uniform coating quality, the booths are preferably equipment that keep the coating environment such as temperature and humidity within fixed ranges, and preferably the booths are separated according to the type of coating material to be applied. Also, in order to prevent dripping and unevenness of the coating material adhering to the article to be coated in the same booth, the same coating material may be applied in two separate stages. In this case, the first application is referred to as the "first stage application" and the second application is referred to as the "second stage application".

Also, the aforementioned preheating and air blowing may be carried out on the uncured intercoating film between step 1) and step 2) of Method I'. Likewise, the aforementioned preheating and air blowing may be carried out on the uncured base coating film between step 2) and step 3) of Method I'.

In Method I', the aqueous first pigmented coating composition (X) is coated to a cured film thickness in a range of preferably about 5 to about 40 μm, more preferably about 8 to about 30 μm and even more preferably about 10 to about 25 μm. Also, the aqueous second pigmented coating composition (Y) is coated to a cured film thickness in a range of preferably about 2 to about 20 μm, more preferably about 3 to about 18 μm and even more preferably about 5 to about 16 μm. The clear coating material composition is coated to a cured film thickness of preferably about 10 to about 80 μm, more preferably about 15 to about 60 μm and even more preferably about 20 to about 50 μm.

The multilayer coating film-forming method may also be carried out, for example, by a 3-coat, 1-bake system in which the first pigmented coating composition (X) is applied as a first stage in a base coat application booth, the second pigmented coating composition (Y) is applied as the second stage in the same booth, and the clear coat is applied in a clear coat application booth. The multilayer coating film-forming method may be carried out according to the following Method I'', for example.

[Method I'']

A multilayer coating film-forming method comprising the following steps 1) to 4):

step 1): coating an article to be coated with an aqueous first pigmented coating composition (X) as the first stage in a base coat application booth to form an uncured first base coating film on the article to be coated,
step 2): coating the article to be coated, that has the uncured first base coating film, with an aqueous second pigmented coating composition (Y) as the second stage in a base coat application booth, to form an uncured second

base coating film thereover,

step 3): coating the article to be coated, that has the uncured first base coating film and the uncured second base coating film, with a clear coating composition (Z) in a clear coat application booth, to form an uncured clear coating film thereover, and

step 4): heating the uncured first base coating film, the uncured second base coating film and the uncured clear coating film to cure them.

In method I'', different coating materials are used in the first stage and the second stage, unlike common 2-stage coating that employs the same coating material in the first stage and the second stage of the base coat application booth.

Method I'' is advantageous in that an intercoat application booth is unnecessary, allowing reduction in energy by the amount for adjustment of the temperature and humidity of the intercoat application booth.

Furthermore, in method I'' in which the first pigmented coating composition (X) and the second pigmented coating composition (Y) are coated in the base coat application booth, it is possible to eliminate installation of a heating device such as a preheater between the first pigmented coating composition (X) application and the second pigmented coating composition (Y) application. When no heating device is installed, it is possible to reduce energy by the amount for the preheater.

Furthermore, preheating, air blowing and the like may optionally be carried out on the base coating film between step 1) and step 2) and/or between step 2) and step 3) of method I''.

In Method I'', the aqueous first pigmented coating composition (X) is coated to a cured film thickness in a range of preferably about 2 to about 35 μm, more preferably about 3 to about 30 μm and even more preferably about 5 to about 25 μm. Also, the aqueous second pigmented coating composition (Y) is coated to a cured film thickness in a range of preferably about 2 to about 20 μm, more preferably about 3 to about 18 μm and even more preferably about 5 to about 16 μm. The clear coating material composition is coated to a cured film thickness of preferably about 10 to about 80 μm, more preferably about 15 to about 60 μm and even more preferably about 20 to about 50 μm.

[Step (5)]

The second multilayer coating film-forming method of the invention is a multilayer coating film-forming method in which step (5) is carried out after steps (1) and (2), eliminating steps (3) and (4) in the first multilayer coating film-forming method.

Step (5) is a step in which the uncured first pigmented coating film and the uncured second pigmented coating film formed in steps (1) and (2) are heated and cured.

The uncured first pigmented coating film and the uncured second pigmented coating film can be cured by common coating film heating means, such as hot air heating, infrared ray heating or high-frequency heating.

The heating is carried out at a temperature of preferably 80°C to about 180°C, more preferably about 100°C to about 170°C and even more preferably about 120°C to about 160°C, preferably for about 10 to about 60 minutes and more preferably about 15 to about 40 minutes. The heating can accomplish curing of a multilayer coating film comprising the uncured first pigmented coating film and the uncured second pigmented coating film.

Specifically, the second multilayer coating film-forming method comprising steps (1), (2) and (5) is preferably one wherein a multilayer coating film comprising the intercoating film and the top coating film is formed on an article to be coated such as an automobile body by a 2-coat, 1-bake system. The second multilayer coating film-forming method may be carried out according to the following Method II, for example.

[Method II]

A multilayer coating film-forming method comprising the following steps 1) to 3):

step 1) coating an article to be coated with the aqueous first pigmented coating composition (X) to form an uncured intercoating film on the article to be coated,

step 2) coating the article to be coated that has the uncured intercoating film with an aqueous second pigmented coating composition (Y) to form an uncured top coating film thereover, and

step 3) heating the uncured intercoating film and uncured top coating film, to cure them.

The article to be coated in Method II is preferably an automobile body having an undercoat coating film formed by cationic electrodeposition coating.

The multilayer coating film-forming method according to Method II is carried out, for example, by a 2-coat, 1-bake system in which the first pigmented coating film is applied in an intercoat application booth, and the second

pigmented coating film is applied in a base coat application booth. The multilayer coating film-forming method may be carried out according to the following Method II', for example.

[Method II']

A multilayer coating film-forming method comprising the following steps 1) to 3):

step 1) coating an article to be coated with an aqueous first pigmented coating composition (X) in an intercoat application booth, to form an uncured intercoating film on the article to be coated,
step 2) coating the article to be coated that has the uncured intercoating film with an aqueous second pigmented coating composition (Y) in a base coat application booth, to form an uncured top coating film thereover, and
step 3) heating the uncured intercoating film and uncured top coating film, to cure them.

The aforementioned preheating and air blowing may also be carried out on the uncured intercoating film between step 1) and step 2) of Method II'. The aforementioned preheating and air blowing may also be carried out on the uncured top coating film between step 2) and step 3) of Method II'.

In Method II', the aqueous first pigmented coating composition (X) is coated to a cured film thickness in a range of preferably about 2 to about 40 μm, more preferably about 3 to about 30 μm and even more preferably about 5 to about 25 μm. Also, the aqueous second pigmented coating composition (Y) is coated to a cured film thickness in a range of preferably about 2 to about 40 μm, more preferably about 3 to about 30 μm and even more preferably about 5 to about 20 μm.

The multilayer coating film-forming method may also be carried out, for example, by a 2-coat, 1-bake system in which the first pigmented coating composition (X) is applied as a first stage in a base coat application booth and the second pigmented coating composition (Y) is applied as the second stage in the same booth. The multilayer coating film-forming method may be carried out according to the following Method II'', for example.

[Method II'']

A multilayer coating film-forming method comprising the following steps 1) to 3):

step 1) coating an article to be coated with an aqueous first pigmented coating composition (X) as the first stage in a base coat application booth, to form an uncured first base coating film on the article to be coated,
step 2) coating the article to be coated, that has the uncured first base coating film, with an aqueous second pigmented coating composition (Y) as the second stage in a base coat application booth, to form an uncured second base coating film thereover, and
step 3) heating the uncured first base coating film and uncured second base coating film, to cure them.

In method II'', different coating materials are used in the first stage and the second stage, unlike common 2-stage coating that employs the same coating material in the first stage and the second stage of the base coat application booth.

Method II'' is advantageous in that an intercoat application booth is unnecessary, allowing reduction in energy by the amount for adjustment of the temperature and humidity of the intercoat application booth.

Furthermore, in method II'' in which the first pigmented coating composition (X) and the second pigmented coating composition (Y) are coated in the base coat application booth, there may be installed a heating device such as a preheater between the first pigmented coating composition (X) application and the second pigmented coating composition (Y) application. When no heating device is installed, it is possible to reduce energy by the amount for the preheater.

Furthermore, preheating, air blowing and the like may optionally be carried out on the base coating film between step 1) and step 2) and/or between step 2) and step 3) of method II''.

In Method II", the aqueous first pigmented coating composition (X) is coated to a cured film thickness in a range of preferably about 2 to about 35 μm, more preferably about 3 to about 30 μm and even more preferably about 5 to about 25 μm. Also, the aqueous second pigmented coating composition (Y) is coated to a cured film thickness in a range of preferably about 2 to about 35 μm, more preferably about 3 to about 30 μm and even more preferably about 5 to about 25 μm.

## Examples

The present invention will now be explained in greater detail using examples and comparative examples. However, it is to be understood that the invention is not limited only to these examples. The "parts" and "%" values are

all based on mass. Also, the film thicknesses of the coating films are based on the cured coating films.

[Production of hydroxyl-containing acrylic resin ($A_1$)]

[Production Example 1]

After charging 120 parts of deionized water and 0.8 part of "ADEKA REASOAP SR-1025" (trade name of Adeka Corp., emulsifying agent, active ingredient: 25%) into a reactor equipped with a thermometer, thermostat, stirrer, reflux condenser, nitrogen inlet tube and dropper, the mixture was stirred in a nitrogen stream and heated to 80°C.

Next, 5% of the total core section monomer emulsion described below and 2.5 parts of a 6% ammonium persulfate aqueous solution were introduced into the reactor, and the mixture was kept at 80°C for 15 minutes. The remainder of the core section monomer emulsion was then added dropwise into the reactor kept at the same temperature over a period of 3 hours, and upon completion of the dropwise addition the mixture was aged for 1 hour. Next, the shell section monomer emulsion was added dropwise over a period of 1 hour and aged for 1 hour, and the mixture was then cooled to 30°C while gradually adding 3.8 parts of a 5% 2-(dimethylamino)ethanol aqueous solution to the reactor, and subsequently discharged while filtering with a 100 mesh nylon cloth, to obtain a water-dispersible hydroxyl-containing acrylic resin ($A_1$-1) aqueous dispersion with a mean particle size of 100 nm and a solid content of 30%. The water-dispersible hydroxyl-containing acrylic resin ($A_1$-1) had an acid value of 24 mgKOH/g and a hydroxyl value of 11 mgKOH/g.

Core section monomer emulsion:

A core section monomer emulsion was obtained by stirred mixing of 54 parts of deionized water, 3.1 parts of "ADEKA REASOAP SR-1025", 2.3 parts of allyl methacrylate, 12.3 parts of styrene, 31.2 parts of n-butyl acrylate and 31.2 parts of methyl methacrylate.

Shell section monomer emulsion:

A shell section monomer emulsion was obtained by stirred mixing of 50 parts of deionized water, 1.8 parts of "ADEKA REASOAP SR-1025", 0.04 parts of ammonium persulfate, 2.3 parts of 2-hydroxyethyl acrylate, 3.7 parts of methacrylic acid, 3.7 parts of styrene, 9.2 parts of n-butyl acrylate and 4 parts of methyl methacrylate.

[Production Examples 2 to 6]

Aqueous dispersions of water-dispersible hydroxyl-containing acrylic resins ($A_1$-2) to ($A_1$-6) were obtained by the same procedure as Production Example 1, except for using the amounts listed in Table 1 below.

Table 1 shows the starting compositions (parts), solid concentrations (%), acid values (mgKOH/g) and hydroxyl values (mgKOH/g) of aqueous dispersions of the water-dispersible hydroxyl-containing acrylic resins ($A_1$-1) to ($A_1$-6).

Table 1

| | | | | 1 | 2 | 3 | 4 | 5 | 6 |
|---|---|---|---|---|---|---|---|---|---|
| Production Example | | | | 1 | 2 | 3 | 4 | 5 | 6 |
| Water-dispersible hydroxyl-containing acrylic resin ($A_1$) No. | | | | $A_1$-1 | $A_1$-2 | $A_1$-3 | $A_1$-4 | $A_1$-5 | $A_1$-6 |
| Deionized water | | | | 120 | 120 | 120 | 120 | 120 | 120 |
| ADEKA REASOAP SR-1025 | | | | 0.8 | 0.8 | 0.8 | 0.8 | 0.8 | 0.8 |
| 6% Ammonium persulfate aqueous solution | | | | 2.5 | 2.5 | 2.5 | 2.5 | 2.5 | 2.5 |
| Core section monomer emulsion | Deionized water | | | 54 | 54 | 54 | 54 | 54 | 54 |
| | ADEKA REASOAP SR-1025 | | | 3.1 | 3.1 | 3.1 | 3.1 | 3.1 | 3.1 |
| | Monomer ($I_1$) | | Allyl methacrylate | 2.3 | 2.3 | 2.3 | 2.3 | 2.3 | 2.3 |
| | Monomer ($I_2$) | Hydrophobic polymerizable unsaturated monomer | Styrene | 12.3 | 12.3 | 12.3 | 12.3 | 12.3 | - |
| | | | n-Butyl acrylate | 31.2 | 31.2 | 31.2 | 31.2 | 31.2 | - |
| | | | Methyl acrylate | 31.2 | 31.2 | 31.2 | 31.2 | 31.2 | 31.2 |
| | | | Ethyl acrylate | - | - | - | - | - | 43.5 |
| Shell section monomer emulsion | Deionized water | | | 50 | 50 | 50 | 50 | 50 | 50 |
| | ADEKA REASOAP SR-1025 | | | 1.8 | 1.8 | 1.8 | 1.8 | 1.8 | 1.8 |
| | Ammonium persulfate | | | 0.04 | 0.04 | 0.04 | 0.04 | 0.04 | 0.04 |
| | Hydroxyl-containing polymerizable unsaturated monomer ($II_1$) | | 2-Hydroxyethyl acrylate | 2.3 | 2.3 | 2.3 | 2.3 | 2.3 | 2.3 |
| | Carboxyl-containing polymerizable unsaturated monomer ($II_2$) | | Methacrylic acid | 3.7 | 8.2 | 4.5 | 1.6 | 0.1 | 3.7 |
| | Other polymerizable unsaturated monomers ($II_3$) | | Styrene | 3.7 | 3.7 | 3.7 | 3.7 | 3.7 | - |
| | | | n-Butyl acrylate | 9.2 | 4.7 | 9.2 | 9.2 | 9.2 | - |
| | | | Methyl methacrylate | 4 | 4 | 3.2 | 6.1 | 7.7 | 4 |
| | | | Ethyl acrylate | - | - | - | - | - | 12.9 |
| 5% 2-(Dimethylamino)ethanol aqueous solution | | | | 3.8 | 3.8 | 3.8 | 3.8 | 3.8 | 3.8 |
| Solid concentration [%] | | | | 30 | 30 | 30 | 30 | 30 | 30 |
| Acid value [mgKOH/g] | | | | 24 | - | 29 | 10 | 0.65 | 24 |
| Hydroxyl value [mgKOH/g] | | | | 11 | 11 | 11 | 11 | 11 | 11 |

The water-dispersible hydroxyl-containing acrylic resins ($A_1$-1) to ($A_1$-6) correspond to the core-shell type water-dispersible hydroxyl-containing acrylic resin ($A_{111}$).

[Production Example 7]

After charging 120 parts of deionized water and 0.8 part of "ADEKA REASOAP SR-1025" (trade name of Adeka Corp., emulsifying agent, active ingredient: 25%) into a reactor equipped with a thermometer, thermostat, stirrer, reflux condenser, nitrogen inlet tube and dropper, the mixture was stirred in a nitrogen stream and heated to 80°C.

Next, 5% of the total monomer emulsion (1) described below and 2.5 parts of a 6% ammonium persulfate aqueous solution were introduced into the reactor, and the mixture was kept at 80°C for 15 minutes. Next, the remainder of the monomer emulsion (1) was added dropwise into the reactor kept at the same temperature over a period of 3 hours, and upon completion of the dropwise addition it was aged for 1 hour, after which the mixture was cooled to 30°C while gradually adding 3.8 parts of a 5% 2-(dimethylamino)ethanol aqueous solution to the reactor, and discharged while filtering with a 100 mesh nylon cloth, to obtain a water-dispersible hydroxyl-containing acrylic resin ($A_1$-7) aqueous dispersion with a mean particle size of 100 nm and a solid content of 30%. The water-dispersible hydroxyl-containing acrylic resin ($A_1$-7) had an acid value of 24 mgKOH/g and a hydroxyl value of 11 mgKOH/g.

Monomer emulsion (1):

A monomer emulsion (1) was obtained by stirred mixing of 104 parts of deionized water, 4.9 parts of "ADEKA REASOAP SR-1025", 0.04 parts of ammonium persulfate, 2.3 parts of allyl methacrylate, 16.0 parts of styrene, 37.8 parts of n-butyl acrylate, 37.9 parts of methyl methacrylate, 2.3 parts of 2-hydroxyethyl acrylate and 3.7 parts of methacrylic acid.

The water-dispersible hydroxyl-containing acrylic resin ($A_1$-7) corresponds to the core-shell type water-dispersible hydroxyl-containing acrylic resin ($A_{11}$).

[Production of hydroxyl-containing polyester resin ($A_2$)]

[Production Example 8]

After charging 109 parts of trimethylolpropane, 141 parts of 1,6-hexanediol, 126 parts of 1,2-cyclohexanedicarboxylic anhydride and 120 parts of adipic acid into a reactor equipped with a thermometer, thermostat, stirrer, reflux condenser and water separator, and heating from 160°C to 230°C for a period of 3 hours, condensation reaction was conducted at 230°C for 4 hours while distilling off the produced condensation water with a water separator.

Next, 38.3 parts of trimellitic anhydride was further added for addition of carboxyl groups to the obtained condensation reaction product, reaction was conducted at 170°C for 30 minutes, and then dilution was performed with ethyleneglycol monobutyl ether to obtain a hydroxyl-containing polyester resin ($A_2$-1) solution with a solid concentration of 70%. The hydroxyl-containing polyester resin ($A_2$-1) had an acid value of 46 mgKOH/g, a hydroxyl value of 150 mgKOH/g and a number-average molecular weight of 1,400. The total content of alicyclic polybasic acid among the acid components of the starting composition was 46 mol% based on the total acid components.

[Production of blocked polyisocyanate compound (B)]

[Production Example 9]

After charging 480 parts of "SUMIDUR N-3300" (trade name of Sumika Bayer Urethane Co., Ltd., polyisocyanate containing isocyanurate structure derived from hexamethylene diisocyanate, solid content: approximately 100%, isocyanate group content: 21.8%), 150 parts of ethyl acetate and 365 parts of diisopropyl malonate into a reactor equipped with a thermometer, thermostat, stirrer, reflux condenser, nitrogen inlet tube, dropper and simple trap for the removed solvent, 4 parts of a 28% sodium methoxide methanol solution was added while stirring under a nitrogen stream and the mixture was stirred at 65°C for 8 hours. The isocyanate content in the obtained resin solution was 0.07 mol/Kg. To this there was added 870 parts of 4-methyl-2-pentanol, the solvent was distilled off over a period of 3 hours under reduced pressure conditions while maintaining a system temperature of 90°C to 95°C, and 120 parts of 4-methyl-2-pentanol was added to obtain 1400 parts of a blocked polyisocyanate compound (B-1) solution. The simple trap included 183 parts of isopropanol. The solid concentration of the obtained blocked polyisocyanate compound (B-1) solution was approximately 60%.

[Production Example 10]

After charging 450 parts of "DURANATE TPA-100" (trade name of Asahi Kasei Chemicals Corp., polyisocyanate containing isocyanurate structure derived from hexamethylene diisocyanate, solid content: approximately 100%, isocyanate group content: 23.0%), 150 parts of ethyl acetate and 310 parts of diethyl malonate into a reactor equipped with a thermometer, thermostat, stirrer, reflux condenser, nitrogen inlet tube, dropper and simple trap for the removed solvent, 4 parts of a 28% sodium methoxide methanol solution was added while stirring under a nitrogen stream and the mixture was stirred at 65°C for 8 hours. The isocyanate content in the obtained resin solution was 0.07 mol/Kg. To this there was added 870 parts of 4-methyl-2-pentanol, the solvent was distilled off over a period of 3 hours under reduced pressure conditions while maintaining a system temperature of 90°C to 95°C, and 120 parts of 4-methyl-2-pentanol was added to obtain 1350 parts of a blocked polyisocyanate compound (B-2) solution. The simple trap included 140 parts of ethanol. The solid concentration of the obtained blocked polyisocyanate compound (B-2) solution was approximately 60%.

[Production Example 11]

After charging 480 parts of "SUMIDUR N-3300", 150 parts of ethyl acetate, 330 parts of diisopropyl malonate and 27 parts of isopropyl acetoacetate into a reactor equipped with a thermometer, thermostat, stirrer, reflux condenser, nitrogen inlet tube, dropper and simple trap for the removed solvent, 4 parts of a 28% sodium methoxide methanol solution was added while stirring under a nitrogen stream and the mixture was stirred at 65°C for 8 hours. The isocyanate content in the obtained resin solution was 0.08 mol/Kg. To this there was added 870 parts of 4-methyl-2-pentanol, the solvent was distilled off over a period of 3 hours under reduced pressure conditions while maintaining a system temperature of 90°C to 95°C, and 120 parts of 4-methyl-2-pentanol was added to obtain 1390 parts of a blocked polyisocyanate compound (B-3) solution. The simple trap included 173 parts of isopropanol. The solid concentration of the obtained blocked polyisocyanate compound (B-3) solution was approximately 60%.

[Production Example 12]

After charging 480 parts of "SUMIDUR N-3300", 150 parts of ethyl acetate, 280 parts of diethyl malonate and 30 parts of ethyl isobutyrylacetate into a reactor equipped with a thermometer, thermostat, stirrer, reflux condenser, nitrogen inlet tube, dropper and simple trap for the removed solvent, 4 parts of a 28% sodium methoxide methanol solution was added while stirring under a nitrogen stream and the mixture was stirred at 65°C for 8 hours. The isocyanate content in the obtained resin solution was 0.08 mol/Kg. To this there was added 870 parts of 4-methyl-2-pentanol, the solvent was distilled off over a period of 3 hours under reduced pressure conditions while maintaining a system temperature of 90°C to 95°C, and 120 parts of 4-methyl-2-pentanol was added to obtain 1350 parts of a blocked polyisocyanate compound (B-4) solution. The simple trap included 133 parts of ethanol. The solid concentration of the obtained blocked polyisocyanate compound (B-4) solution was approximately 60%.

[Production Example 13]

After charging 480 parts of "SUMIDUR N-3300", 150 parts of ethyl acetate and 360 parts of diisopropyl malonate into a reactor equipped with a thermometer, thermostat, stirrer, reflux condenser, nitrogen inlet tube, dropper and simple trap for the removed solvent, 4 parts of a 28% sodium methoxide methanol solution was added while stirring under a nitrogen stream and the mixture was stirred at 65°C for 8 hours. The isocyanate content in the obtained resin solution was 0.07 mol/Kg. To this there was added 990 parts of 5-methyl-2-hexanol, the solvent was distilled off over a period of 3 hours under reduced pressure conditions while maintaining a system temperature of 90°C to 95°C, and 120 parts of 5-methyl-2-hexanol was added to obtain 1400 parts of a blocked polyisocyanate compound (B-5) solution. The simple trap included 180 parts of isopropanol. The solid concentration of the obtained blocked polyisocyanate compound (B-5) solution was approximately 60%.

[Production Example 14]

After charging 450 parts of "DURANATE TPA-100", 150 parts of ethyl acetate and 360 parts of diisopropyl malonate into a reactor equipped with a thermometer, thermostat, stirrer, reflux condenser, nitrogen inlet tube, dropper and simple trap for the removed solvent, 4 parts of a 28% sodium methoxide methanol solution was added while stirring under a nitrogen stream and the mixture was stirred at 65°C for 8 hours. The isocyanate content in the obtained resin solution was 0.07 mol/Kg. To this there was added 1110 parts of 6-methyl-2-heptanol, the solvent was distilled off over a period of 6 hours under reduced pressure conditions while maintaining a system temperature of 80°C to 85°C, and 120 parts of 6-methyl-2-heptanol was added to obtain 1430 parts of a blocked polyisocyanate compound (B-6) solution.

The simple trap included 170 parts of isopropanol. The solid concentration of the obtained blocked polyisocyanate compound (B-6) solution was approximately 60%.

[Production Example 15]

After charging 480 parts of "SUMIDUR N-3300", 150 parts of ethyl acetate and 310 parts of diethyl malonate into a reactor equipped with a thermometer, thermostat, stirrer, reflux condenser, nitrogen inlet tube, dropper and simple trap for the removed solvent, 4 parts of a 28% sodium methoxide methanol solution was added while stirring under a nitrogen stream and the mixture was stirred at 65°C for 8 hours. The isocyanate content in the obtained resin solution was 0.06 mol/Kg. To this there was added 630 parts of n-butanol, the solvent was distilled off over a period of 3 hours under reduced pressure conditions while maintaining a system temperature of 90°C to 95°C, and 90 parts of n-butanol was added to obtain 1270 parts of a blocked polyisocyanate compound (B-7) solution. The simple trap included 100 parts of ethanol. The solid concentration of the obtained blocked polyisocyanate compound (B-7) solution was approximately 60%.

[Production Example 16]

After charging 480 parts of "SUMIDUR N-3300", 150 parts of ethyl acetate and 310 parts of diethyl malonate into a reactor equipped with a thermometer, thermostat, stirrer, reflux condenser, nitrogen inlet tube, dropper and simple trap for the removed solvent, 4 parts of a 28% sodium methoxide methanol solution was added while stirring under a nitrogen stream and the mixture was stirred at 65°C for 8 hours. The isocyanate content in the obtained resin solution was 0.06 mol/Kg. To this there was added 630 parts of 2-butanol, the solvent was distilled off over a period of 3 hours under reduced pressure conditions while maintaining a system temperature of 90°C to 95°C, and 90 parts of 2-butanol was added to obtain 1250 parts of a blocked polyisocyanate compound (B-8) solution. The simple trap included 70 parts of ethanol. The solid concentration of the obtained blocked polyisocyanate compound (B-8) solution was approximately 60%.

[Production Example 17]

After charging 480 parts of "SUMIDUR N-3300", 150 parts of ethyl acetate and 310 parts of diethyl malonate into a reactor equipped with a thermometer, thermostat, stirrer, reflux condenser, nitrogen inlet tube, dropper and simple trap for the removed solvent, 4 parts of a 28% sodium methoxide methanol solution was added while stirring under a nitrogen stream and the mixture was stirred at 65°C for 8 hours. The isocyanate content in the obtained resin solution was 0.06 mol/Kg. To this there was added 1110 parts of 2-ethylhexanol, the solvent was distilled off over a period of 6 hours under reduced pressure conditions while maintaining a system temperature of 80°C to 85°C, and 120 parts of 2-ethylhexanol was added to obtain 1410 parts of a blocked polyisocyanate compound (B-9) solution. The simple trap included 130 parts of ethanol. The solid concentration of the obtained blocked polyisocyanate compound (B-9) solution was approximately 60%.

[Production Example 18]

After charging 480 parts of "SUMIDUR N-3300", 150 parts of ethyl acetate and 310 parts of diethyl malonate into a reactor equipped with a thermometer, thermostat, stirrer, reflux condenser, nitrogen inlet tube, dropper and simple trap for the removed solvent, 4 parts of a 28% sodium methoxide methanol solution was added while stirring under a nitrogen stream and the mixture was stirred at 65°C for 8 hours. The isocyanate content in the obtained resin solution was 0.06 mol/Kg. To this there was added 1000 parts of propyleneglycol monopropyl ether, the solvent was distilled off over a period of 3 hours under reduced pressure conditions while maintaining a system temperature of 90°C to 95°C, and 120 parts of propyleneglycol monopropyl ether was added to obtain 1380 parts of a blocked polyisocyanate compound (B-10) solution. The simple trap included 125 parts of ethanol. The solid concentration of the obtained blocked polyisocyanate compound (B-10) solution was approximately 60%.

[Production Example 19]

After charging 360 parts of "SUMIDUR N-3300", 60 parts of "UNIOX M-550" (product of NOF Corp., polyethyleneglycol monomethyl ether, average molecular weight: approximately 550) and 0.2 part of 2,6-di-tert-butyl-4-methylphenol into a reactor equipped with a thermometer, thermostat, stirrer, reflux condenser, nitrogen inlet tube, dropper and simple trap for the removed solvent, the contents were thoroughly mixed and heated at 130°C for 3 hours under a nitrogen stream. Next, 110 parts of ethyl acetate and 252 parts of diisopropyl malonate were charged in and 3 parts of

a 28% methanol solution of sodium methoxide was added while stirring under a nitrogen stream, and stirring was continued at 65°C for 8 hours. The isocyanate content in the obtained resin solution was 0.12 mol/Kg. After adding 683 parts of 4-methyl-2-pentanol, the solvent was distilled off over a period of 3 hours under reduced pressure conditions while maintaining a system temperature of 80°C to 85°C, to obtain 1010 parts of a blocked polyisocyanate compound (B-11) solution. The simple trap included 95 parts of isopropanol. The solid concentration of the obtained blocked polyisocyanate compound (B-11) solution was approximately 60%.

[Production Example 20]

After charging 360 parts of "SUMIDUR N-3300", 50 parts of "UNIOX M-400" (product of NOF Corp., polyethyleneglycol monomethyl ether, average molecular weight: approximately 400), 5 parts of "PEG#600" (product of NOF Corp., polyethylene glycol, average molecular weight: approximately 600) and 0.2 part of 2,6-di-tert-butyl-4-methylphenol into a reactor equipped with a thermometer, thermostat, stirrer, reflux condenser, nitrogen inlet tube, dropper and simple trap for the removed solvent, the contents were thoroughly mixed and heated at 130°C for 3 hours under a nitrogen stream. Next, 110 parts of ethyl acetate and 247 parts of diisopropyl malonate were charged in and 3 parts of a 28% methanol solution of sodium methoxide was added while stirring under a nitrogen stream, and stirring was continued at 65°C for 8 hours. The isocyanate content in the obtained resin solution was 0.11 mol/Kg. After adding 670 parts of 4-methyl-2-pentanol, the solvent was distilled off over a period of 3 hours under reduced pressure conditions while maintaining a system temperature of 80°C to 85°C, to obtain 1010 parts of a blocked polyisocyanate compound (B-12) solution. The simple trap included 92 parts of isopropanol. The solid concentration of the obtained blocked polyisocyanate compound (B-12) solution was approximately 60%.

[Production of pigment dispersion]

[Production Example 21]

After placing 14.3 parts of the hydroxyl-containing polyester resin ($A_2$-1) solution obtained in Production Example 8 (solid content: 10 parts), 50 parts of "JR-806" (trade name of Tayca Corp., rutile titanium dioxide) and 30 parts of deionized water in a container equipped with a stirrer, the contents were thoroughly mixed and 2-(dimethylamino)ethanol was added to the mixed solution for adjustment to pH 8.0. Next, the obtained mixed solution was placed in a wide-mouth glass bottle, glass beads with diameters of about 1.3 mmϕ were added as a dispersion medium, the bottle was sealed, and the mixture was dispersed for 4 hours with a paint shaker to obtain pigment dispersion (P-1).

[Production Example 22]

After placing 14.3 parts of the hydroxyl-containing polyester resin solution ($A_2$-1) obtained in Production Example 8 (solid content: 10 parts), 25 parts of "BARIFINE BF-1" (trade name of Sakai Chemical Industry Co., Ltd., barium sulfate powder) and 36 parts of deionized water in a container equipped with a stirrer, the contents were thoroughly mixed and 2-(dimethylamino)ethanol was added to the mixed solution for adjustment to pH 8.0. Next, the obtained mixed solution was placed in a wide-mouth glass bottle, glass beads with diameters of about 1.3 mmϕ were added as a dispersion medium, the bottle was sealed, and the mixture was dispersed for 4 hours with a paint shaker to obtain pigment dispersion (P-2).

[Production Example 23]

After placing 14.3 parts of hydroxyl-containing polyester resin solution ($A_2$-1) obtained in Production Example 8 (solid content: 10 parts), 10 parts of "MITSUBISHI CARBON BLACK MA-100" (trade name of Mitsubishi Chemical Corp., carbon black) and 50 parts of deionized water in a container equipped with a stirrer, the contents were thoroughly mixed and 2-(dimethylamino)ethanol was added to the mixed solution for adjustment to pH 8.0. Next, the obtained mixed solution was placed in a wide-mouth glass bottle, glass beads with diameters of about 1.3 mmϕ were added as a dispersion medium, the bottle was sealed, and the mixture was dispersed for 4 hours with a paint shaker to obtain pigment dispersion (P-3).

[Production of aqueous first pigmented coating composition (X)]

[Production Example 24]

After thoroughly mixing 100 parts of an aqueous dispersion of the water-dispersible hydroxyl-containing acrylic

resin ($A_1$-1) obtained in Production Example 1 (solid content: 30 parts), 22 parts of the hydroxyl-containing polyester resin ($A_2$-1) solution obtained in Production Example 8 (solid content: 15 parts), 35 parts of the blocked polyisocyanate compound (B-1) solution obtained in Production Example 9 (solid content: 21 parts), 16 parts of "SAIMEL 325" (trade name of Nihon Cytec Industries Inc., melamine resin, solid content: 80%) (solid content: 13 parts), 114 parts of pigment dispersion (P-1) obtained in Production Example 21, 60 parts of pigment dispersion (P-2) obtained in Production Example 22 and 7.5 parts of pigment dispersion (P-3) obtained in Production Example 23, "ACRYSOL ASE-60" (trade name of Rohm & Haas, polyacrylic acid-based thickening agent), 2-(dimethylamino)ethanol and deionized water were added to the mixture to obtain an aqueous pigmented coating (X-1) having pH 8.0, a solid concentration of 45%, and a viscosity of 40 seconds with a No.4 Ford cup at 20°C.

[Production Examples 25 to 44]

Aqueous first pigmented coating compositions (X-2) to (X-21) were obtained in the same manner as Production Example 24, except that the contents were changed as shown in Table 2 below.

Table 2

| Production Example | | | 24 | 25 | 26 | 27 | 28 | 29 | 30 | 31 | 32 | 33 |
|---|---|---|---|---|---|---|---|---|---|---|---|---|
| Aqueous first pigmented coating composition (X) | | | X-1 | X-2 | X-3 | X-4 | X-5 | X-6 | X-7 | X-8 | X-9 | X-10 |
| Hydroxyl-containing resin (A) | Hydroxyl-containing acrylic resin ($A_1$) | Type | $A_1$-1 | $A_1$-2 | $A_1$-3 | $A_1$-4 | $A_1$-5 | $A_1$-6 | $A_1$-7 | $A_1$-4 | $A_1$-4 | $A_1$-4 |
| | | Amount | 100 | 100 | 100 | 100 | 100 | 100 | 100 | 100 | 100 | 100 |
| | Hydroxyl-containing polyester resin ($A_2$) | Type | $A_2$-1 | $A_2$-1 | $A_2$-1 | $A_2$-1 | $A_2$-1 | $A_2$-1 | $A_2$-1 | $A_2$-1 | $A_2$-1 | $A_2$-1 |
| | | Amount | 22 | 22 | 22 | 22 | 22 | 22 | 22 | 22 | 22 | 22 |
| Block polyisocyanate compound | Type | | B-1 | B-1 | B-1 | B-1 | B-1 | B-1 | B-1 | B-2 | B-3 | B-4 |
| | Amount | | 35 | 35 | 35 | 35 | 35 | 35 | 35 | 35 | 35 | 35 |
| Melamine resin | SAIMEL 325 | | 16 | 16 | 16 | 16 | 16 | 16 | 16 | 16 | 16 | 16 |
| Pigment dispersion | P-1 | | 114 | 114 | 114 | 114 | 114 | 114 | 114 | 114 | 114 | 114 |
| | P-2 | | 60 | 60 | 60 | 60 | 60 | 60 | 60 | 60 | 60 | 60 |
| | P-3 | | 7.5 | 7.5 | 7.5 | 7.5 | 7.5 | 7.5 | 7.5 | 7.5 | 7.5 | 7.5 |

Table 2 (cont.)

| Production Example | | | 34 | 35 | 36 | 37 | 38 | 39 | 40 | 41 | 42 | 43 | 44 |
|---|---|---|---|---|---|---|---|---|---|---|---|---|---|
| Aqueous first pigmented coating composition (X) | | | X-11 | X-12 | X-13 | X-14 | X-15 | X-16 | X-17 | X-18 | X-19 | X-20 | X-21 |
| Hydroxyl-containing resin (A) | Hydroxyl-containing acrylic resin ($A_1$) | Type | $A_1$-4 | $A_1$-4 | $A_1$-4 | $A_1$-4 | $A_1$-4 | $A_1$-4 | $A_1$-4 | $A_1$-4 | $A_1$-4 | $A_1$-4 | $A_1$-4 |
| | | Amount | 100 | 100 | 100 | 100 | 100 | 100 | 100 | 100 | 100 | 100 | 100 |
| | Hydroxyl-containing polyester resin ($A_2$) | Type | $A_2$-1 | $A_2$-1 | $A_2$-1 | $A_2$-1 | $A_2$-1 | $A_2$-1 | $A_2$-1 | $A_2$-1 | $A_2$-1 | $A_2$-1 | $A_2$-1 |
| | | Amount | 22 | 22 | 22 | 22 | 22 | 22 | 22 | 22 | 22 | 22 | 22 |
| Block polyisocyanate compound | Type | | B-5 | B-6 | B-11 | B-12 | B-1/B-11 | B-1 | B-7 | B-8 | B-9 | B-10 | |
| | Amount | | 35 | 35 | 35 | 35 | 17.5/17.5 | 56 | 35 | 35 | 35 | 35 | |
| Melamine resin | SAIMEL 325 | | 16 | 16 | 16 | 16 | 16 | | 16 | 16 | 16 | 16 | 42.5 |
| Pigment dispersion | P-1 | | 114 | 114 | 114 | 114 | 114 | 114 | 114 | 114 | 114 | 114 | 114 |
| | P-2 | | 60 | 60 | 60 | 60 | 60 | 60 | 60 | 60 | 60 | 60 | 60 |
| | P-3 | | 7.5 | 7.5 | 7.5 | 7.5 | 7.5 | 7.5 | 7.5 | 7.5 | 7.5 | 7.5 | 7.5 |

[Production of water-dispersible hydroxyl-containing acrylic resin aqueous dispersions for aqueous second pigmented coating composition (Y)]

[Production Example 45]

After charging 130 parts of deionized water and 0.52 part of AQUALON KH-10 into a reactor equipped with a thermometer, thermostat, stirrer, reflux condenser, nitrogen inlet tube and dropper, the mixture was stirred in a nitrogen airflow and the temperature was increased to 80°C. Next, 1% of the total monomer emulsion (2) described below and 5.3 parts of a 6% ammonium persulfate aqueous solution were packed into the reactor, and the mixture was kept at 80°C for 15 minutes. The remainder of the monomer emulsion (2) was then added dropwise into the reactor kept at the same temperature over a period of 3 hours, and upon completion of the dropwise addition the mixture was aged for 1 hour.

Next, the monomer emulsion (3) described below was added dropwise over a period of 1 hour and aged for 1 hour, and then cooled to 30°C while gradually adding 40 parts of a 5% dimethylethanolamine aqueous solution to the reactor and discharged while filtering with a 100 mesh nylon cloth, to obtain an aqueous dispersion of a water-dispersible hydroxyl-containing acrylic resin (AC) having a mean particle size of 100 nm (measured at 20°C using a "COULTER N4" submicron particle size distribution analyzer (product of Beckman Coulter, Inc.) after dilution with deionized water)

and a solid concentration of 30%. The water-dispersible hydroxyl-containing acrylic resin (AC) had an acid value of 33 mgKOH/g and a hydroxyl value of 25 mgKOH/g.

Monomer emulsion (2):

Monomer emulsion (2) was obtained by stirred mixing of 42 parts of deionized water, 0.72 part of "AQUALON KH-10", 2.1 parts of methylenebisacrylamide, 2.8 parts of styrene, 16.1 parts of methyl methacrylate, 28 parts of ethyl acrylate and 21 parts of n-butyl acrylate.

Monomer emulsion (3):

Monomer emulsion (3) was obtained by stirred mixing of 18 parts of deionized water, 0.31 part of "AQUALON KH-10", 0.03 part of ammonium persulfate, 5.1 parts of methacrylic acid, 5.1 parts of 2-hydroxyethyl acrylate, 3 parts of styrene, 6 parts of methyl methacrylate, 1.8 parts of ethyl acrylate and 9 parts of n-butyl acrylate.

[Production of polyester resin for aqueous second pigmented coating composition (Y)]

[Production Example 46]

After charging 109 parts of trimethylolpropane, 141 parts of 1,6-hexanediol, 126 parts of hexahydrophthalic anhydride and 120 parts of adipic acid into a reactor equipped with a thermometer, thermostat, stirrer, reflux condenser and water separator, and heating between 160°C and 230°C for a period of 3 hours, condensation reaction was conducted at 230°C for 4 hours. Next, 38.3 parts of trimellitic anhydride was further added for addition of carboxyl groups to the obtained condensation reaction product, reaction was conducted at 170°C for 30 minutes, and then dilution was performed with 2-ethyl-1-hexanol to obtain a polyester resin (PE) solution with a solid concentration of 70%. The polyester resin (PE) had an acid value of 46 mgKOH/g, a hydroxyl value of 150 mgKOH/g, a solid concentration of 70% and a weight-average molecular weight of 6,400.

Production of brightness pigment dispersion for aqueous second pigmented coating composition (Y)]

[Production Example 47]

A brightness pigment dispersion (AL) was obtained by packing 19 parts of the aluminum pigment paste "GX-180A" (trade name of Asahi Kasei Metals Co., Ltd., metal content: 74%), 35 parts of 2-ethyl-1-hexanol, 8 parts of a phosphate group-containing resin solution (*1) and 0.2 part of 2-(dimethylamino)ethanol into a container equipped with a stirrer, and uniformly mixing them.

(*1) Phosphate group-containing resin solution: After placing a mixed solvent comprising 27.5 parts of methoxypropanol and 27.5 parts of isobutanol into a reactor equipped with a thermometer, thermostat, stirrer, reflux condenser, nitrogen inlet tube and dropper and heating it to 110°C, 121.5 parts of a mixture comprising 25 parts of styrene, 27.5 parts of n-butyl methacrylate, 20 parts of "Isostearyl Acrylate" (trade name of Osaka Organic Chemical Industry, Ltd., branched higher alkyl acrylate), 7.5 parts of 4-hydroxybutyl acrylate, 15 parts of a phosphate group-containing polymerizable unsaturated monomer (*2), 12.5 parts of 2-methacryloyloxyethyl acid phosphate, 10 parts of isobutanol and 4 parts of tert-butyl peroxyoctanoate was packed into the reactor over a period of 4 hours, and then a mixture of 0.5 part of tert-butyl peroxyoctanoate and 20 parts of isopropanol was added dropwise to the reactor over a period of 1 hour.

Next, the contents of the reactor were stirred for 1 hour for ageing, to obtain a phosphate group-containing resin solution with a solid concentration of 50%. The acid value due to the phosphate groups of the phosphate group-containing resin was 83 mgKOH/g, the hydroxyl value was 29 mgKOH/g and the weight-average molecular weight was 10,000.

(*2) Phosphate group-containing polymerizable unsaturated monomer: After placing 57.5 parts of monobutylphosphoric acid and 41 parts of isobutanol in a reactor equipped with a thermometer, thermostat, stirrer, reflux condenser, nitrogen inlet tube and dropper and heating them to 90°C, 42.5 parts of glycidyl methacrylate was added dropwise over a period of 2 hours, and further aged for 1 hour while stirring. Next, 59 parts of isopropanol was added to the reactor to obtain a phosphate group-containing polymerizable unsaturated monomer solution with a solid concentration of 50%. The acid value due to the phosphate groups in the obtained monomer was 285 mgKOH/g.

[Production of aqueous second pigmented coating composition (Y)]

[Production Example 48]

After packing 100 parts of an aqueous dispersion of the water-dispersible hydroxyl-containing acrylic resin (AC) obtained in Production Example 45, 57 parts of the hydroxyl-containing polyester resin (PE) solution obtained in Production Example 46, 62 parts of the brightness pigment dispersion (AL) obtained in Production Example 47 and 37.5 parts of "SAIMEL 325" into a container equipped with a stirrer, the components were uniformly mixed, and then "ACRYSOL ASE-60", 2-(dimethylamino)ethanol and deionized water were added to the container to obtain an aqueous second pigmented coating composition (Y-1) having pH 8.0, a solid concentration of 25% and a viscosity of 40 seconds with a No.4 Ford cup at 20°C.

[Production Example 49]

After packing 100 parts of an aqueous dispersion of the water-dispersible hydroxyl-containing acrylic resin (AC) obtained in Production Example 45, 21 parts of the hydroxyl-containing polyester resin (PE) solution obtained in Production Example 46, 114 parts of the pigment-dispersed paste (P-1) obtained in Production Example 21, 35 parts of 2-ethyl-1-hexanol and 37.5 parts of "SAIMEL 325" into a container equipped with a stirrer, the components were uniformly mixed, and then "ACRYSOL ASE-60", 2-(dimethylamino)ethanol and deionized water were added to the container to obtain an aqueous second pigmented coating composition (Y-2) having pH 8.0, a solid concentration of 48% and a viscosity of 60 seconds with a No.4 Ford cup at 20°C.

[Fabrication of test sheets]

The aqueous first pigmented coating compositions (X-1) to (X-21) obtained in Production Examples 24 to 44 and the aqueous second pigmented coating compositions (Y-1) and (Y-2) obtained in Production Examples 48 and 49 were used to fabricate test sheets in the following manner, and they were evaluated.

[Fabrication of test article to be coated]

A zinc phosphate-treated cold-rolled steel sheet with 300 mm length x 450 mm width x 0.8 mm thickness was electrodeposited with "ELECRON GT-10" (trade name of Kansai Paint Co., Ltd., cationic electrodeposition coating) to a cured film thickness of 20 μm, and heated at 170°C for 30 minutes for curing to produce a test article to be coated.

[Example 1]

Each test article to be coated was electrostatically coated with a freshly produced aqueous first pigmented coating composition (X-1) obtained in Production Example 24 using a rotary atomizing electrostatic coater to a cured film thickness of 20 μm, and an uncured intercoating film was formed on the test article to be coated. After standing for 3 minutes, it was preheated at 80°C for 3 minutes, and then the article to be coated with the uncured intercoating film was electrostatically coated with an aqueous second pigmented coating composition (Y-1) obtained in Production Example 48 using a rotary atomizing electrostatic coater to a cured film thickness of 15 μm, forming an uncured base coating film thereover.

After standing for 3 minutes, it was preheated at 80°C for 3 minutes, and then the article to be coated with the uncured intercoating film and the uncured base coating film was electrostatically coated with "MAGICRON KINO-1210" (trade name of Kansai Paint Co., Ltd., acrylic resin-based organic solvent-type overcoat clear coating, hereunder also referred to as "clear coating (Z-1)") to a cured film thickness of 35 μm, forming an uncured clear coating film thereover. After standing for 7 minutes, the article to be coated was heated at 140°C for 30 minutes to simultaneously bake the intercoating film, base coating film and clear coating film, producing a test sheet 1.

Also, a test sheet 2 for pinhole popping resistance testing was obtained in the same manner as the method for fabricating test sheet 1, except that the aqueous first pigmented coating composition (X-1) was coated to a cured film thickness of 35 μm, and the preheating after application of the aqueous first pigmented coating composition (X-1) was omitted.

[Examples 2 to 16 and Comparative Examples 1 to 5]

Test sheets were fabricated in the same manner as Example 1, except that the aqueous first pigmented coating composition (X-1) obtained in Production Example 24 was changed to the aqueous first pigmented coating compositions

(X-2) to (X-21) shown in Table 3 below.

[Example 17]

Each test article to be coated was electrostatically coated with a freshly produced aqueous first pigmented coating composition (X-1) obtained in Production Example 24 using a rotary atomizing electrostatic coater to a film thickness of 20 μm, and an uncured intercoating film was formed on the test article to be coated. After standing for 3 minutes, it was preheated at 80°C for 3 minutes, and then the article to be coated with the uncured intercoating film was electrostatically coated with an aqueous second pigmented coating composition (Y-2) obtained in Production Example 49 using a rotary atomizing electrostatic coater to a film thickness of 35 μm, forming an uncured top coating film thereover.

After standing for 3 minutes, it was preheated at 80°C for 3 minutes, and then the article to be coated with the uncured intercoating film and uncured top coating film was heated at 140°C for 30 minutes to simultaneously bake the intercoating film and top coating film, producing a test sheet 1.

Also, a test sheet 2 for pinhole popping resistance testing was obtained in the same manner as the method for fabricating test sheet 1, except that the aqueous first pigmented coating composition (X-1) was coated to a cured film thickness of 35 μm, and the preheating after application of the aqueous first pigmented coating composition (X-1) was omitted.

[Examples 18 to 32 and Comparative Examples 6 to 10]

Test sheets were fabricated in the same manner as Example 17, except that the aqueous first pigmented coating composition (X-1) obtained in Production Example 24 was changed to the aqueous first pigmented coating compositions (X-2) to (X-21) shown in Table 4 below.

[Evaluation]

Each of the test sheets 1 and test sheets 2 obtained in Examples 1 to 32 and Comparative Examples 1 to 10 was evaluated by the following test method. The results are shown in Table 3 and Table 4 below.

[Test methods]

Smoothness:

The test sheet 1 was evaluated based on the value of Wc measured with a "Wave Scan DOI" (trade name of BYK Gardener). A smaller value for Wc means higher smoothness of the coating surface.

Sharpness:

The test sheet 1 was evaluated based on the value of Wa measured with a "Wave Scan DOI". A smaller value for Wa means higher sharpness of the coating surface.

Water resistance:

The test sheet 1 was immersed for 240 hours in warm water at 40°C and then raised and dried at 20°C for 12 hours, after which the multilayer coating film of test sheet 1 was notched in a lattice-like manner with a cutter reaching to the basis material, to form 100 square grids with sizes of 2 mm x 2 mm. Next, adhesive cellophane tape was attached to the surface and the tape was abruptly peeled off at 20°C, after which the residual state of the square grid coating film was examined and evaluated according to the following scale.

VG: 100 of the square grid coating films remained, with no chipping of the edges of the coating films at the edges of the cutter notches.
G: 100 of the square grid coating films remained, but edges of the coating films at the edges of the cutter notches were chipped.
F: 90-99 of the square grid coating films remained.
P: 89 or fewer of the square grid coating films remained.

Pinhole popping resistance:

The test sheet 2 was examined with the naked eye and the number of popped pinholes was confirmed.

Table 3

| | | Aqueous first pigmented coating composition (X) | Aqueous second pigmented coating composition (Y) | Clear coat coating composition (Z) | Smoothness | Sharpness | Water resistance | Pinhole popping resistance (number of popped pinholes) |
|---|---|---|---|---|---|---|---|---|
| Example | 1 | X-1 | Y-1 | Z-1 | 8 | 9 | VG | 1 |
| | 2 | X-2 | Y-1 | Z-1 | 9 | 9 | VG | 3 |
| | 3 | X-3 | Y-1 | Z-1 | 9 | 9 | VG | 2 |
| | 4 | X-4 | Y-1 | Z-1 | 8 | 8 | VG | 1 |
| | 5 | X-5 | Y-1 | Z-1 | 8 | 9 | VG | 1 |
| | 6 | X-6 | Y-1 | Z-1 | 9 | 9 | VG | 3 |
| | 7 | X-7 | Y-1 | Z-1 | 9 | 9 | G | 3 |
| | 8 | X-8 | Y-1 | Z-1 | 9 | 9 | VG | 1 |
| | 9 | X-9 | Y-1 | Z-1 | 9 | 9 | VG | 1 |
| | 10 | X-10 | Y-1 | Z-1 | 8 | 9 | VG | 1 |
| | 11 | X-11 | Y-1 | Z-1 | 8 | 9 | VG | 1 |
| | 12 | X-12 | Y-1 | Z-1 | 8 | 9 | VG | 1 |
| | 13 | X-13 | Y-1 | Z-1 | 6 | 7 | VG | 0 |
| | 14 | X-14 | Y-1 | Z-1 | 7 | 7 | VG | 0 |
| | 15 | X-15 | Y-1 | Z-1 | 8 | 7 | VG | 0 |
| | 16 | X-16 | Y-1 | Z-1 | 9 | 7 | G | 1 |
| Comp. Example | 1 | X-17 | Y-1 | Z-1 | 11 | 11 | VG | 21 |
| | 2 | X-18 | Y-1 | Z-1 | 11 | 11 | VG | 18 |
| | 3 | X-19 | Y-1 | Z-1 | 10 | 10 | VG | 31 |
| | 4 | X-20 | Y-1 | Z-1 | 13 | 12 | VG | 16 |
| | 5 | X-21 | Y-1 | Z-1 | 15 | 21 | VG | 50 |

Table 4

| | | Aqueous first pigmented coating composition (X) | Aqueous second pigmented coating composition (Y) | Smoothness | Sharpness | Water resistance | Pinhole popping resistance (number of popped pinholes) |
|---|---|---|---|---|---|---|---|
| Example | 17 | X-1 | Y-2 | 6 | 10 | VG | 2 |
| | 18 | X-2 | Y-2 | 6 | 11 | VG | 3 |
| | 19 | X-3 | Y-2 | 7 | 10 | VG | 2 |
| | 20 | X-4 | Y-2 | 6 | 10 | VG | 1 |
| | 21 | X-5 | Y-2 | 6 | 11 | VG | 0 |
| | 22 | X-6 | Y-2 | 6 | 11 | VG | 3 |
| | 23 | X-7 | Y-2 | 7 | 11 | VG | 3 |
| | 24 | X-8 | Y-2 | 7 | 11 | VG | 2 |
| | 25 | X-9 | Y-2 | 7 | 11 | VG | 1 |
| | 26 | X-10 | Y-2 | 6 | 11 | VG | 1 |
| | 27 | X-11 | Y-2 | 7 | 10 | VG | 1 |
| | 28 | X-12 | Y-2 | 6 | 11 | VG | 2 |
| | 29 | X-13 | Y-2 | 5 | 8 | VG | 0 |
| | 30 | X-14 | Y-2 | 5 | 9 | VG | 0 |
| | 31 | X-15 | Y-2 | 6 | 9 | VG | 0 |
| | 32 | X-16 | Y-2 | 7 | 9 | G | 2 |
| Comp. Example | 6 | X-17 | Y-2 | 10 | 15 | VG | 19 |
| | 7 | X-18 | Y-2 | 11 | 17 | VG | 18 |
| | 8 | X-19 | Y-2 | 9 | 13 | VG | 26 |
| | 9 | X-20 | Y-2 | 11 | 17 | VG | 14 |
| | 10 | X-21 | Y-2 | 14 | 25 | VG | 38 |

## Claims

**1.** A multilayer coating film-forming method comprising the following steps (1) to (4):

step (1): coating an article to be coated with an aqueous first pigmented coating composition (X) to form an uncured first pigmented coating film on the article to be coated,
step (2): coating the article to be coated having the uncured first pigmented coating film, with an aqueous second pigmented coating composition (Y) to form an uncured second pigmented coating film thereover,
step (3): coating the article to be coated having the uncured first pigmented coating film and uncured second pigmented coating film, with a clear coating composition (Z) to form an uncured clear coating film thereover, and
step (4): heating the uncured first pigmented coating film, the uncured second pigmented coating film and the

uncured clear coating film to cure them,

wherein the aqueous first pigmented coating composition (X) comprises (A) a hydroxyl-containing resin and (B) a blocked polyisocyanate compound with at least one blocked isocyanate group selected from the group consisting of a blocked isocyanate group represented by the following formula (I):

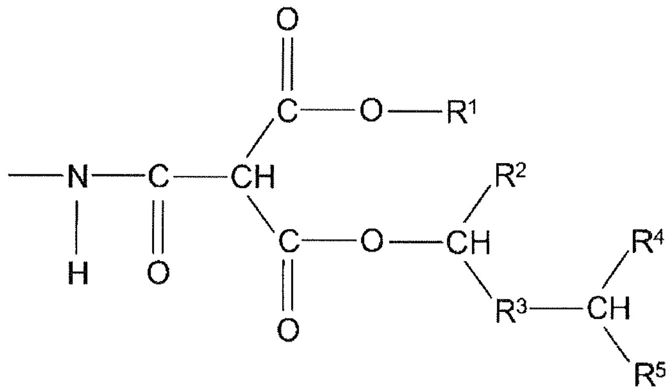

(I)

wherein $R^1$, $R^2$, $R^4$ and $R^5$ each independently represent a C1-12 hydrocarbon group and $R^3$ represents a C1-12 straight or branched alkylene group,
a blocked isocyanate group represented by the following formula (II):

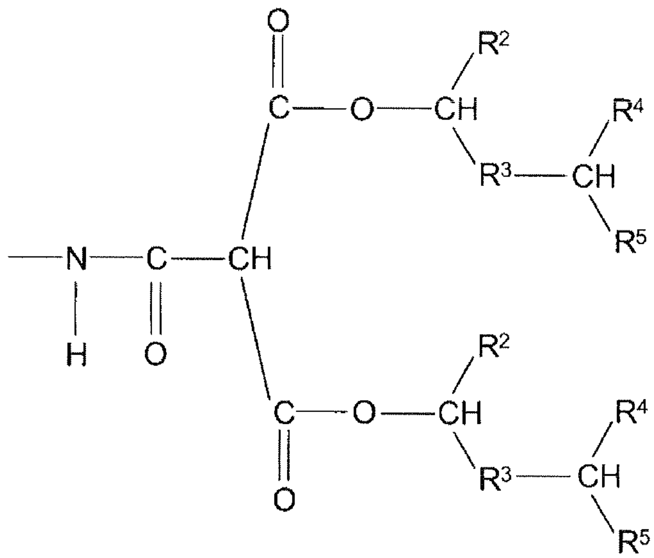

(II)

wherein $R^2$, $R^3$, $R^4$ and $R^5$ are as defined above, and
a blocked isocyanate group represented by the following formula (III):

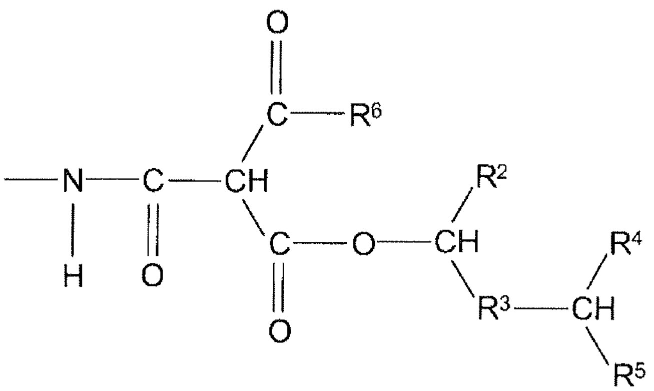

(III)

wherein $R^2$, $R^3$, $R^4$ and $R^5$ are as defined above, and $R^6$ represents a C1-12 hydrocarbon group.

**2.** A multilayer coating film-forming method comprising the following steps (1), (2) and (5):

step (1): coating an article to be coated with an aqueous first pigmented coating composition (X) to form an uncured first pigmented coating film on the article to be coated,
step (2): coating the article to be coated having the uncured first pigmented coating film, with an aqueous second pigmented coating composition (Y) to form an uncured second pigmented coating film thereover, and
step (5): heating the uncured first pigmented coating film and the uncured second pigmented coating film to cure them,

wherein the aqueous first pigmented coating composition (X) comprises (A) a hydroxyl-containing resin and (B) a blocked polyisocyanate compound with at least one blocked isocyanate group selected from the group consisting of a blocked isocyanate group represented by the following formula (I):

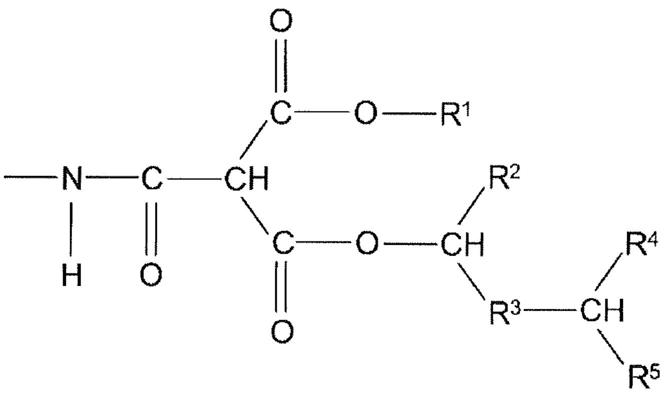

(I)

wherein $R^1$, $R^2$, $R^4$ and $R^5$ each independently represent a C1-12 hydrocarbon group and $R^3$ represents a C1-12 straight or branched alkylene group,
a blocked isocyanate group represented by the following formula (II):

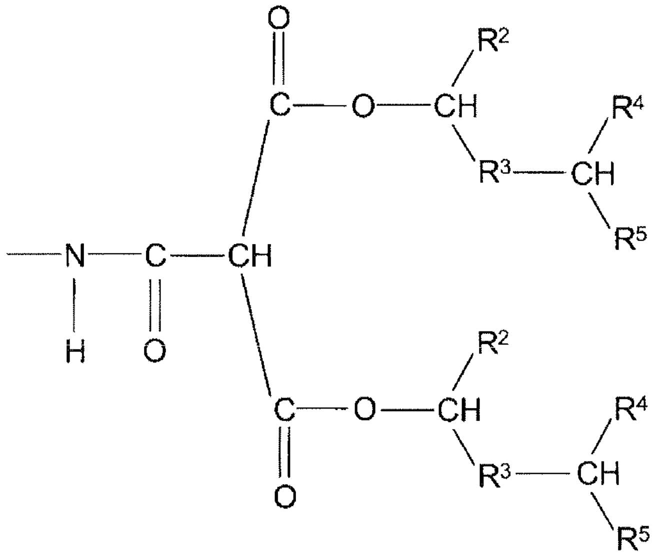

(II)

wherein $R^2$, $R^3$, $R^4$ and $R^5$ are as defined above, and
a blocked isocyanate group represented by the following formula (III):

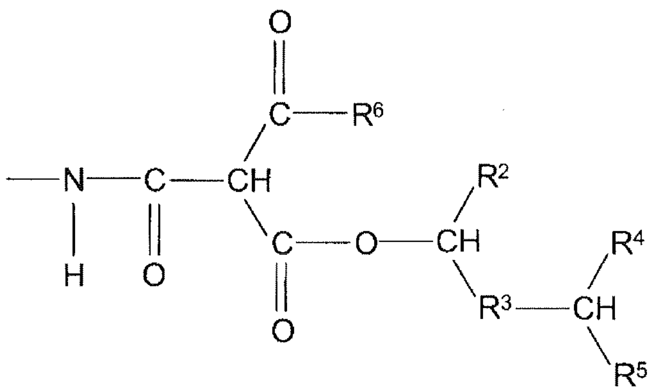

(III)

wherein $R^2$, $R^3$, $R^4$ and $R^5$ are as defined above, and $R^6$ represents a C1-12 hydrocarbon group.

**3.** The method according to claim 1 or 2, wherein the hydroxyl-containing resin (A) comprises a water-dispersible hydroxyl-containing acrylic resin ($A_{11}$) with a hydroxyl value of 1-200 mgKOH/g and an acid value of 50 mgKOH/g or less.

**4.** The method according to any one of claims 1 to 3, wherein $R^1$ in formula (I) is an isopropyl group.

**5.** The method according to any one of claims 1 to 3, wherein $R^6$ in formula (III) is an isopropyl group.

**6.** The method according to any one of claims 1 to 4, wherein the blocked polyisocyanate compound (B) is produced by reacting a blocked polyisocyanate compound precursor ($b_{31}$) having a blocked isocyanate group represented by the following formula (IV):

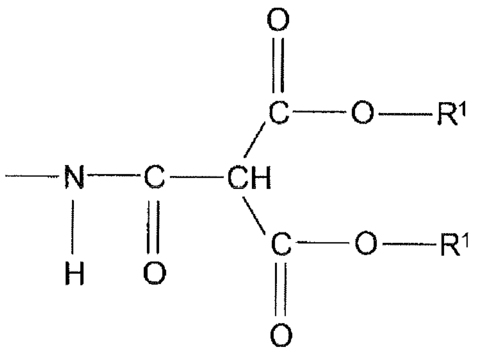

(IV)

wherein $R^1$ groups are as defined above, and may be the same or different, with a secondary alcohol ($b_4$) represented by the following formula (VI):

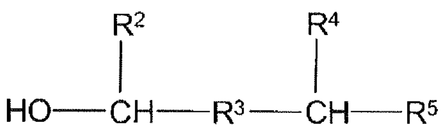

(VI)

wherein $R^2$, $R^3$, $R^4$ and $R^5$ are as defined above.

7. The method according to any one of claims 1, 2, 3 or 5, wherein the blocked polyisocyanate compound (B) is produced by reacting a blocked polyisocyanate compound precursor ($b_{32}$) having a blocked isocyanate group represented by the following formula (V):

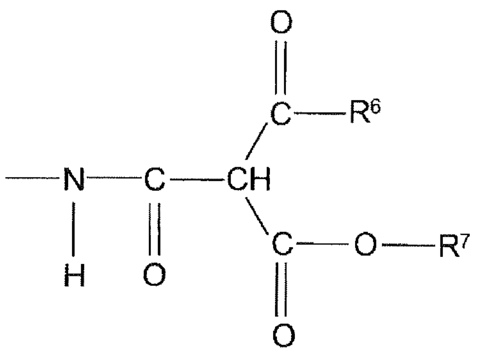

(V)

wherein $R^6$ is as defined above and $R^7$ represents a C1-12 hydrocarbon group, with a secondary alcohol ($b_4$) represented by the following formula (VI):

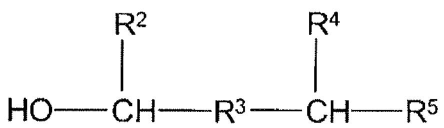

(VI)

wherein $R^2$, $R^3$, $R^4$ and $R^5$ are as defined above.

8. The method according to any one of claims 1 to 7, wherein the blocked polyisocyanate compound (B) is a blocked polyisocyanate compound (B') having a hydrophilic group.

9. The method according to any one of claims 1 to 8, wherein the aqueous first pigmented coating composition (X) comprises the hydroxyl-containing resin (A) and the blocked polyisocyanate compound (B) at 10 to 95 parts by mass and 5 to 90 parts by mass, respectively, based on 100 parts by mass as the total solid content of the hydroxyl-containing resin (A) and the blocked polyisocyanate compound (B).

**10.** A coated article having a multilayer coating film, formed by the method according to any one of claims 1 to 9.

## Patentansprüche

**1.** Ein Mehrschicht-Beschichtungs- und Filmbildungs-Verfahren, umfassend die folgenden Schritte (1) bis (4):

Schritt (1): Beschichten eines zu beschichtenden Gegenstands mit einer wässrigen ersten pigmentierten Lackzusammensetzung(X), um einen ungehärteten ersten pigmentierten Lackfilm auf dem zu beschichtenden Gegenstand zu bilden,
Schritt (2): Beschichten des zu beschichtenden Gegenstands, aufweisend den ungehärteten ersten pigmentierten Lackfilm, mit einer wässrigen zweiten pigmentierten Lackzusammensetzung(Y), um einen ungehärteten zweiten pigmentierten Lackfilm darauf zu bilden,
Schritt (3): Beschichten des zu beschichtenden Gegenstands, aufweisend den ungehärteten ersten pigmentierten Lackfilm und den ungehärteten zweiten pigmentierten Lackfilm, mit einer Klarlackzusammensetzung(Z),um einen ungehärteten Klarlackfilm darauf zu bilden und
Schritt (4): Erwärmen des ungehärteten ersten pigmentierten Lackfilms, des ungehärteten zweiten pigmentierten Lackfilms und des ungehärteten Klarlackfilms, um diese zu härten,

worin die wässrige erste pigmentierte Lackzusammensetzung (X)(A) ein Hydroxyl enthaltendes Harz und (B) eine blockierte Polyisocyanat-Verbindung mit mindestens einer blockierten Isocyanatgruppe umfasst, ausgewählt aus der Gruppe, bestehend aus einer blockierten Isocyanatgruppe, dargestellt durch die folgende Formel(I):

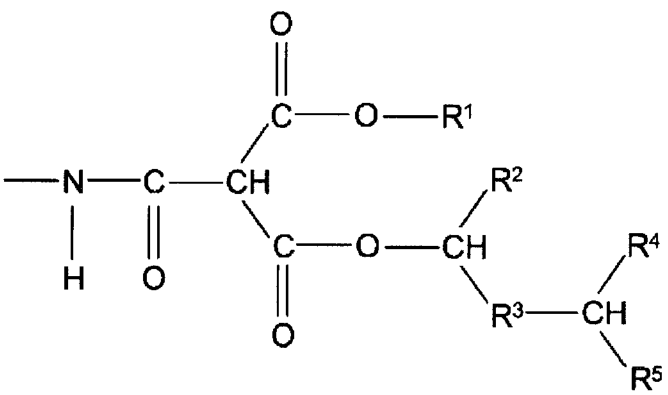

(I)

,

worin $R^1$, $R^2$, $R^4$ und $R^5$ unabhängig voneinander eine C1-12 Kohlenwasserstoffgruppe sind und $R^3$ eine lineare oder verzweigte C1-12 Alkylengruppe ist,
einer blockierten Isocyanatgruppe, dargestellt durch die folgende Formel (II):

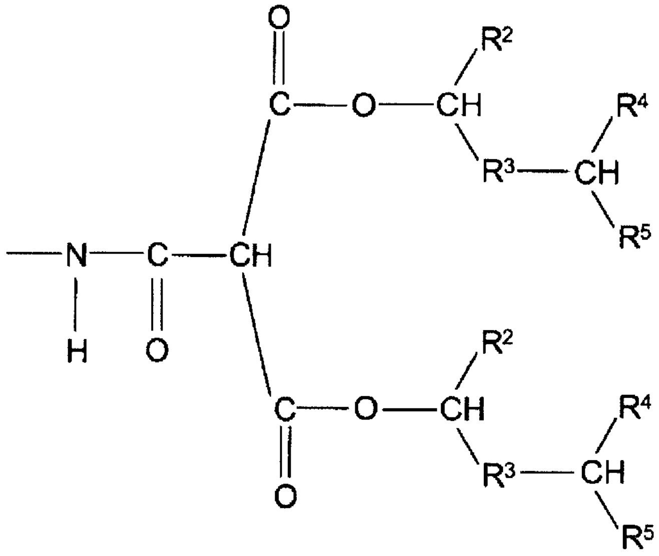

(II)

,

worin $R^2$, $R^3$, $R^4$ und $R^5$ wie zuvor definiert sind und einer blockierten Isocyanatgruppe, dargestellt durch die folgende Formel (III):

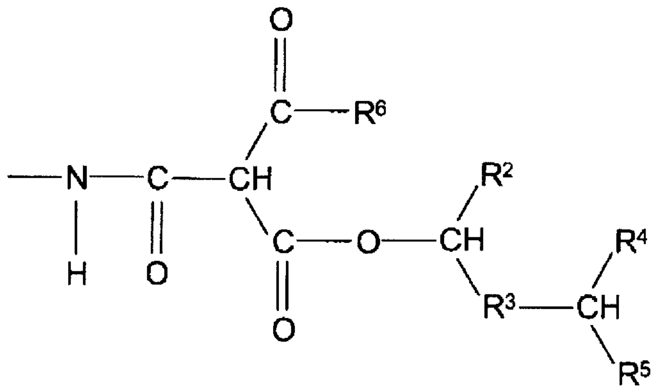

(III)

,

worin $R^2$, $R^3$, $R^4$ und $R^5$ wie zuvor definiert sind und $R^6$ eine C1-12 Kohlenwasserstoffgruppe ist.

**2.** Ein Mehrschicht-Beschichtungs- und Filmbildungs-Verfahren, umfassend die folgenden Schritte (1), (2) und (5):

Schritt (1): Beschichten eines zu beschichtenden Gegenstands mit einer wässrigen ersten pigmentierten Lackzusammensetzung(X), um einen ungehärteten ersten pigmentierten Lackfilm auf dem zu beschichtenden Gegenstand zu bilden,
Schritt (2): Beschichten des zu beschichtenden Gegenstands, aufweisend den ungehärteten ersten pigmentierten Lackfilm, mit einer wässrigen zweiten pigmentierten Lackzusammensetzung(Y), um einen ungehärteten zweiten pigmentierten Lackfilm darauf zu bilden und
Schritt (5): Erwärmen des ungehärteten ersten pigmentierten Lackfilms und des ungehärteten zweiten pigmentierten Lackfilms, um diese zu härten,

worin die wässrige erste pigmentierte Lackzusammensetzung(X) (A) ein Hydroxyl enthaltendes Harz und (B) eine blockierte Polyisocyanat-Verbindung mit mindestens einer blockierten Isocyanatgruppe umfasst, ausgewählt, aus der Gruppe, bestehend aus einer blockierten Isocyanatgruppe, dargestellt durch die folgende Formel(I):

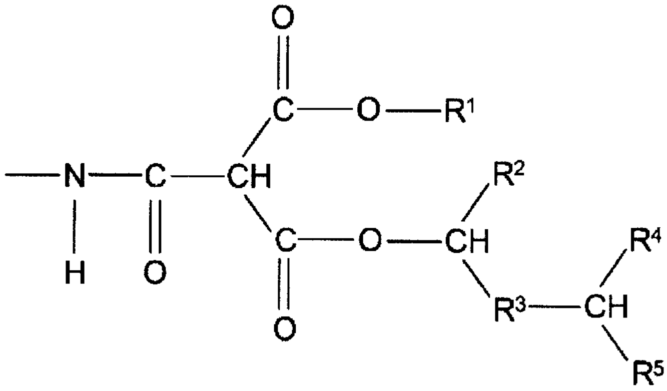

( I )

,

worin $R^1$, $R^2$, $R^9$ und $R^5$ unabhängig voneinander eine C1-12 Kohlenwasserstoffgruppe sind und $R^3$ eine lineare oder verzweigte C1-12 Alkylengruppe ist,
einer blockierten Isoycanatgruppe, dargestellt durch die folgende Formel (II):

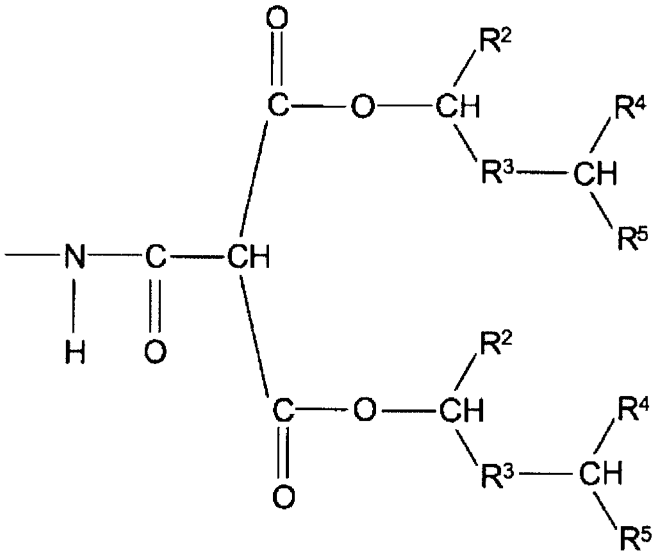

( II )

,

worin $R^2$, $R^3$, $R^4$ und $R^5$ wie zuvor definiert sind und einer blockierten Isoycanatgruppe, dargestellt durch die folgende Formel (III):

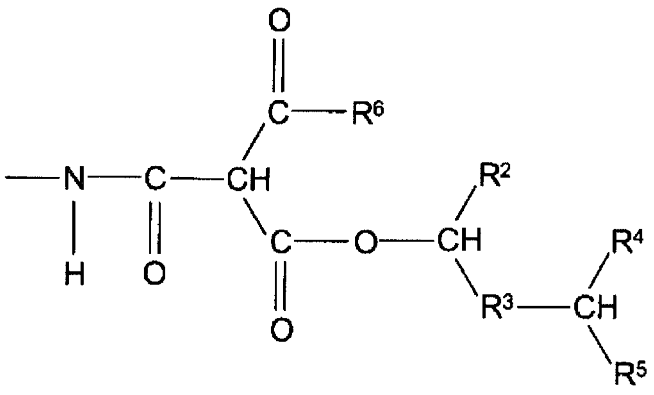

(III)

,

worin $R^2$, $R^3$, $R^4$ und $R^5$ wie zuvor definiert sind und $R^6$ eine C1-12 Kohlenwasserstoffgruppe ist.

**3.** Das Verfahren nach Anspruch 1 oder 2, worin das Hydroxyl enthaltende Harz (A) ein wasserdispergierbares Hydroxyl enthaltendes Acrylharz ($A_{11}$) mit einer Hydroxylzahl von 1-200 mgKOH/g und einer Säurezahl von 50 mgKOH/g oder weniger umfasst.

**4.** Das Verfahren nach einem der Ansprüche 1 bis 3, worin $R^1$ in Formel (I) eine Isopropylgruppe ist.

**5.** Das Verfahren nach einem der Ansprüche 1 bis 3, worin $R^6$ in Formel (III) eine Isopropylgruppe ist.

**6.** Das Verfahren nach einem der Ansprüche 1 bis 4, worin die blockierte Polyisocyanat-Verbindung (B) hergestellt wird durch Reaktion eines blockierten Polyisocyanat-Verbindungs-Precursors ($b_{31}$), aufweisend eine blockierte Isocyanatgruppe, dargestellt durch die folgende Formel (IV):

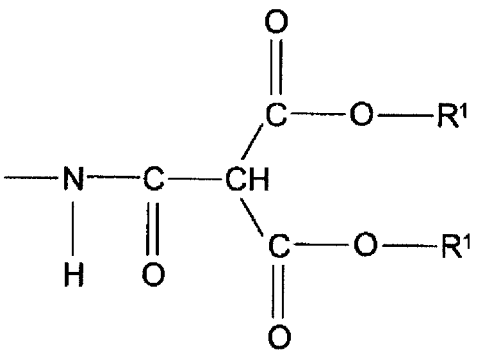

(IV)

,

worin die $R^1$ Gruppen wie zuvor definiert ist und gleich oder verschieden sein können,
mit einem sekundären Alkohol ($b_4$), dargestellt durch die folgende Formel (VI):

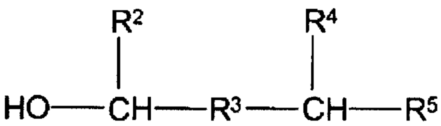

(VI)

,

worin $R^2$, $R^3$, $R^4$ und $R^5$ wie zuvor defniert sind.

7. Das Verfahren nach einem der Ansprüche 1, 2, 3 oder 5, worin die blockierte Polyisocyanat Verbindung (B) hergestellt wird durch Reaktion eines blockierten Polyisocyanat-Verbindungs-Precursors ($b_{32}$), aufweisend eine blockierte Isocyanatgruppe, dargestellt durch die folgende Formel (V):

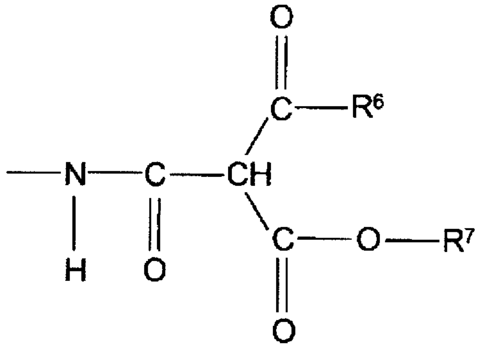

(V)

,

worin $R^6$ wie zuvor definiert ist und $R^7$ eine C1-12 Kohlenwasserstoffgruppe ist, mit einem sekundären Alkohol ($b_4$), dargestellt durch die folgende Formel(VI):

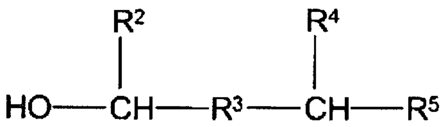

(VI)

,

worin $R^2$, $R^3$, $R^4$ und $R^5$ wie zuvor definiert sind.

8. Das Verfahren nach einem der Ansprüche 1 bis 7, worin die blockierte Polyisoycanat-Verbindung (B) eine blockierte Polyisocyanat-Verbindung (B'), aufweisend eine hydrophile Gruppe, ist.

9. Das Verfahren nach einem der Ansprüche 1 bis 8, worin die wässrige este pigmentierte Lackzusammensetzung (X) das Hydroxyl-enthaltende Harz (A) und die blockierte Polyisocyanat-Verbindung (B) zu jeweils 10 bis 95 Masseteilen und 5 bis 90 Masseteilen, bezogen auf 100 Masseteile als Gesamtfeststoffgehalt des Hydroxylenthaltenden Harzes (A) und der blockierten Polyisocyanat-Verbindung (B), umfasst.

10. Ein beschichteter Gegenstand, aufweisend einen Mehrschichtlackfilm, erhältlich durch das Verfahren nach einem der Ansprüche 1 bis 9.

## Revendications

1. Procédé de formation d'un film de revêtement à plusieurs couches comprenant les étapes (1) à (4) suivantes :

étape (1) : revêtement d'un article à revêtir à l'aide d'une première composition aqueuse de revêtement pigmentée (X) pour former un premier film de revêtement pigmenté non durci sur l'article à revêtir,
étape (2) : revêtement de l'article à revêtir comportant le premier film de revêtement pigmenté non durci, à l'aide d'une deuxième composition aqueuse de revêtement pigmentée (Y) pour former un deuxième film de revêtement pigmenté non durci au-dessus,
étape (3) : revêtement de l'article à revêtir comportant le premier film de revêtement pigmenté non durci et le deuxième film de revêtement pigmenté non durci, à l'aide d'une composition de revêtement transparente (Z) pour former un film de revêtement transparent non durci au-dessus, et
étape (4) : chauffage du premier film de revêtement pigmenté non durci, du deuxième film de revêtement pigmenté non durci et du film de revêtement transparent non durci pour les durcir,

dans lequel la première composition aqueuse de revêtement pigmentée (X) comprend (A) une résine contenant des groupes hydroxyles et (B) un composé de polyisocyanate bloqué comportant au moins un groupe isocyanate bloqué choisi dans le groupe constitué d'un groupe isocyanate bloqué représenté par la formule (I) suivante :

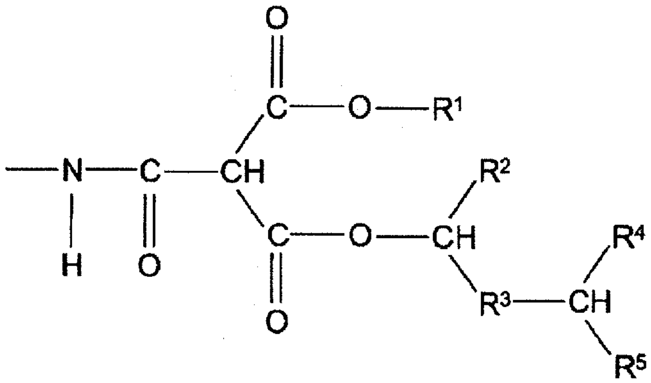

(I)

dans laquelle $R^1$, $R^2$, $R^4$ et $R^5$ représentent chacun indépendamment un groupe hydrocarbure en C1 à C12 et $R^3$ représente un groupe alkylène en C1 à C12, linéaire ou ramifié,
d'un groupe isocyanate bloqué représenté par la formule (II) suivante :

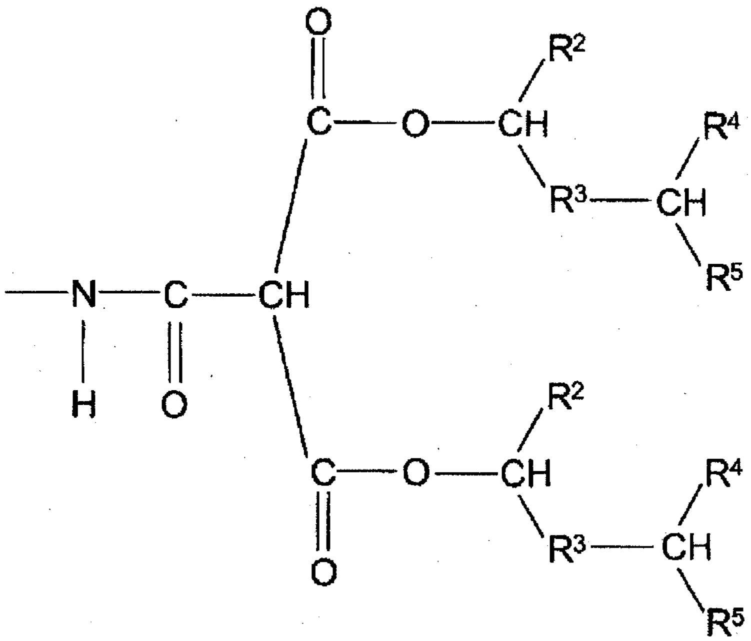

(II)

dans laquelle $R^2$, $R^3$, $R^4$ et $R^5$ sont tels que définis ci-dessus, et
d'un groupe isocyanate bloqué représenté par la formule (III) suivante :

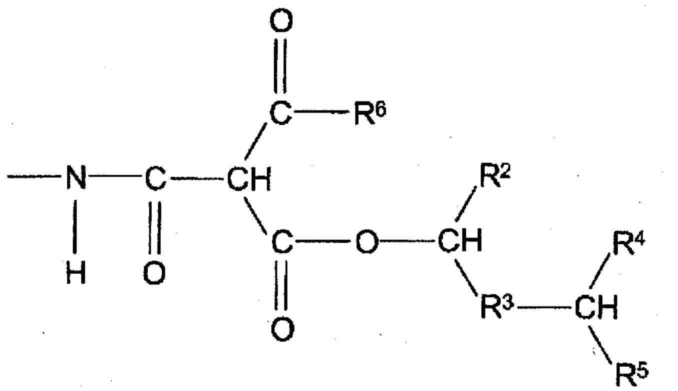

(III)

dans laquelle $R^2$, $R^3$, $R^4$ et $R^5$ sont tels que définis ci-dessus, et $R^6$ représente un groupe hydrocarbure en C1 à C12.

**2.** Procédé de formation d'un film de revêtement à plusieurs couches comprenant les étapes (1), (2) et (5) suivantes :

étape (1) : revêtement d'un article à revêtir à l'aide d'une première composition aqueuse de revêtement pigmentée (X) pour former un premier film de revêtement pigmenté non durci sur l'article à revêtir,
étape (2) : revêtement de l'article à revêtir comportant le premier film de revêtement pigmenté non durci, à l'aide d'une deuxième composition aqueuse de revêtement pigmentée (Y) pour former un deuxième film de revêtement pigmenté non durci au-dessus, et
étape (5) : chauffage du premier film de revêtement pigmenté non durci et du deuxième film de revêtement pigmenté non durci pour les durcir,

dans lequel la première composition aqueuse de revêtement pigmentée (X) comprend (A) une résine contenant des groupes hydroxyles et (B) un composé de polyisocyanate bloqué comportant au moins un groupe isocyanate bloqué choisi dans le groupe constitué d'un groupe isocyanate bloqué représenté par la formule (I) suivante :

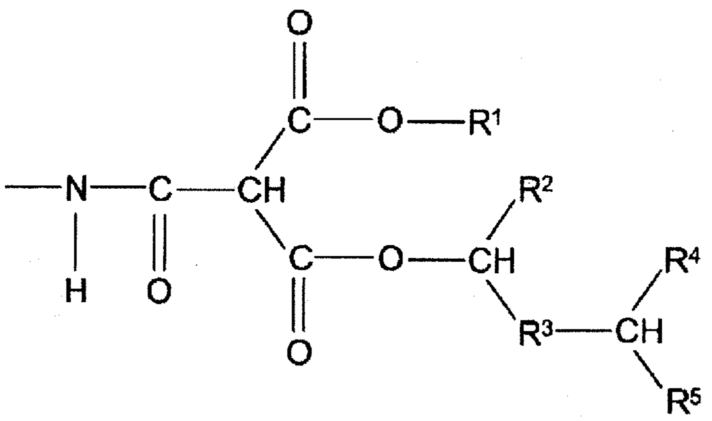

(I)

dans laquelle $R^1$, $R^2$, $R^4$ et $R^5$ représentent chacun indépendamment un groupe hydrocarbure en C1 à C12 et $R^3$ représente un groupe alkylène en C1 à C12, linéaire ou ramifié,
d'un groupe isocyanate bloqué représenté par la formule (II) suivante :

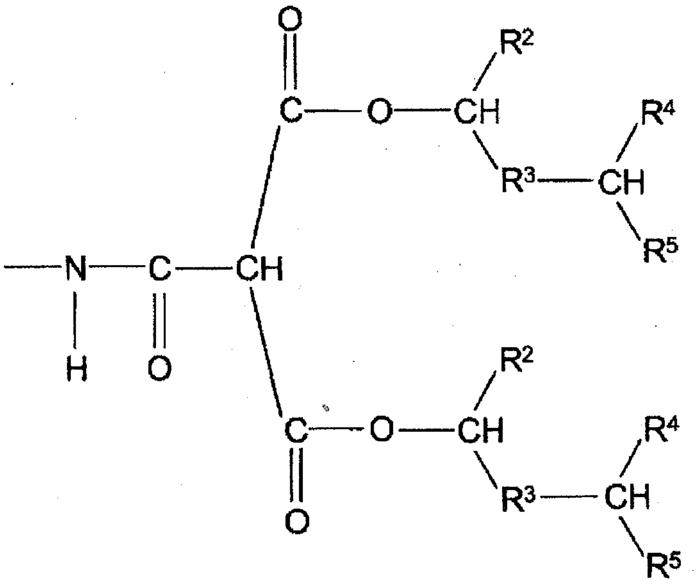

(II)

dans laquelle $R^2$, $R^3$, $R^4$ et $R^5$ sont tels que définis ci-dessus, et d'un groupe isocyanate bloqué représenté par la formule (III) suivante :

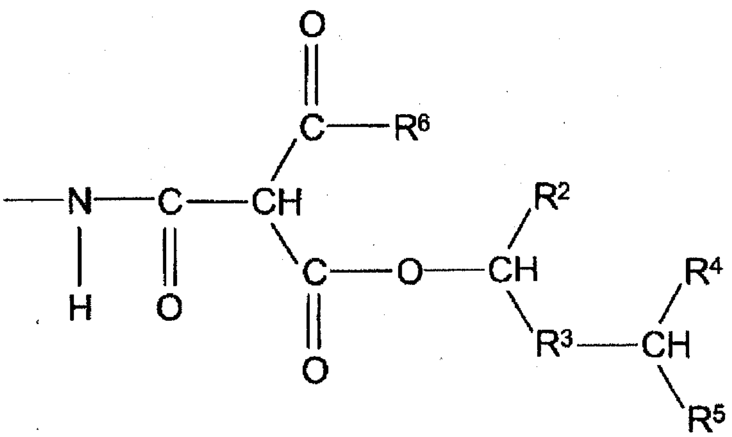

(III)

dans laquelle $R^2$, $R^3$, $R^4$ et $R^5$ sont tels que définis ci-dessus, et $R^6$ représente un groupe hydrocarbure en C1 à C12.

**3.** Procédé selon la revendication 1 ou 2, dans lequel la résine contenant des groupes hydroxyles (A) comprend une résine acrylique contenant des groupes hydroxyles, dispersible dans l'eau ($A_{11}$), ayant un indice d'hydroxyle de 1 à 200 mgKOH/g et un indice d'acide de 50 mgKOH/g ou moins.

**4.** Procédé selon l'une quelconque des revendications 1 à 3, dans lequel $R^1$ dans la formule (I) est un groupe isopropyle.

**5.** Procédé selon l'une quelconque des revendications 1 à 3, dans lequel $R^6$ dans la formule (III) est un groupe isopropyle.

**6.** Procédé selon l'une quelconque des revendications 1 à 4, dans lequel le composé de polyisocyanate bloqué (B) est produit en faisant réagir un précurseur de composé de polyisocyanate bloqué ($b_{31}$) comportant un groupe isocyanate bloqué représenté par la formule (IV) suivante :

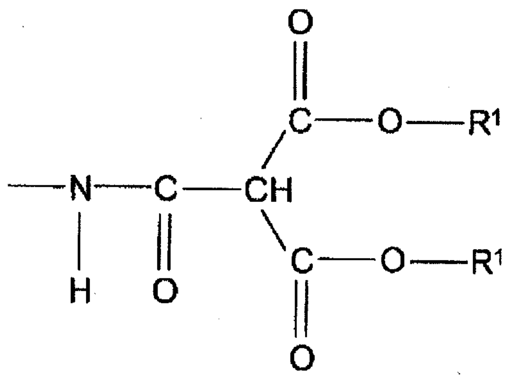

(IV)

dans laquelle les groupes $R^1$ sont tels que définis ci-dessus, et peuvent être identiques ou différents, avec un alcool secondaire ($b_4$) représenté par la formule (VI) suivante :

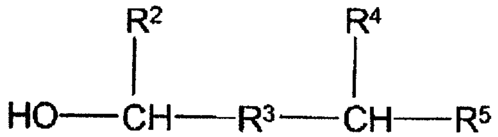

(VI)

dans laquelle $R^2$, $R^3$, $R^4$ et $R^5$ sont tels que définis ci-dessus

**7.** Procédé selon l'une quelconque des revendications 1, 2, 3 ou 5, dans lequel le composé de polyisocyanate bloqué (B) est produit en faisant réagir un précurseur de composé de polyisocyanate bloqué ($b_{32}$) comportant un groupe isocyanate bloqué représenté par la formule (V) suivante :

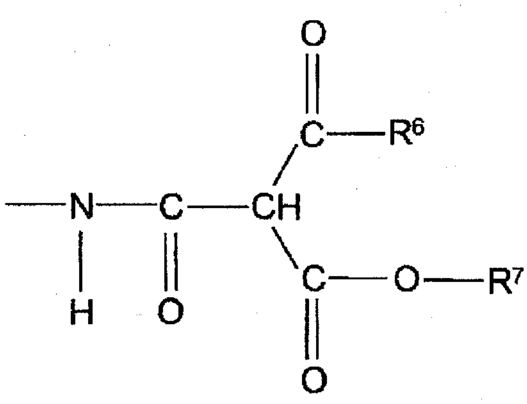

(V)

dans laquelle $R^6$ est tel que défini ci-dessus et $R^7$ représente un groupe hydrocarbure en C1 à C12, avec un alcool secondaire ($b_4$) représenté par la formule (VI) suivante :

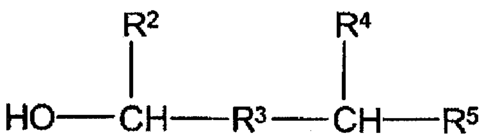

(VI)

dans laquelle $R^2$, $R^3$, $R^4$ et $R^5$ sont tels que définis ci-dessus.

**8.** Procédé selon l'une quelconque des revendications 1 à 7, dans lequel le composé de polyisocyanate bloqué (B) est un composé dé polyisocyanate bloqué (B') comportant un groupe hydrophile.

**9.** Procédé selon l'une quelconque des revendications 1 à 8, dans lequel la première composition aqueuse de revêtement pigmentée (X) comprend la résine contenant des groupes hydroxyles (A) et le composé de polyisocyanate bloqué (B) à raison de 10 à 95 parties en masse et de 5 à 90 parties en masse, respectivement, sur la base de 100 parties en masse représentant la teneur totale en matières solides de la résine contenant des groupes hydroxyles (A) et du composé de polyisocyanate bloqué (B).

**10.** Article revêtu comportant un film de revêtement à plusieurs couches, formé par le procédé selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010018872 A
- JP 2002153806 A